# EUROPEAN PATENT SPECIFICATION

(11) **EP 3 865 032 B1**
(45) Date of publication and mention of the grant of the patent: **29.03.2023**
(21) Application number: 19872123.5
(22) Date of filing: 27.09.2019
(51) Int. Cl.: A47J 43/04, B25J 19/06, F16P 1/02, F16P 3/00, F16P 3/14, G06N 20/00

(54) **FOOD PREPARATION SYSTEM, METHOD FOR CONTROLLING FOOD PREPARATION SYSTEM, AND PROGRAM**
LEBENSMITTELZUBEREITUNGSSYSTEM, VERFAHREN ZUR STEUERUNG DES LEBENSMITTELZUBEREITUNGSSYSTEMS UND PROGRAMM
SYSTÈME DE PRÉPARATION D'ALIMENTS, PROCÉDÉ DE COMMANDE D'UN SYSTÈME DE PRÉPARATION D'ALIMENTS ET PROGRAMME

(30) Priority: 12.10.2018 JP 2018193153
(43) Date of publication of application: 18.08.2021
(73) Proprietor: Sony Group Corporation, Tokyo 108-0075 (JP)
(72) Inventor: WATANABE, Kanako, Tokyo 108-0075 (JP); SUZUKI, Hirotaka, Tokyo 108-0075 (JP); OCHIAI, Kazuki, Tokyo 108-0075 (JP); OGAWA, Hiroaki, Tokyo 108-0075 (JP); YAMAMOTO, Shohei, Tokyo 108-0075 (JP); CINCAREK, Tobias, Tokyo 108-0075 (JP); TOTSUKA, Noriko, Tokyo 108-0075 (JP)
(74) Representative: D Young & Co LLP
(86) International application number: PCT/JP2019/038089
(87) International publication number: WO 2020/075526

(56) References cited:
- WO-A1-2009/071567
- WO-A1-2018/165105
- WO-A2-2015/125017
- JP-A- 2000 202 790
- JP-A- 2001 048 317
- JP-A- 2005 242 495
- JP-A- 2008 296 308
- JP-A- 2010 120 139
- JP-A- 2012 236 244
- JP-A- 2014 008 562
- JP-A- 2014 148 027
- US-A1- 2005 193 901
- US-A1- 2012 290 132

## Description

### Technical Field

The present technology relates to a cooking system, a method for controlling a cooking system, and a program and in particular to a cooking system, a method for controlling a cooking system, and a program that enable a user to enjoy the pleasure and happiness of cooking by safely providing novel cooking experiences.

### Background Art

With the development of artificial intelligence (AI), sensing technologies, and the like, a so-called smart kitchen, in which technologies are applied to cooking in a kitchen, is attracting attention. As the technologies related to the smart kitchen, many technologies have been proposed for achieving simple, convenient, and speedy cooking.

As one of such a technology, there is, for example, a technology for automating cooking by learning chef's hand movements at the time of cooking and imitating the chef's movements with robot arms.

However, even if the cooking is automated by applying the technology, there is a scene where it is necessary for a chef or user to intervene in the task, for example, when having a taste, adjusting the taste, cutting a food ingredient into a desired shape, or enjoying dish presentation.

However, when the user tries to intervene in the cooking in a situation where the robot arm is operating, the user may touch the robot arm, which may cause an accident.

In view of this, a technology in which the position of a person is detected from an image, the contact is predicted, and the contact is prevented by controlling a robot has been proposed (see Patent Literature 1).

US 2012/0290132 A1 describes a robot device including a drive unit including a plurality of links and joints connecting the links, a task instruction input unit for inputting an instruction of a task, a drive control unit for controlling an operation of the drive unit on the basis of the input task and determining a restricted area including a space necessary for the operation of the drive unit, and an area display unit for displaying the restricted area.

WO 2015/125017 A2 describes methods, computer program products, and computer systems for instructing a robot to prepare a food dish by replacing the human chefs movements and actions. Monitoring a human chef is carried out in an instrumented application-specific setting, a standardized robotic kitchen in this instance, and involves using sensors and computers to watch, monitor, record and interpret the motions and actions of the human chef, in order to develop a robot-executable set of commands robust to variations and changes in the environment, capable of allowing a robotic or automated system in a robotic kitchen to prepare the same dish to the standards and quality as the dish prepared by the human chef.

### Citation List

### Patent Literature

Patent Literature 1: Japanese Patent Application Laid-open No. 2016-209991

### Disclosure of Invention

### Technical Problem

It should be noted that it is desirable to provide one that not only makes cooking simple, convenient, and speedy by automating the cooking in accordance with the above-mentioned technology, but also allows the user to intervene in the cooking to enjoy the pleasure and happiness of the cooking through a novel user experience at the time of cooking.

However, in the technology of Patent Literature 1, the user cannot consciously avoid the contact with the robot arm because a mechanism that enables the user to predict movements of the robot arm is not provided.

Therefore, the contact with the robot arm cannot necessarily be avoided if the user carelessly moves even when the robot arm is controlled to avoid the contact with the user.

As a result, even if the technology of Patent Literature 1 is applied to a smart kitchen, the user cannot be provided with a cooking experience in a state in which the safety is secured. Therefore, the user cannot intervene in the cooking with an easy mind and may not be able to fully enjoy the pleasure and happiness of the cooking through a new cooking experience.

The present technology has been made in view of the above-mentioned circumferences for making it possible to cause a user to enjoy the pleasure and happiness of cooking by providing novel cooking experiences safely.

### Solution to Problem

The invention is defined by the claims.

### Brief Description of Drawings

[Fig. 1] A perspective view showing a configuration example of the outer appearance of a robotic kitchen according to an embodiment of the present technology.
[Fig. 2] A diagram showing a state of cooking arms performing a task.
[Fig. 3] A diagram showing a first example of a collaborative task.
[Fig. 4] A diagram showing a second example of the collaborative task.
[Fig. 5] A diagram showing a third example of the collaborative task.
[Fig. 6] A diagram showing the outer appearance of the robotic kitchen on a sleep mode.
[Fig. 7] A diagram showing the outer appearance of the robotic kitchen on the sleep mode.
[Fig. 8] A diagram showing the outer appearance of the robotic kitchen on an active mode.
[Fig. 9] A front view of a cooking assistance system.
[Fig. 10] A diagram showing a state in which the cooking arms appear.
[Fig. 11] A diagram showing the outer appearance of the cooking arm.
[Fig. 12] A diagram showing an example of a range of motion of each portion of the cooking arm.
[Fig. 13] A cross-sectional view showing the vicinity of a rail in an enlarged state.
[Fig. 14] A diagram showing a movement direction of an arm movement unit.
[Fig. 15] A diagram showing a state in which the cooking arm is attached and detached.
[Fig. 16] A diagram showing a function example of the cooking arm.
[Fig. 17] A diagram showing an example of an attaching/detaching mechanism of an attachment.
[Fig. 18] A cross-sectional view of an attaching/detaching portion of the cooking arm and the attachment.
[Fig. 19] A diagram showing a flow of attaching the attachment.
[Fig. 20] A diagram showing a flow of attaching the attachment.
[Fig. 21] A diagram showing examples of attachments.
[Fig. 22] A diagram showing examples of attachments.
[Fig. 23] A diagram showing examples of attachments.
[Fig. 24] A diagram showing examples of attachments.
[Fig. 25] A diagram showing a configuration example of the manipulator attachment.
[Fig. 26] A diagram showing an example of movement of a gripping portion.
[Fig. 27] A diagram showing a state in which a food ingredient is gripped.
[Fig. 28] A diagram showing the state in which the food ingredient is gripped.
[Fig. 29] A diagram showing a cleaner attachment in an enlarged state.
[Fig. 30] A diagram showing another application example of the cleaner attachment.
[Fig. 31] A diagram showing an application example of a cover attachment.
[Fig. 32] A front view showing another example of the outer appearance of the robotic kitchen.
[Fig. 33] A side view showing the other example of the outer appearance of the robotic kitchen.
[Fig. 34] A top view of the robotic kitchen.
[Fig. 35] A diagram showing an example of movement of the top plate.
[Fig. 36] A diagram showing a state of the cooking arms during operation.
[Fig. 37] A diagram showing the position of the cooking space.
[Fig. 38] A diagram showing an arrangement example of cooking assistance units.
[Fig. 39] A perspective view showing an example of the inner circumferential side surface of the housing.
[Fig. 40] A diagram showing an arrangement example of the groove portion.
[Fig. 41] A diagram showing a cross-section of the housing.
[Fig. 42] A diagram showing a state in which waste is treated.
[Fig. 43] A block diagram showing a configuration example of hardware of the robotic kitchen.

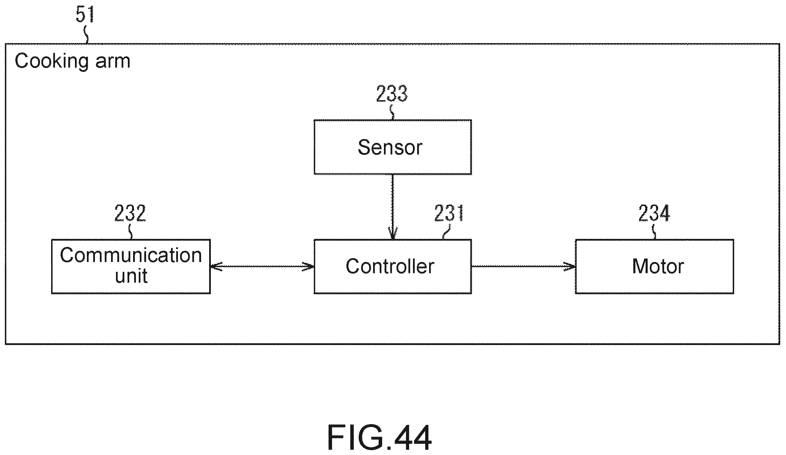

[Fig. 44] A block diagram showing a configuration example of hardware of the cooking arm.
[Fig. 45] A block diagram showing a functional configuration example of a controller.
[Fig. 46] A diagram showing an example of recipe data.
[Fig. 47] A diagram showing an acquisition example of the recipe data.
[Fig. 48] A diagram showing an example of the description of the recipe data.
[Fig. 49] A diagram showing a specific example of the description of the recipe data.
[Fig. 50] A diagram showing examples of conditions under which the description contents of the recipe data are determined.
[Fig. 51] A diagram showing an example of processing the recipe data.
[Fig. 52] A diagram showing another example of processing the recipe data.
[Fig. 53] A diagram showing an indication example of a secured area and a dangerous area projected on the top plate of the robotic kitchen of Fig. 1 (Part 1-1).
[Fig. 54] A diagram showing the indication example of the secured area and the dangerous area projected on the top plate of the robotic kitchen of Fig. 1 (Part 1-1) .
[Fig. 55] A diagram showing an indication example of the secured area and the dangerous area projected on the cooking assistance unit of Fig. 1 (Part 1-2).
[Fig. 56] A diagram showing the indication example of the secured area and the dangerous area projected on the cooking assistance unit of Fig. 1 (Part 1-2).
[Fig. 57] A diagram showing an indication example of a secured area and a dangerous area projected on the top plate of the robotic kitchen of Fig. 32 (Part 1-3).
[Fig. 58] A diagram showing the indication example of the secured area and the dangerous area projected on the top plate of the robotic kitchen of Fig. 32 (Part 1-3).
[Fig. 59] A diagram showing an application example of the indication of the secured area and the dangerous area.
[Fig. 60] A flowchart describing recipe data acquisition processing of the robotic kitchen.
[Fig. 61] A flowchart describing cooking processing of the robotic kitchen (Part 1).
[Fig. 62] A diagram showing an indication example of the secured area and the dangerous area projected on the top plate of the robotic kitchen of Fig. 1 (Part 2-1) .
[Fig. 63] A diagram showing an indication example of the secured area and the dangerous area projected on the cooking assistance unit of Fig. 1 (Part 2-2).
[Fig. 64] A diagram showing an indication example of the secured area and the dangerous area projected on the top plate of the robotic kitchen of Fig. 32 (Part 2-3).
[Fig. 65] A flowchart describing cooking processing of the robotic kitchen (Part 2).
[Fig. 66] A diagram showing an indication example of the secured area and the dangerous area projected on the top plate of the robotic kitchen of Fig. 1 (Part 3-1) .
[Fig. 67] A diagram showing an indication example of the secured area and the dangerous area projected on the cooking assistance unit of Fig. 1 (Part 3-2).
[Fig. 68] A diagram showing an indication example of the secured area and the dangerous area projected on the top plate of the robotic kitchen of Fig. 32 (Part 3-3).
[Fig. 69] A flowchart describing cooking processing of the robotic kitchen (Part 3).
[Fig. 70] A diagram showing an indication example of the secured area and the dangerous area projected on the top plate of the robotic kitchen of Fig. 1 (Part 4-1) .
[Fig. 71] A diagram showing an indication example of the secured area and the dangerous area projected on the top plate of the robotic kitchen of Fig. 32 (Part 4-2).
[Fig. 72] A flowchart describing cooking processing of the robotic kitchen (Part 4).
[Fig. 73] A diagram showing an indication example of the secured area and the dangerous area projected on the top plate of the robotic kitchen of Fig. 1 (Part 5-1).
[Fig. 74] A diagram showing an indication example of the secured area and the dangerous area projected on the cooking assistance unit of Fig. 1 (Part 5-2).
[Fig. 75] A diagram showing an indication example of the secured area and the dangerous area projected on the top plate of the robotic kitchen of Fig. 32 (Part 5-3) .
[Fig. 76] A flowchart describing cooking processing of the robotic kitchen (Part 5).
[Fig. 77] A diagram showing another application example of the indication of the secured area and the dangerous area.
[Fig. 78] An external perspective view describing an IoT kitchen knife.
[Fig. 79] A hardware configuration diagram describing a configuration example of the IoT kitchen knife.
[Fig. 80] A flowchart describing cooking processing of the robotic kitchen (Part 6).
[Fig. 81] A diagram showing a configuration example of a control system.
[Fig. 82] A block diagram showing a configuration example of hardware of a computer.

### Mode(s) for Carrying Out the Invention

Hereinafter, an embodiment for carrying out the present technology will be described. The descriptions will be given in the following order.
1. General Configuration and Functions of Robotic Kitchen
2. Details of Configuration of Robotic Kitchen
3. Another Configuration Example of Robotic Kitchen
4. Operation of Robotic kitchen

### <<1. General Configuration and Functions of Robotic Kitchen>>

### <Outer Appearance Configuration>

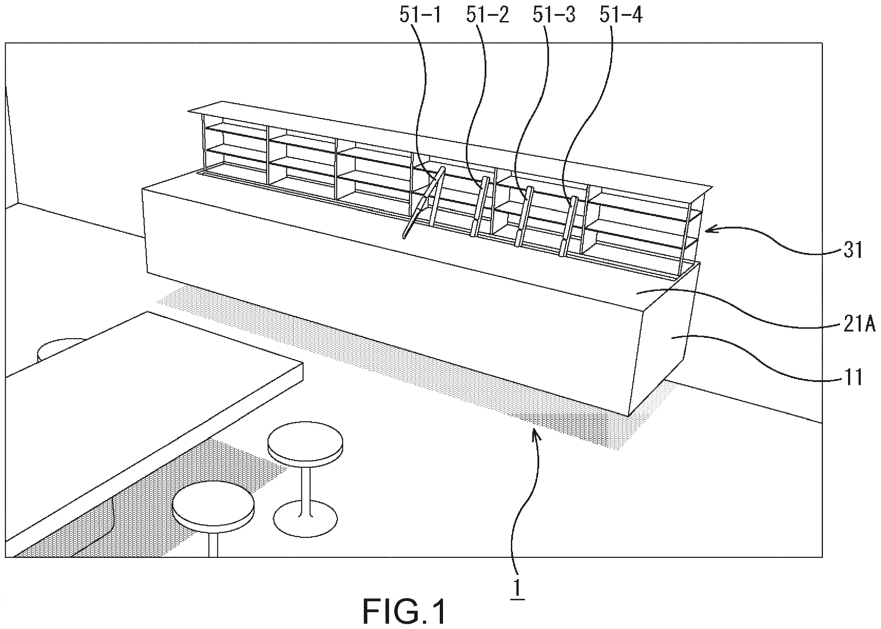

Fig. 1 is a perspective view showing a configuration example of the outer appearance of a robotic kitchen 1 according to an embodiment of the present technology.

The robotic kitchen 1 is a cooking system including a computer that controls general operations using artificial intelligence (AI) and the like, a device of a drive system such as a cooking arm, and various sensors and having robotic functions to autonomously perform cooking. The robotic kitchen 1 is installed in a house, for example.

As shown in Fig. 1, the robotic kitchen 1 includes a housing 11 in a horizontally long rectangular parallelepiped shape. Various devices such as a computer are provided inside the housing 11 as the main body of the robotic kitchen 1.

On the rear side of the housing 11, a cooking assistance system 31 is provided, erected from the upper surface of the housing 11. The cooking assistance system 31 is configured such that various cooking assistance units such as a refrigerator, a microwave oven, and storage are arranged. The details of respective units such as the cooking assistance unit will be described later.

A groove is formed in a longitudinal direction in substantially the center of the housing 11. A rail is provided along the groove and cooking arms 51-1 to 51-4 are provided in the rail. The cooking arms 51-1 to 51-4 can be repositioned along the rail serving as a movement mechanism.

The cooking arms 51-1 to 51-4 are robotic arms configured by connecting cylindrical members at joint portions. Various tasks such as cooking and cleaning are performed by the cooking arms 51-1 to 51-4.

A space above a top plate 21A on the front side of the housing 11 is a cooking space in which the cooking arms 51-1 to 51-4 perform cooking. It should be noted that the cooking space is a generic term for a space in which the cooking arms 51-1 to 51-4 or a user performs cooking. The cooking space includes not only a space completely identical to the space in which the cooking arms 51-1 to 51-4 or the user performs cooking, but also a partial space included in such a space.

Although the four cooking arms are shown in Fig. 1, the number of cooking arms is not limited to four. Hereinafter, when it is unnecessary to distinguish each of the cooking arms 51-1 to 51-4, they will be collectively referred to as the cooking arms 51 as necessary.

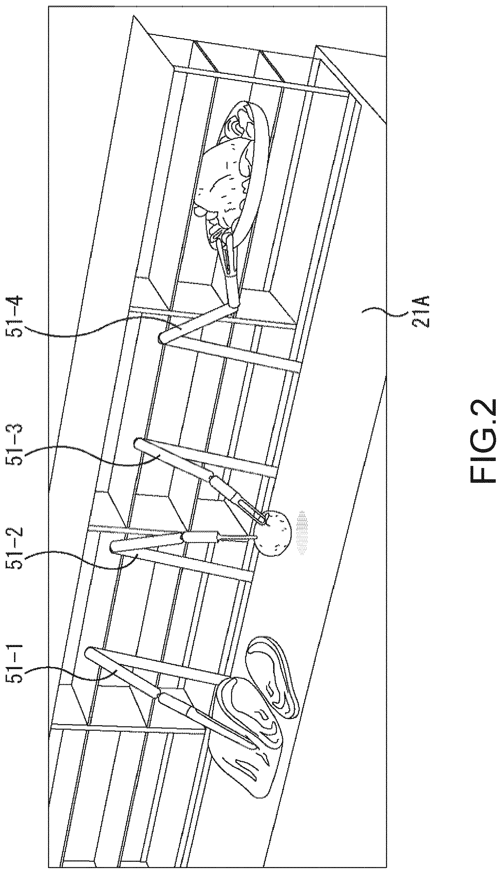

Fig. 2 is a diagram showing a state of the cooking arms 51 performing a task.

As shown in Fig. 2, attachments having various cooking functions are attached to distal ends of the cooking arms 51. As the attachments, an attachment having a manipulator function (hand function) of gripping food ingredients and tableware, an attachment having a knife function of cutting food ingredients, an attachment having a mixer function of mixing liquid such as seasoning, and the like are prepared.

In the example of Fig. 2, a knife attachment which is an attachment having a knife function is attached to the cooking arm 51-1. A mass of meat placed on the top plate 21A is cut by using the knife attachment.

A spindle attachment which is an attachment to be used for fixing or rotating a food ingredient is attached to the cooking arm 51-2.

A peeler attachment which is an attachment having a peeler function of peeling a food ingredient is attached to the cooking arm 51-3.

A potato lifted by the cooking arm 51-2 using the spindle attachment is peeled off by the cooking arm 51-3 using the peeler attachment. In this manner, it is also possible for the plurality of cooking arms 51 to perform one task in cooperation with each other.

The manipulator attachment which is the attachment having the manipulator function is attached to the cooking arm 51-4. A frying pan in which chicken is put is transported to the cooking assistance unit having an oven function by using the manipulator attachment.

The cooking with such cooking arms 51 is performed by replacing the attachments as appropriate in accordance with the contents of tasks. The attachments are also automatically replaced by the robotic kitchen 1.

### <Collaborative Task with Person>

In the cooking in the robotic kitchen 1 performed by using the cooking arms 51, some tasks are performed in collaboration with the user. In a case where the robotic kitchen 1 is installed in a house, the cooking is performed in collaboration with a family member or the like.

Which task is performed by the user is defined in recipe data prepared for each dish, for example. As will be described later, the recipe data also describes information indicating the operation of each cooking arm 51 in each task. The robotic kitchen 1 controls the operation of the respective units such as the cooking arm 51 and performs cooking in accordance with the description of the recipe data.

It is possible for the user to select a degree of involvement in cooking by himself or herself such that all the tasks are performed by the robotic kitchen 1 or more tasks are performed by the user himself or herself. The description of the recipe data is processed in accordance with the degree of involvement selected by the user.

For example, in a case of making a dish with a high degree of difficulty, the user can leave cooking that the user cannot do up to the robotic kitchen 1 by setting the degree of involvement to be lower.

Moreover, a user who likes cooking can enjoy many tasks by setting the degree of involvement to be higher.

It should be noted that the dish means a thing made up after cooking. The cooking means a process of making a dish or an act of making a dish.

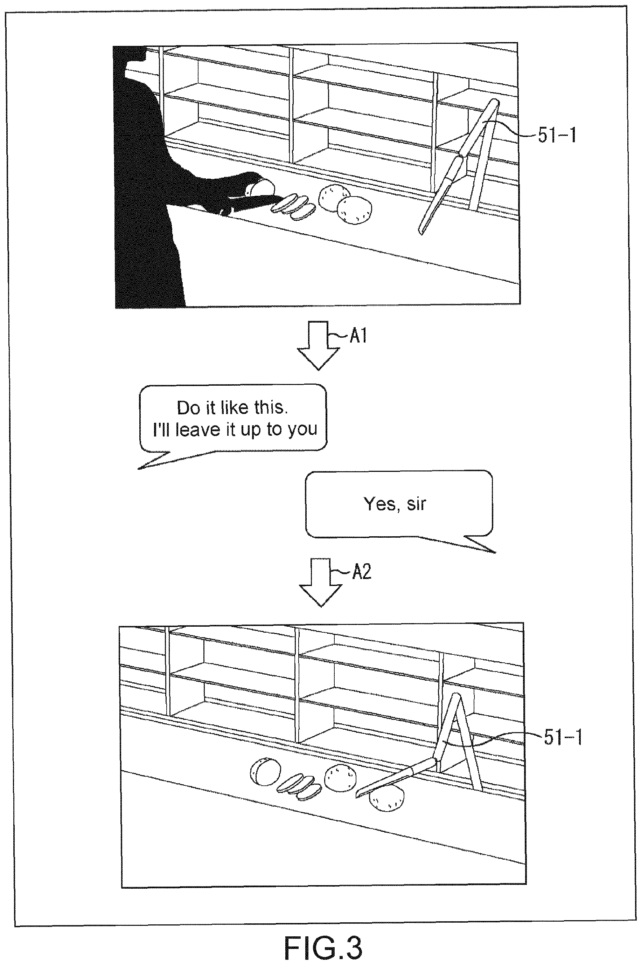

Fig. 3 is a diagram showing a first example of the collaborative task.

In the upper part of Fig. 3, a state in which the user is cutting a potato with a knife is shown. Uncut potatoes are prepared near the potato that the user is cutting. The cooking arm 51-1 to which the knife attachment is attached stands by near the user.

The knife used by the user and the food ingredients such as the potatoes are prepared by the cooking arms 51.

For example, when the user says "Do it like this. I will leave it up to you" as indicated by the arrow A1 after the user finishes cutting the potato, the robotic kitchen 1 determines to perform the continuation of the cutting using the uncut potatoes as targets. The robotic kitchen 1 outputs a synthesized voice saying "Yes, sir".

That is, the robotic kitchen 1 also has a function of learning the user's action, a function of recognizing what the user said and replying it, and the like. A camera for taking an image of the user's action, a microphone for detecting the voice, and a speaker for outputting the synthesized voice are provided at predetermined positions in the robotic kitchen 1.

In a case where it is determined to perform the continuation of the cutting, the cooking arm 51-1 takes over the cutting using the remaining potatoes as the targets as indicated by the arrow A2. The direction of the cutting, the width of the cutting, and the like are based on the manner of the user obtained by learning.

It can be said that a simple task such as cutting lots of the same kinds of food ingredients among the cooking tasks is a task that the user wishes to omit as much as possible. Since the robotic kitchen 1 learns the user's action and takes the same action as the user's action, the user does not need to perform such a simple task.

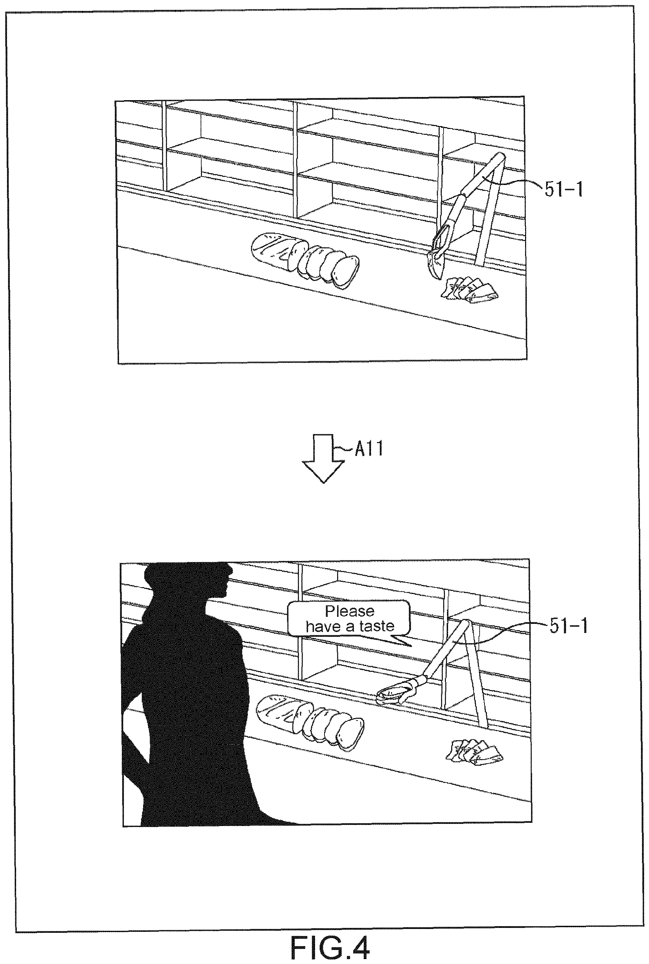

Fig. 4 is a diagram showing a second example of the collaborative task.

In the upper part of Fig. 4, a state in which sliced baguette and smoked salmon are placed on the top plate 21A is shown. The preparation of the food ingredient, the slicing of the food ingredient, and the smoking of the salmon are performed by the cooking arms 51.

The manipulator attachment is attached to the cooking arm 51-1. A piece of smoked salmon is lifted by the cooking arm 51-1 and transported toward the baguette. In this example, the baguette on which the smoked salmon is put is cooked.

When the smoked salmon is put on the baguette, the baguette that is a completed dish is delivered to the user by the cooking arm 51-1 as indicated by the arrow A11. Moreover, a synthesized voice saying "Please have a taste" is output and the user is requested to have a taste.

The user receives and tastes the delivered baguette. In a case where the user who tasted it says a positive thing, for example, "Good", a task of placing the smoked salmon on the baguette is thereafter performed.

The tasting is an important task among cooking tasks and is also a pleasant task for the user. The user can perform the pleasant task by himself or herself.

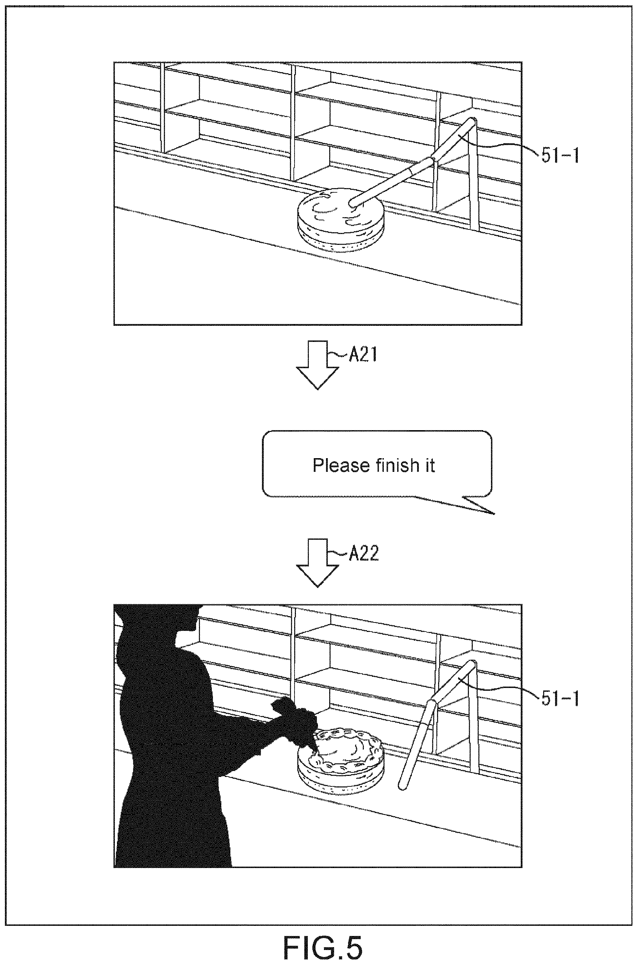

Fig. 5 is a diagram showing a third example of the collaborative task.

In the upper part of Fig. 5, a state in which a coating task of coating a sponge with cream is performed by the cooking arm 51-1 is shown. A spatula attachment having a spatula function is attached to the cooking arm 51-1. The sponge and the cream are prepared by the cooking arms 51.

When the coating task is completed, a synthesized voice saying "Please finish it" as indicated by the arrow A21 is output from the robotic kitchen 1 and the user is requested to perform a finishing task.

As indicated by the arrow A22, the user performs a task of decorating with the cream as the finishing task in response to the request from the robotic kitchen 1.

The finishing task such as decoration with cream in making a cake and food presentation is performed by the user with creativity, and can be a pleasant task. The user can perform such a pleasant task by himself or herself.

In this way, the cooking by the robotic kitchen 1 is performed in collaboration with the user as appropriate. Since the tasks are shared such that the robotic kitchen 1 performs simple tasks such as preparation, the user can perform only the pleasant task by himself or herself and leave the troublesome task up to the robotic kitchen 1.

The user can obtain novel cooking experiences such as cooking in collaboration with the robotic kitchen 1.

Moreover, the user can also enjoy seeing the cooking arms 51 performing the tasks on the top plate 21A. If the cooking is performed inside the housing 11 and the completed dish comes out, such a kitchen can be regarded as a simple apparatus for manufacturing a dish, and it is convenient but lacking in interest.

Since various attachments different from tools used by a person for cooking are used for performing the cooking such that the user can see the cooking, the robotic kitchen 1 can produce a space such as a room by the cooking task itself.

Since the space can be produced by the cooking task and the user can be involved in tasks that the user can enjoy, it can be said that the robotic kitchen 1 is an entertainment kitchen.

### <<2. Details of Configuration of Robotic Kitchen>>

### <Deformation of Robotic Kitchen>

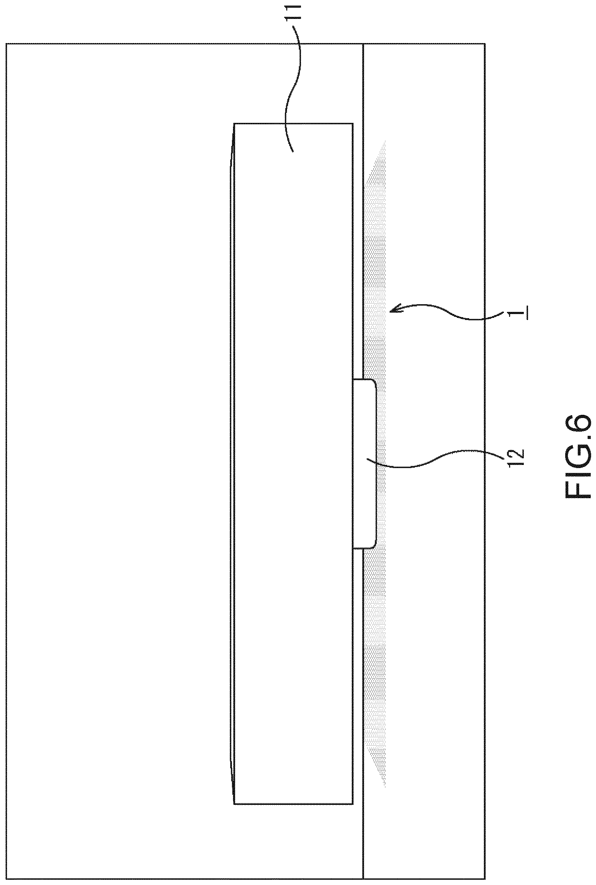

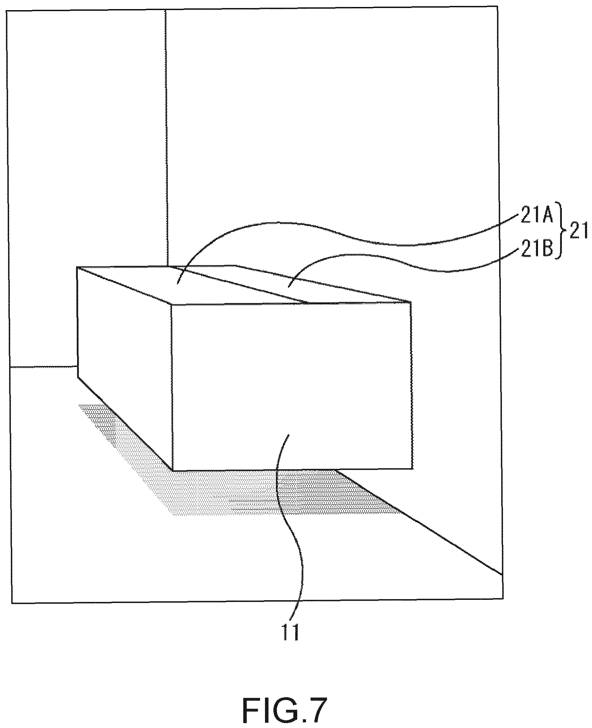

Figs. 6 and 7 are diagrams showing the outer appearance of the robotic kitchen 1 on a sleep mode.

Fig. 6 shows a state in which the robotic kitchen 1 on the sleep mode is viewed from the front and Fig. 7 shows a state in which the robotic kitchen 1 on the sleep mode is viewed from the right front. As shown in Fig. 6, the housing 11 in the horizontally long rectangular parallelepiped shape is provided on a columnar base portion 12 fixed to the floor. A space having a predetermined height is formed between the bottom surface of the housing 11 and the floor.

On the sleep mode, the cooking assistance system 31 is housed in the housing 11. The cooking assistance system 31 is provided at a position lower than a top plate unit 21.

As shown in Fig. 7, the top plate 21A and a top plate 21B constituting the top plate unit 21 are provided at the same height with a slight gap therebetween. The top plate 21A and the top plate 21B are provided in contact at the same height, and the upper surface of the housing 11 is thus a substantially flat surface.

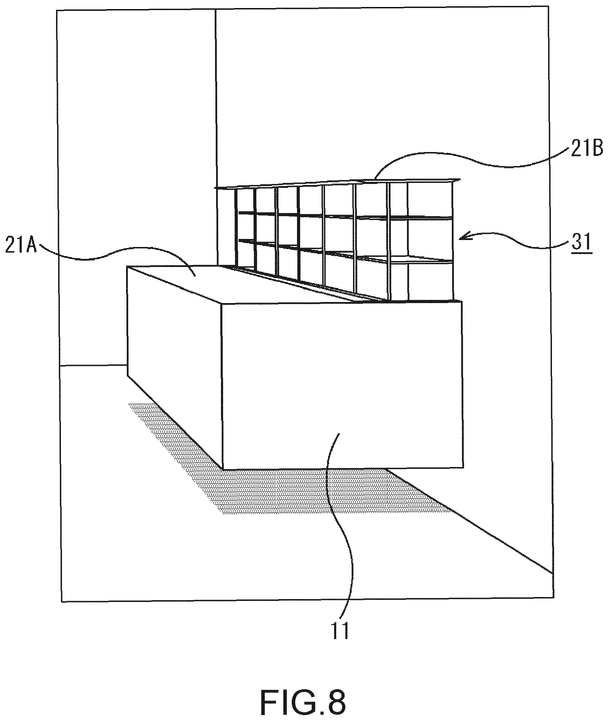

Fig. 8 is a diagram showing the outer appearance of the robotic kitchen 1 on an active mode.

When the operation mode of the robotic kitchen 1 switches from the sleep mode to the active mode, the cooking assistance system 31 ascends and the cooking assistance system 31 is erected on the rear side of the housing 11 as shown in Fig. 8. As the top plate 21B ascends, the cooking assistance system 31 provided on the side of the bottom surface of the top plate 21B appears.

The switching from the sleep mode to the active mode is performed at a predetermined timing such as a timing at which a preset cooking start time comes and a timing at which it is detected that a person who performs a collaborative task is present near the robotic kitchen 1. Such deformation of the robotic kitchen 1 is performed by electric power.

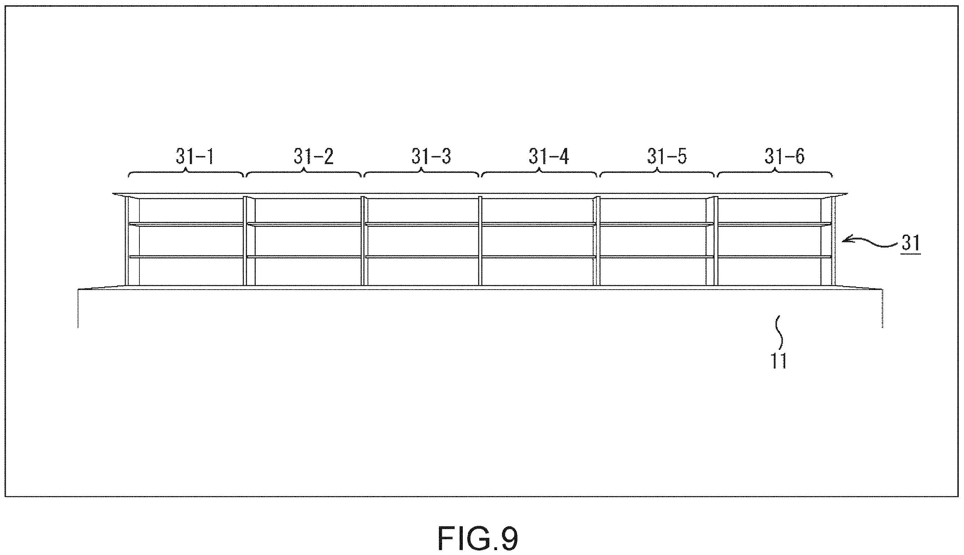

Fig. 9 is a front view of the cooking assistance system 31.

The front, rear, left, and right side surfaces surrounding the box-shaped cooking assistance system 31 are constructed by a transparent member such as a thermally insulative reinforced glass. The interior of the cooking assistance system 31 can be thus seen.

The cooking assistance system 31 includes cooking assistance units 31-1 to 31-6. The cooking assistance units 31-1 to 31-6 are devices having functions of assisting the cooking of the robotic kitchen 1.

The respective cooking assistance units are partitioned by thin plate-like members. Partitioned by two thin plate-like shelf boards, a space having vertically three stages is formed inside of each cooking assistance unit. For example, the front member slides open to allow access to each stage of each cooking assistance unit.

The cooking assistance unit 31-1 is a device having a freezing function. In the cooking assistance unit 31-1, meat, fish, and the like are stored in a frozen state.

The cooking assistance unit 31-2 is a device having a refrigeration function. In the cooking assistance unit 31-2, fruit, beverages, and the like are stored in a cooled state.

The cooking assistance unit 31-3 is a device having a function of maintaining a low temperature state. Vegetables and the like are stored in the cooking assistance unit 31-3 in a low temperature state. For example, in the lower stage of the cooking assistance unit 31-3, the attachments to be attached to the cooking arms 51 and cooking tools (kitchen knives, chopping boards, peelers, spatulas, and like used by human) are housed. Since the attachments are housed in a low temperature state, the propagation of germs can be suppressed.

The cooking assistance unit 31-4 functions as room temperature storage. The cooking assistance unit 31-4 stores bread, pasta, seasoning, and the like. The cooking assistance unit 31-4 also stores tableware, cutlery, and the like.

The cooking assistance unit 31-5 is a device having a heat insulating function. The cooking assistance unit 31-5 stores soups, foods being thawed, foods being low-temperature cooked, and the like.

The cooking assistance unit 31-6 is a device having an oven function. The cooking assistance unit 31-6 is used for performing cooking with heat such as baking bread and grilling meat.

The cooking assistance units 31-1 to 31-6 are arranged such that the unit having a function of storing foods and the like at a lower temperature is located on the left side and the unit having a function of storing foods and the like at a higher temperature is located on the right side.

A device for adjusting the temperature in each cooking assistance unit is provided at a predetermined position such as under each cooking assistance unit. The temperature in each unit is adjusted by sending cold air or hot air discharged by a temperature adjustment device.

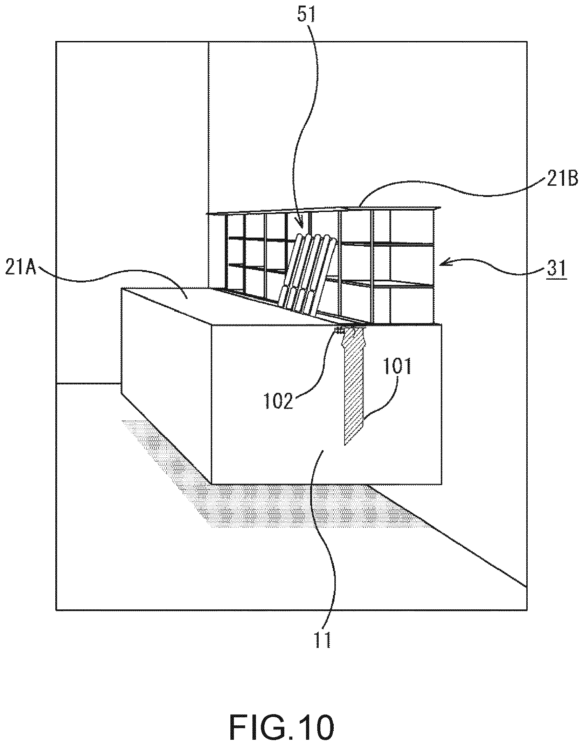

When the operation mode of the robotic kitchen 1 switches from the sleep mode to the active mode and the cooking assistance system 31 appears, the cooking arms 51 appear on the front side of the cooking assistance system 31 as shown in Fig. 10 following the cooking assistance system 31.

The cooking arms 51 are those housed in a groove portion which appears as the top plate 21B ascends. The width in a depth direction of the cooking assistance system 31 is, as shown in Fig. 10, smaller than the width in a depth direction of the top plate 21B. The groove portion closed by the top plate 21B on the sleep mode appears as the top plate 21B ascends and the cooking arms 51 are activated from the groove portion.

Moreover, as the robotic kitchen 1 is viewed from above, a groove portion 101 is, as shown by hatching in the cross-section of the side surface of the housing 11 of Fig. 10, formed in the longitudinal direction of the housing 11 in the vicinity of the boundary between the top plate 21A and the top plate 21B. The length of the groove portion 101 is substantially the same length as the length of the longitudinal direction of the housing 11 except for wall surface portions having a predetermined width on the side of the left side surface and on the side of the right side surface.

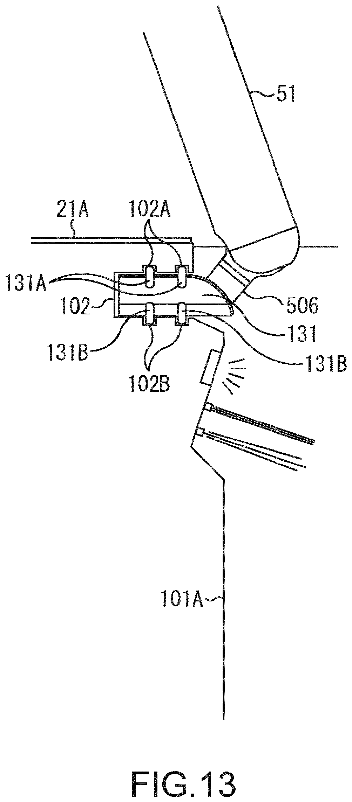

In the vicinity of an opening of the groove portion 101, a rail 102 is provided along the side surface of the groove portion 101. In the example of Fig. 13, the rail 102 is provided along the side surface on the front side of the groove portion 101 as shown by coloring. It can be also said that the groove portion 101 is formed along the rail 102. The cooking arm 51 is mounted to be movable along the rail 102.

Moreover, the groove portion 101 includes a set of the ultraviolet ray irradiation ports 111, the air jet ejection ports 112, and the water ejection ports 113 (see Fig. 13 for all of them) as the washing function, and a plurality of such sets is provided at predetermined intervals in the longitudinal direction of the groove portion 101. The set at the position at which the user has inserted the hands is driven to wash the hands.

The tableware, the cutlery, the attachments to be attached to the cooking arms 51, and the like are also washed by using the washing function of the groove portion 101. Not only washing but also drying and disinfecting the tableware, the cutlery, and the attachments are performed in a manner similar to that of the hands of the person.

Moreover, the groove portion 101 is provided with a waste treatment function of treating waste such as trash generated at the time of cooking. For example, the waste scattered on the top plate 21A is swept by the cooking arms 51 and introduced into the groove portion 101.

### <Cooking Arm>

### - Cooking Arm Configuration

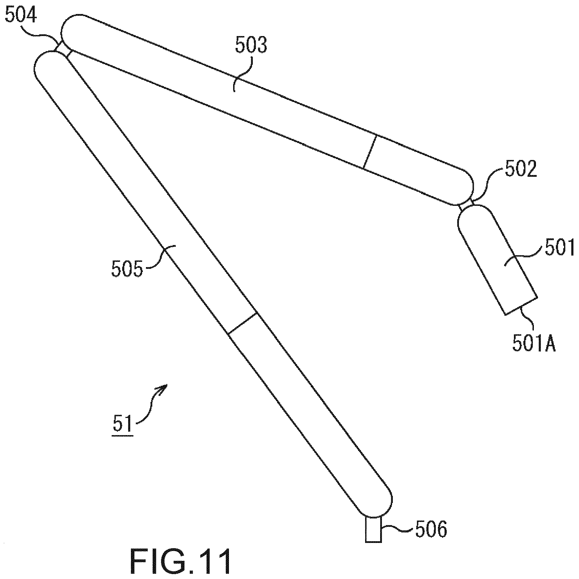

Fig. 11 is a diagram showing the outer appearance of the cooking arm 51.

As shown in Fig. 11, the cooking arm 51 is generally configured by connecting thin cylindrical members with hinge portions serving as joint portions. Each hinge portion is provided with a motor and the like for generating force for driving each member.

As the cylindrical members, an attaching/detaching member 501, a relay member 503, and a base member 505 are provided in order from the distal end. The attaching/detaching member 501 is a member having a length of substantially 1/5 of the length of the relay member 503. The length obtained by adding the length of the attaching/detaching member 501 to the length of the relay member 503 is substantially the same as the length of the base member 505.

The attaching/detaching member 501 and the relay member 503 are connected to each other through a hinge portion 502 and the relay member 503 and the base member 505 are connected to each other through a hinge portion 504. The hinge portion 502 and the hinge portion 504 are provided at both ends of the relay member 503.

Although the cooking arm 51 is constituted by the three cylindrical members in this example, the cooking arm 51 may be constituted by four or more cylindrical members. In this case, a plurality of relay members 503 is provided.

An attaching/detaching portion 501A to/from which the attachment is attached and detached is provided at the distal end of the attaching/detaching member 501. The attaching/detaching member 501 has a attaching/detaching portion 501A to/from which one of the attachments having various cooking functions is attached and detached and functions as a cooking function arm portion that performs cooking by operating the attachment.

The rear end of the base member 505 is provided with an attaching/detaching portion 506 which is attached to an arm movement unit 131 fitted in the rail 102. The base member 505 has an attaching/detaching portion 506 which is attached to the arm movement unit 131 and functions as a movement function arm portion that achieves the movement of the cooking arm 51.

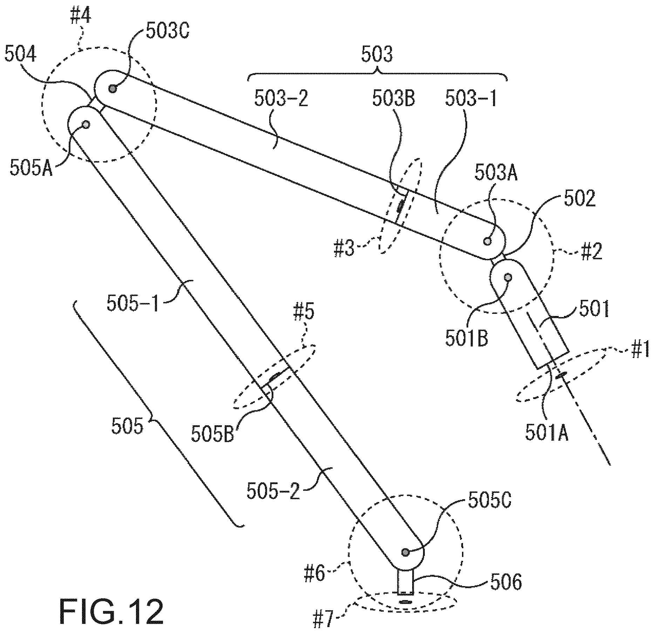

Fig. 12 is a diagram showing an example of a range of motion of each portion of the cooking arm 51.

As shown surrounded by the ellipse #1, the attaching/detaching member 501 is rotatable about the central axis of the circular cross-section. The small flat circle shown in the center of the ellipse #1 indicates the direction of the rotational axis as the long dashed short dashed line.

The range of rotation of the attaching/detaching member 501 is set as a range in which the pipe of the attachment is not detached in a case where the attachment is attached to the attaching/detaching portion 501A. The range of rotation is switched in a manner that depends on the attachment.

As shown surrounded by the circle #2, the attaching/detaching member 501 is rotatable about an axis passing through a fitting portion 501B for the hinge portion 502. Moreover, the relay member 503 is rotatable about an axis passing through a fitting portion 503A for the hinge portion 502.

The two small circles shown inside the circle #2 indicate the direction of each rotational axis (direction perpendicular to the sheet). The range of motion of the attaching/detaching member 501 about the axis passing through the fitting portion 501B and the range of motion of the relay member 503 about the axis passing through the fitting portion 503A are each in the range of 90 degrees, for example.

The relay member 503 is constituted by a member 503-1 on the distal end side and a member 503-2 on the rear end side. As shown surrounded by the ellipse #3, the relay member 503 is rotatable about the central axis of the circular cross-section at a coupling portion 503B between the member 503-1 and the member 503-2.

The other movable portions also have a basically similar range of motion.

That is, as shown surrounded by the circle #4, the relay member 503 is rotatable about an axis passing through a fitting portion 503C for the hinge portion 504. Moreover, the base member 505 is rotatable about an axis passing through a fitting portion 505A for the hinge portion 504.

The base member 505 is constituted by a member 505-1 on the distal end side and a member 505-2 on the rear end side. As shown surrounded by the ellipse #5, the base member 505 is rotatable about the central axis of the circular cross-section at a coupling portion 505B between the member 505-1 and the member 505-2.

As shown surrounded by the circle #6, the base member 505 is rotatable about an axis passing through a fitting portion 505C for the attaching/detaching portion 506.

As shown surrounded by the ellipse #7, the attaching/detaching portion 506 is attached to the arm movement unit 131 to be rotatable about the central axis of the circular cross-section.

As described above, the attaching/detaching member 501 having the attaching/detaching portion 501A at the distal end, the relay member 503 that connects the attaching/detaching member 501 and the base member 505 to each other, and the base member 505 having the rear end to which the attaching/detaching portion 506 is connected are rotatably connected to one another by the hinge portions. The movement of each movable portion is controlled by a controller in the robotic kitchen 1.

This makes it possible to achieve a movement with a high degree of freedom.

### - Movement Mechanism

Fig. 13 is a cross-sectional view showing the vicinity of the rail 102 in an enlarged state.

The arm movement unit 131 is fitted in the rail 102 provided at the edge of the top plate 21A. Small grooves 102A and 102B are formed in the upper and lower surfaces of the rail 102 and rollers 131A and 131B provided in the upper and lower surfaces of the arm movement unit 131 are fitted in the grooves 102A and 102B.

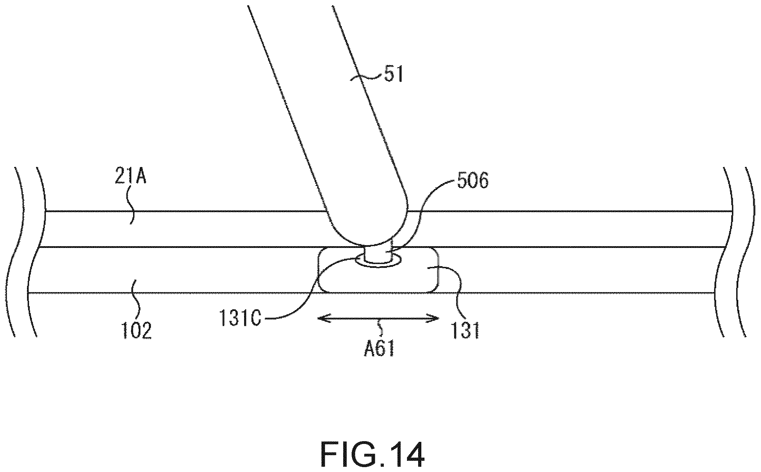

The distal end of the arm movement unit 131 is formed as a gentle curved face and an attaching/detaching portion 131C (Fig. 14) is provided on the curved face. By inserting the attaching/detaching portion 506 into the attaching/detaching portion 131C, the cooking arm 51 is attached to the arm movement unit 131.

It should be noted that in Fig. 13, the illustration of the pipe 132 is omitted. The pipe 132 passes through the inside of the arm movement unit 131 and is guided to the attaching/detaching portion 131C. When the attaching/detaching portion 506 is inserted into the attaching/detaching portion 131C, the pipe 132 is connected to the pipe in the cooking arm 51.

Fig. 14 is a diagram showing a movement direction of the arm movement unit 131.

In Fig. 14, a state of the arm movement unit 131 fitted in the rail 102 as viewed from the inside of the groove portion 101 is shown.

As indicated by the double-headed arrow A61, the arm movement unit 131 moves horizontally along the rail 102. By moving the arm movement unit 131, it is possible to move the cooking arm 51 attached to the arm movement unit 131 to an arbitrary position. Not only the movement of each movable portion, but also the position of the cooking arm 51 are controlled by the controller in the robotic kitchen 1.

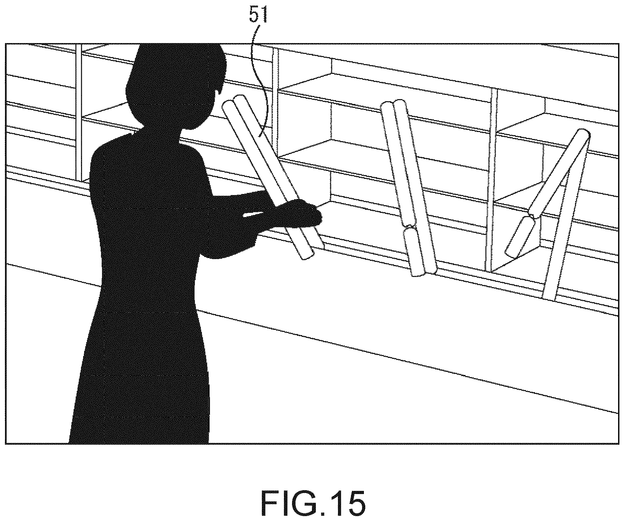

Fig. 15 is a diagram showing a state in which the cooking arm 51 is attached and detached.

As shown in Fig. 15, the cooking arm 51 is attachable/detachable to/from the arm movement unit 131 fitted in the rail 102. For example, the cooking arms 51 are individually sold. By additionally purchasing them, the user can increase the number of cooking arms 51 having the number of arm movement units 131 provided in the rail 102 as the upper limit.

As the number of cooking arms 51 increases, the number of tasks that can be performed at the same time increases or the contents of tasks that the plurality of cooking arms 51 performs in cooperation with each other will change. In the robotic kitchen 1, data whose description content differs in a manner that depends on the number of cooking arms 51 is prepared as recipe data for making the same dish.

### <Attachment>

### - Attaching/Detaching Mechanism

In order to perform cooking using the attachment, it is necessary to supply water and the like to be used for the cooking from the cooking arm 51 side to the attachment side.

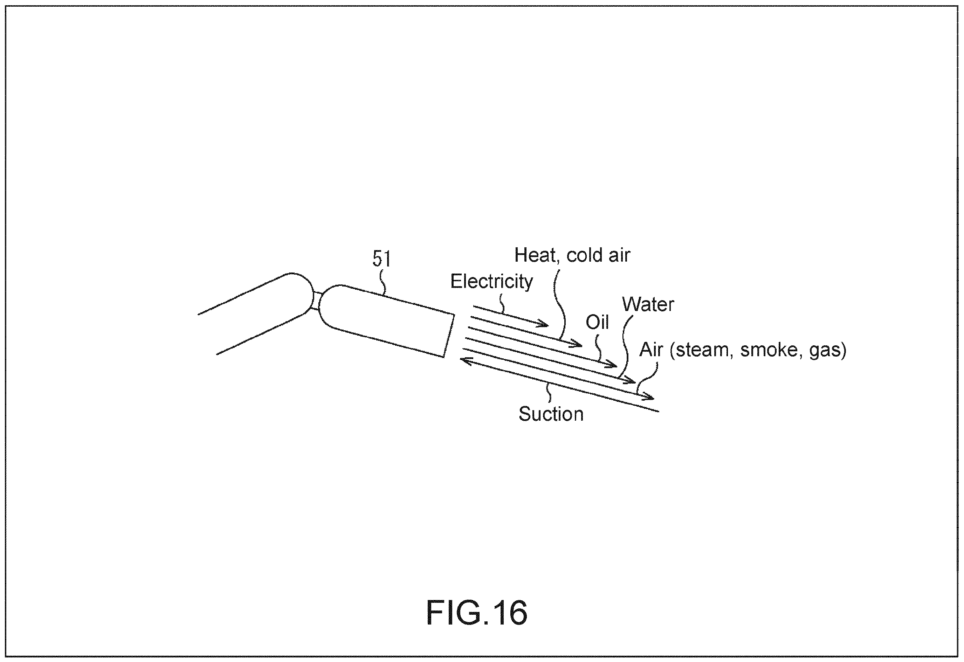

Fig. 16 is a diagram showing a function example of the cooking arm 51.

As indicated by the arrows in Fig. 16, the cooking arm 51 has a function of supplying electricity to the attachment. The attachment is driven by the electricity supplied from the cooking arm 51. The electricity supplied to the attachment is supplied to the cooking arm 51 via the rail 102, for example.

Moreover, the cooking arm 51 has a function of supplying heat or cold air to the attachment. For example, cooking with heat is performed in the attachment by using the heat supplied from the cooking arm 51. Moreover, the temperature adjustment of food ingredients is performed by using the cold air supplied from the cooking arm 51.

The heat or cold air supplied to the attachment is generated in the arm function control device 133 and supplied to the cooking arm 51 via the pipe 132. The heat or cold air generated in the arm function control device 133 is transmitted to the cooking arm 51 by feeding compressed air or the like to the pipe 132 from the arm function control device 133.

The cooking arm 51 has a function of supplying edible oil such as olive oil and vegetable oil to the attachment. By using the edible oil supplied from the cooking arm 51, frying is performed in the attachment, for example. Moreover, cooking such as sprinkling olive oil on ingredients is also performed.

The edible oil supplied to the attachment is supplied to the cooking arm 51 from the arm function control device 133 via the pipe 132. The edible oil stored in the container provided inside the arm function control device 133 is supplied to the cooking arm 51 from the arm function control device 133 by flowing into the pipe 132.

The cooking arm 51 has a function of supplying water to the attachment. For example, washing of food ingredients and washing of the top plate 21A are performed by using the water supplied from the cooking arm 51. The washing of the food ingredients and the washing of the top plate 21A are also tasks performed as cooking.

The water supplied to the attachment is supplied to the cooking arm 51 from the arm function control device 133 via the pipe 132. Water drawn from a water pipe by the arm function control device 133 is supplied to the cooking arm 51 by flowing into the pipe 132. Temperature-regulated water may be supplied to the cooking arm 51 in the arm function control device 133.

The cooking arm 51 has a function of supplying the air to the attachment. For example, steam, smoke, or gas may be supplied to the attachment. For example, steaming or disinfecting the top plate 21A and the attachments attached to the other cooking arms 51 is performed by using the steam supplied from the cooking arm 51.

Moreover, for example, smoking is performed by the attachment by using the smoke supplied from the cooking arm 51. For example, cooking with heat is performed by the attachment with flame using the gas supplied from the cooking arm 51.

The air supplied to the attachment is supplied to the cooking arm 51 from the arm function control device 133 via the pipe 132. Steam or smoke generated in the arm function control device 133 is supplied to the cooking arm 51 by being fed with compressed air from the arm function control device 133 to the pipe 132. Gas drawn from a gas pipe by the arm function control device 133 is supplied to the cooking arm 51 from the arm function control device 133 by being fed into the pipe 132.

The cooking arm 51 has a function of suctioning liquid or gas. Suction force generated in the arm function control device 133 is transmitted to the attachment through the pipe 132 and the cooking arm 51 and the liquid or gas at the suction port of the attachment is suctioned.

It is sufficient that the cooking arm 51 has at least one of the functions rather than having all of the functions shown in Fig. 16.

Other functions such as a function of supplying a drink such as a soft drink and an alcoholic drink to the attachment and a function of supplying a seasoning such as sugar and salt to the attachment may be provided in the cooking arm 51.

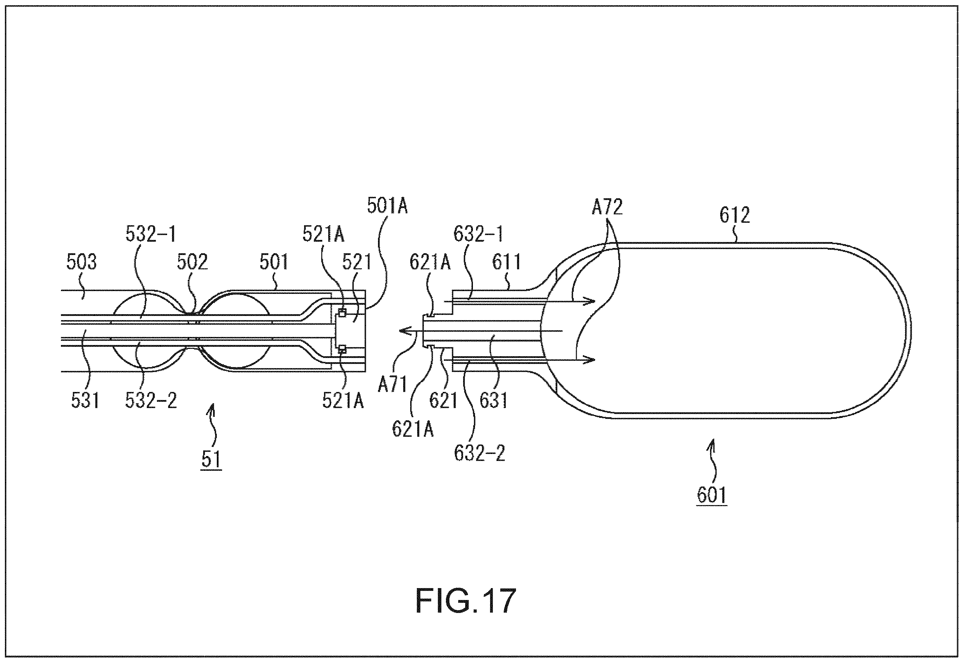

Fig. 17 is a diagram showing an example of an attaching/detaching mechanism of the attachment.

As shown in Fig. 17, a concave insertion hole 521 is formed in the center of the attaching/detaching portion 501A formed at the distal end of the attaching/detaching member 501 on the cooking arm 51 side.

On the other hand, an attaching/detaching portion 611 is provided on an attachment 601 side. A convex protrusion is formed as an insertion portion 621 at the distal end of the attaching/detaching portion 611.

When the insertion portion 621 is inserted into the insertion hole 521, a lock portion 521A provided in the insertion hole 521 is fitted in a groove portion 621A formed in the circumferential side surface of the insertion portion 621, such that the attachment 601 is fixed to the cooking arm 51.

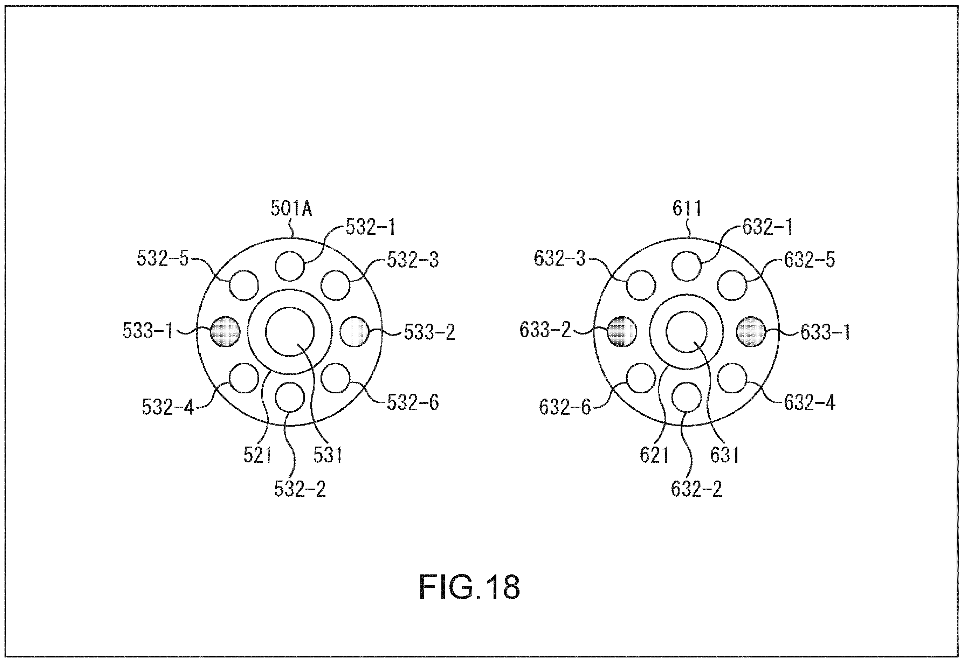

Insertion of the insertion portion 621 into the insertion hole 521 is guided by attraction of magnets provided on the attaching/detaching portion 501A side and the attaching/detaching portion 611 side, respectively. As shown by coloring in Fig. 18, magnets 533-1 and 533-2 and magnets 633-1 and 633-2 are provided at corresponding positions on the attaching/detaching portion 501A side and the attaching/detaching portion 611 side, respectively. Fig. 18 shows a configuration of a contact surface between the attaching/detaching portion 501A and the attaching/detaching portion 611.

A pipe 531 is provided in the innermost portion of the insertion hole 521. As shown in Fig. 18, three pipes are provided on the upper side of the pipe 531 and three pipes are provided on the lower side of the pipe 531. Each pipe is disposed in each member constituting the cooking arm 51.

On the other hand, a pipe 631 is provided in the tip end surface of the insertion portion 621. As shown in Fig. 18, three pipes are provided on the upper side of the pipe 631 and three pipes are provided on the lower side of the pipe 631.

The pipe 531 on the cooking arm 51 side and the pipe 631 on the attachment 601 side are used for suctioning liquid or gas as indicated by the arrow A71 in Fig. 17.

Pipes 532-1 and 532-2 on the cooking arm 51 side and pipes 632-1 and 632-2 on the attachment 601 side are used for supplying water as indicated by the arrows A72 in Fig. 17, for example.

Moreover, pipes 532-3 and 532-4 on the cooking arm 51 side and pipes 632-3 and 632-4 on the attachment 601 side are used for supplying edible oil.

Pipes 532-5 and 532-6 on the cooking arm 51 side and pipes 632-5 and 632-6 on the attachment 601 side are used for supplying gas. The supply of heat or cold air, the supply of steam, smoke, or gas, and the like are performed through the pipes 532-5 and 532-6 and pipes 632-5 and 632-6.

In the cooking arm 51 side, two pipes used for the same function are provided at diagonal positions across the pipe 531 in the center. Also on the attachment 601 side, two pipes used for the same function are provided at diagonal positions across the pipe 631 in the center.

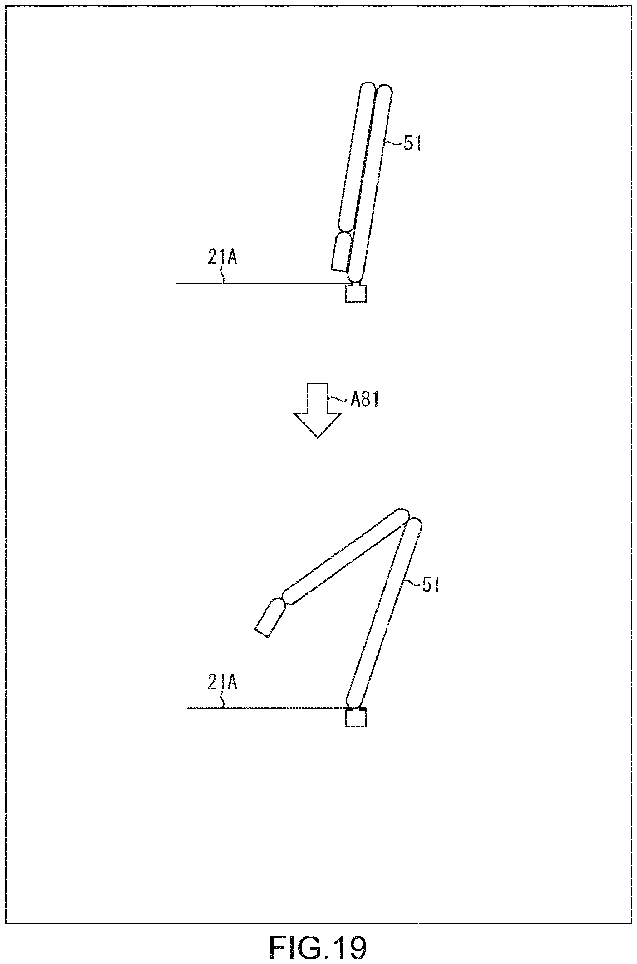

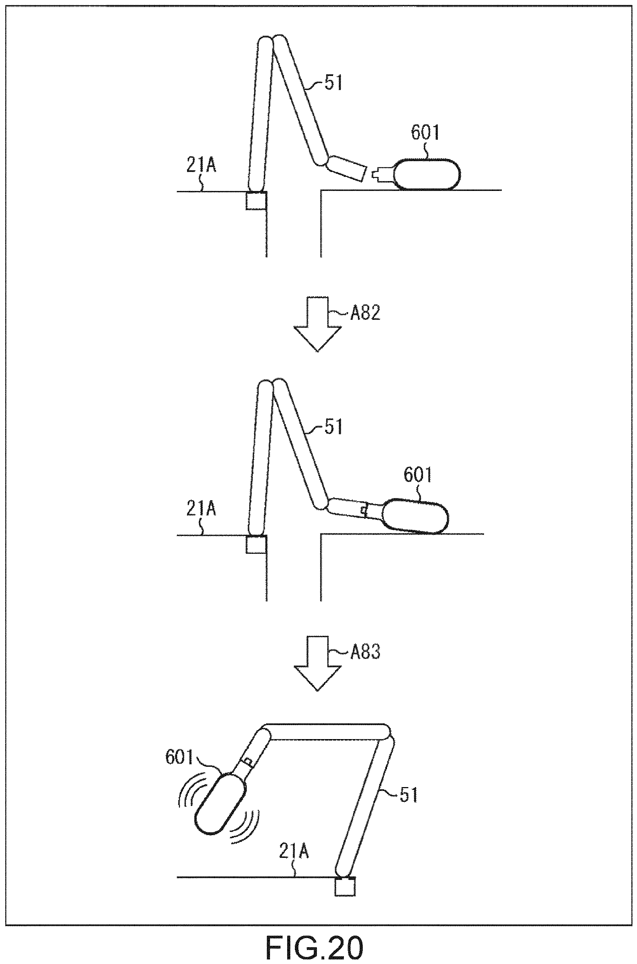

Figs. 19 and 20 are diagrams showing a flow of attaching the attachment 601.

The state of the cooking arm 51 immediately after it is activated is in the standby state as shown in the upper part of Fig. 19. After it is determined to attach the attachment on the basis of the recipe data or the like, the driving of the cooking arm 51 is started as indicated by the arrow A81.

The position of an attachment of the plurality of attachments housed in the cooking assistance unit 31-3, which is to be attached, is recognized. The position of each attachment is recognized by analyzing an image taken by a camera, for example.

The housing position of each attachment may be fixed. Each attachment is housed in the cooking assistance unit 31-3 in a state in which the attaching/detaching portion 611 is directed to the groove portion 101, for example.

As shown in the upper part of Fig. 20, each portion of the cooking arm 51 is driven such that the attaching/detaching portion 501A comes close to the attaching/detaching portion 611 of the attachment 601 to be attached.

When the attaching/detaching portion 501A is moved close to the attaching/detaching portion 611 of the attachment 601, the attachment 601 is attached to the attaching/detaching portion 501A by attraction force of the magnets provided on the attaching/detaching portion 501A side and the attaching/detaching portion 611 side as indicated by the arrow A82.

Accordingly, cooking using the attachment 601 can be performed as indicated by the arrow A83. In the example of Fig. 20, cooking of mixing ingredients is performed by vibrating the attachment 601.

It is possible to replace the attachment 601 by respectively providing the attaching/detaching portions on the cooking arm 51 side and the attachment 601 side as described above.

Moreover, the attachment 601 can be provided with various cooking functions by connection between the pipe on the attachment 601 side and the pipe on the cooking arm 51 side when the attachment 601 is attached.

Returning to the description of Fig. 17, a portion of the entire configuration of the attachment 601, which excludes the attaching/detaching portion 611, serves as a cooking unit 612 that achieves the cooking functions. In accordance with the operation of the cooking arms 51, tasks according to the cooking process are achieved in the cooking unit 612. The operation of the cooking unit 612 is switched as appropriate in accordance with the state of the user who performs the collaborative task. The configuration of the cooking unit 612 differs in a manner that depends on the type of attachment.

Although the connection of the pipes has been mainly described in the example of Figs. 17 and 18, configurations and the like for connecting a cable for supplying electricity and signal lines for supplying various control signals to the attachment 601 side are provided on the cooking arm 51 side and the attachment 601 side, respectively.

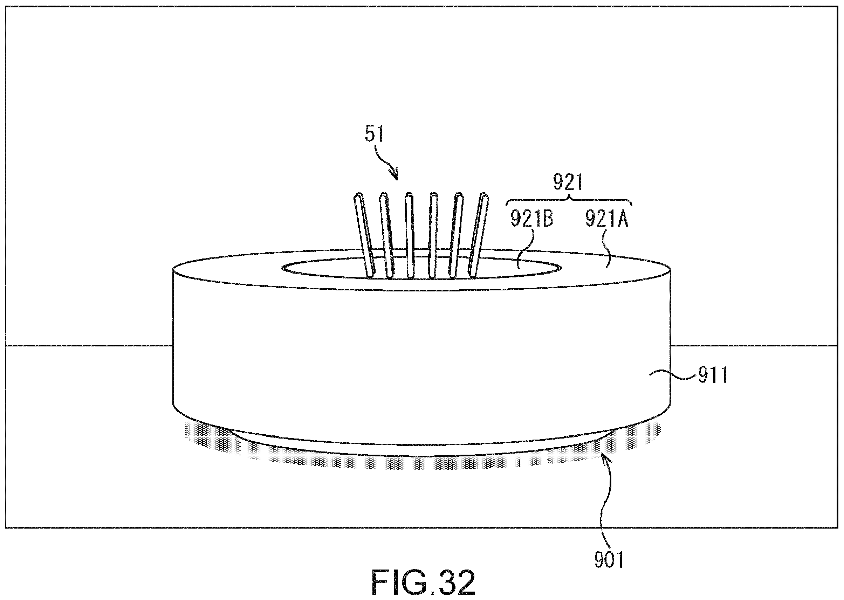

The cooking unit 612 is connected to the control device (controller 201 in Fig. 32) of the robotic kitchen 1 and functions as a connection unit that receives a control signal transmitted from the control device. Moreover, the cooking unit 612 functions as a control unit that controls the cooking functions of the cooking function cooking unit 612 itself on the basis of a control signal received at the connection unit.

### - Type of Attachment

Here, the type of attachment attached to the cooking arm 51 in the above-mentioned manner will be described.

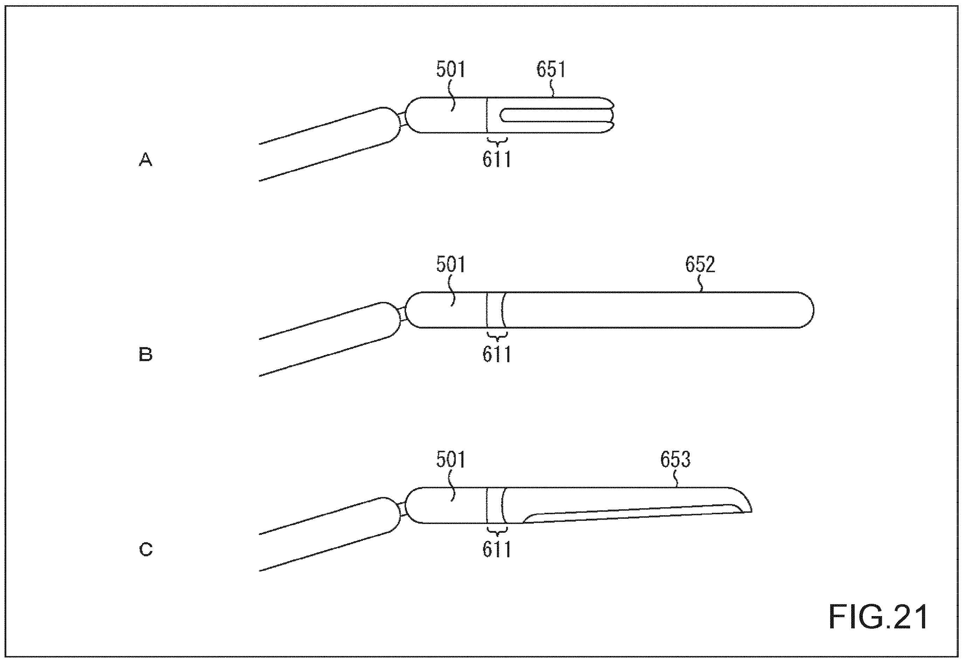

Figs. 21 to 24 are diagrams showing examples of attachments.

In Figs. 21 to 24, each attachment attached to the cooking arm 51 is shown. The attaching/detaching portion 611 is provided at the root of each attachment. The portion on the distal side of the attaching/detaching portion 611 corresponds to the cooking unit 612 of each attachment.

A of Fig. 21 shows the outer appearance of a manipulator attachment 651, which is an attachment having a manipulator function of gripping ingredients, tableware, and the like. The details of the manipulator attachment 651 will be described later.

B of Fig. 21 shows the outer appearance of a spatula attachment 652, which is an attachment having a spatula function.

The spatula attachment 652 has a narrow, thin plate-like shape having a tip rounded in a semicircular arc shape. The spatula attachment 652 is made from metal such as stainless steel, ceramic, resin, and the like.

The spatula attachment 652 is used for performing a task such as coating as described above. In a case where the material of the spatula attachment 652 is metal, a task of heating the a food ingredient with heat supplied from the cooking arm 51 or cooling a food ingredient with the cold air supplied from the cooking arm 51 by placing the spatula attachment 652 on the food ingredient may be performed.

C of Fig. 21 shows the outer appearance of a knife attachment 653, which is an attachment having a knife function.

The knife attachment 653 has a narrow, thin plate-like shape. A blade is formed in the lower part of the knife attachment 653. The knife attachment 653 is made from metal such as stainless steel, ceramic, resin, and the like.

A task of cutting a food ingredient as described above is performed by using the knife attachment 653. In a case where the material of the knife attachment 653 is metal, a food ingredient is cut while heating the cut section with heat generated by the heating wire inside the knife attachment 653.

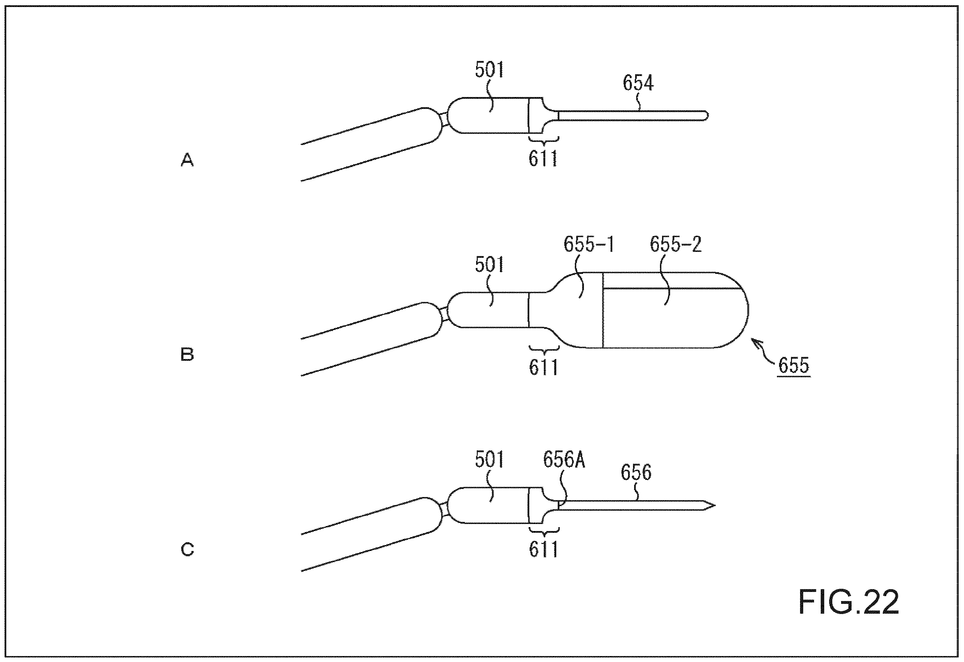

A of Fig. 22 shows the outer appearance of an all-purpose pin attachment 654.

The all-purpose pin attachment 654 has a thin pin-like shape having a rounded tip. The all-purpose pin attachment 654 is made from metal such as stainless steel.

A task of stirring or warming soup in a pan by using the all-purpose pin attachment 654. For example, when the all-purpose pin attachment 654 is inserted into the soup, the all-purpose pin attachment 654 is heated with heat supplied from the cooking arm 51 and the soup is warmed with the heat of the all-purpose pin attachment 654.

B of Fig. 22 shows the outer appearance of a shaker attachment 655.

The shaker attachment 655 has a hollow cylindrical shape. The shaker attachment 655 includes a base portion 655-1 and a capsule portion 655-2 provided on the distal side of the base portion 655-1. The capsule portion 655-2 is made from a transparent material such as reinforced glass and acrylic resin. The attachment 601 described with reference to Figs. 19 to 20 and the like is the shaker attachment 655.

A task of mixing seasonings put in the capsule portion 655-2 is performed by shaking the entire shaker attachment 655. A part of the capsule portion 655-2 is configured as a slidable cover portion. Food ingredients including seasonings to be mixed are put into the capsule portion 655-2 from an opening formed when the cover portion is opened.

A task of heating the food ingredients put in the capsule portion 655-2 with heat supplied from the cooking arm 51 or mixing the food ingredients put in the capsule portion 655-2 with water and olive oil supplied from the cooking arm 51 may be performed.

C in Fig. 22 shows the outer appearance of a spindle attachment 656.

The spindle attachment 656 has a thin pin-like shape having a sharp tip. A pin-like portion on the distal side of a movable portion 656A is rotatable. The spindle attachment 656 is made from metal such as stainless steel.

A task of peeling vegetables as described above is performed by using the spindle attachment 656. In a case of peeling a potato, the cooking arm 51 to which the spindle attachment 656 is attached sticks the tip of the spindle attachment 656 into the potato, lifts the potato, and rotates the potato in that state. For example, another cooking arm 51 to which the peeler attachment is attached presses the peeler attachment against the surface of the rotating potato and performs the task of peeling the potato.

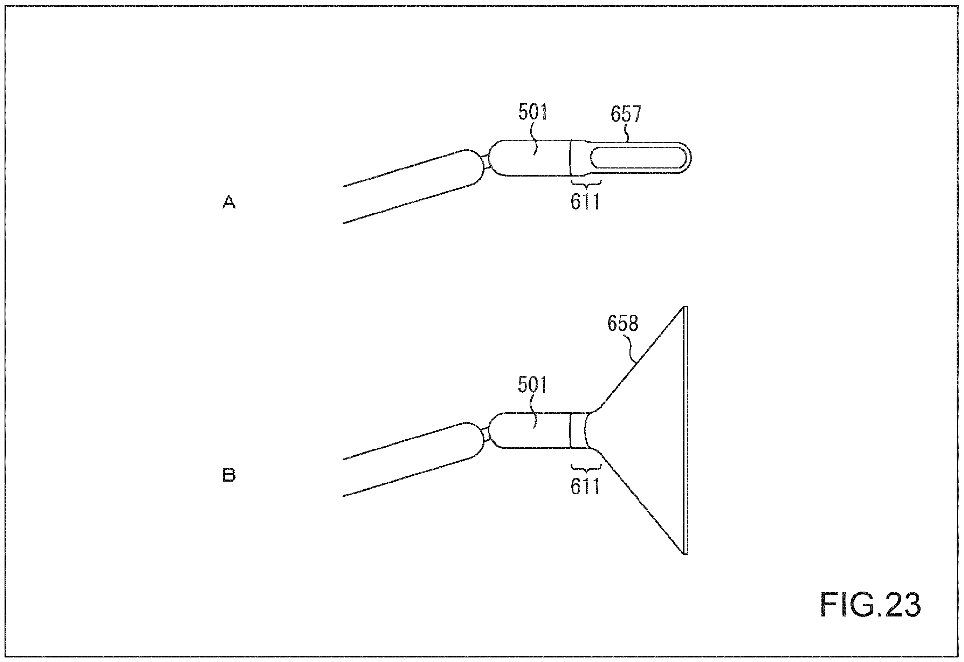

A of Fig. 23 shows the outer appearance of a peeler attachment 657.

The peeler attachment 657 has an oblong elliptical shape and an elliptical hole portion is formed at its center. A blade for peeling is formed along the hole portion. The peeler attachment 657 is made from metal such as stainless steel, ceramic, resin, and the like.

The task of peeling vegetables in cooperation with the cooking arm 51 to which the spindle attachment 656 is attached is performed by using the peeler attachment 657.

B of Fig. 23 shows the outer appearance of a cleaner attachment 658.

The cleaner attachment 658 has a substantially triangular shape extending from the root toward the tip. The cleaner attachment 658 is made from metal such as stainless steel, resin, and the like.

The top plate 21A is cleaned by using the cleaner attachment 658. The details of the cleaner attachment 658 will be described later.

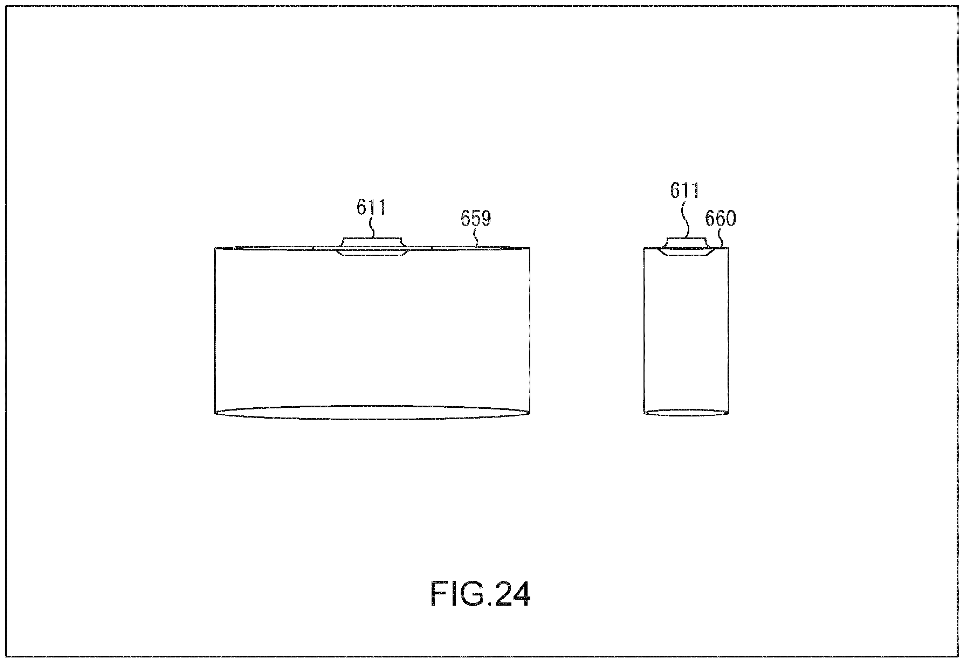

Fig. 24 shows the outer appearance of cover attachments 659 and 660.

The cover attachments 659 and 660 each has a hollow cylindrical housing. The cover attachment 659 is wider than the cover attachment 660. The cover attachments 659 and 660 are each made from a transparent material such as reinforced glass and acrylic resin. The attaching/detaching portion 611 is provided in the center of the upper surface of each of the cover attachments 659 and 660.

The entire bottom surface of the housing of each of the cover attachments 659 and 660 is opened. The cover attachments 659 and 660 each covers a food ingredient placed on the top plate 21A and is used for performing various tasks in its hollow portion. The details of the cover attachments 659 and 660 will be described later.

As described above, the robotic kitchen 1 is provided with various dedicated attachments different from tools used for cooking by a human. By replacing the attachment, it is possible to provide the cooking arm 51 with various cooking functions.

These attachments are grouped and managed in accordance with the cooking process and frequency of use. For example, frequently used attachments are stored in the upper shelf of the cooking assistance unit 31-3, from which it can be easily taken out. In this case, infrequently used attachments are stored in the lower shelf of the cooking assistance unit 31-3.

For example, the attachments are individually sold. The user can increase the variety of cooking that can be performed by the robotic kitchen 1 by additionally purchasing them.

As the number of attachments increases, the dishes that can be made change or the contents of tasks will change. As recipe data for making a certain dish, data whose description content differs in a manner that depends on a combination of attachments prepared in the robotic kitchen 1 is prepared.

### - Manipulator Attachment

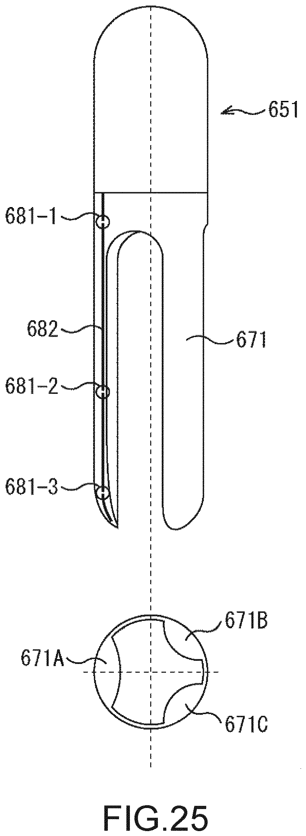

Fig. 25 is a diagram showing a configuration example of the manipulator attachment 651.

As shown in the upper part of Fig. 25, a gripping portion 671 is provided on the distal end side of the manipulator attachment 651. The gripping portion 671 is made from a deformable material such as silicon.

Finger portions 671A to 671C serving as three fingers are formed in the gripping portion 671 by dividing the gripping portion 671 into three pieces. The lower part of Fig. 25 shows a state of the gripping portion 671 as viewed from the distal end side of the manipulator attachment 651. The finger portions 671A to 671C have curved faces. The width of the finger 671A is larger than the width of the finger 671B or 671C.

As shown in the upper part of Fig. 25 in a see-through state, joint portions 681-1 to 681-3 are provided inside each finger portion. The joint portions are connected to one another with a wire 682.

The joint portions 681-1 are provided in the vicinity of the root of the gripping portion 671 branched into the finger portions 671A to 671C and the joint portion 681-3 is provided in the vicinity of the tip end of each finger portion. The joint portion 681-2 is provided at a position slightly closer to the joint portion 681-3 than the intermediate position between the joint portion 681-1 and the joint portion 681-3. The distance between the joint portions on the distal end side of the gripping portion 671 is smaller than the distance between the joint portions on the rear end side.

By driving the joint portions 681-1 to 681-3 and the wires 682, various movements such as a movement of gripping a food ingredient are achieved.

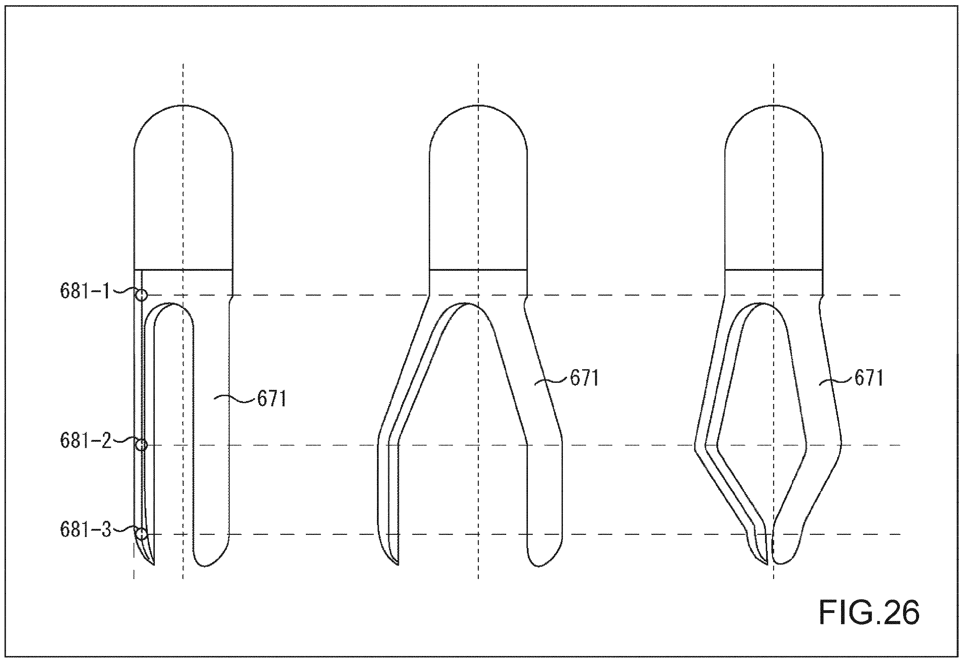

Fig. 26 is a diagram showing an example of movement of the gripping portion 671.

The state of the gripping portion 671 shown on the left side of Fig. 26 is a standby state.

The state of the gripping portion 671 shown in the center of Fig. 26 is a state of gripping a large object.

In this case, the respective joint portions 681-1 of the finger portions 671A to 671C are driven to open the portions on the distal side of the joint portions 681-1 outward. Moreover, the respective joint portions 681-2 of the finger portions 671A to 671C are driven to gently close the portions on the distal side of the joint portions 681-2 inward.

The state of the gripping portion 671 shown on the right side of Fig. 26 is a state of pinching a small object.

In this case, the respective joint portions 681-1 of the finger portions 671A to 671C are driven to open the portions on the distal side of the joint portions 681-1 outward in a manner similar to that when gripping the object. Moreover, the joint portions 681-2 of the finger portions 671A to 671C are driven to close the portions on the distal side of the joint portions 681-2 more inward than when gripping the object. The respective joint portions 681-3 of the finger portions 671A to 671C are driven to open the portions on the distal side of the joint portions 681-3 outward.

The finger portions 671A to 671C are also capable of performing different movements rather than performing the same movement.

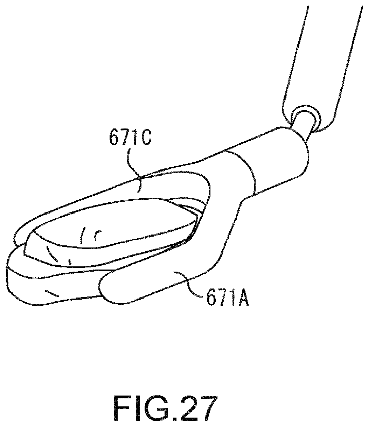

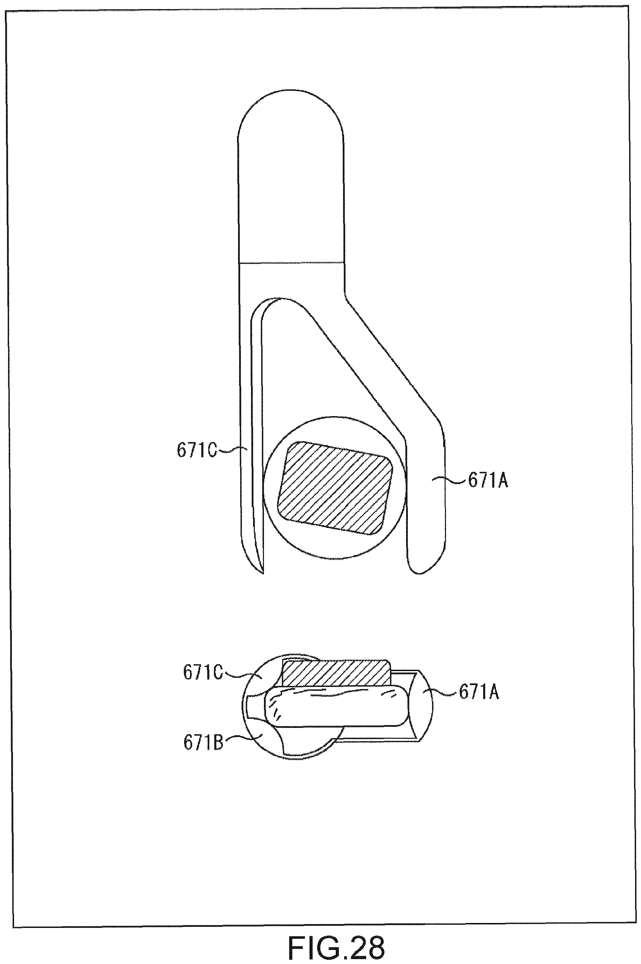

Figs. 27 and 28 are diagrams showing a state of gripping food ingredients.

In the example of Figs. 27 and 28, the manipulator attachment 651 grips a baguette on which a piece of smoked salmon is put by bending the finger portion 671A and making the finger portion 671B and the finger portion 671C substantially straight.

By driving the respective joint portions of the finger portions 671A to 671C as described above, various finger movements can be achieved.

For example, the gripping portion 671 of the manipulator attachment 651 may be used to grip a common cooking tool used by the user by driving the respective joint portions of the finger portions 671A to 671C. That is, for example, the gripping portion 671 is also capable of gripping a chopping board that is a common cooking tool, pulling out the chopping board, placing a food ingredient on the chopping board, gripping a common knife, and cutting the food ingredient on the chopping board.

Air suction ports are provided in the inner surfaces of the finger portions 671A to 671C. By suctioning an object to the inner surfaces of the finger portions 671A to 671C, it is possible to support force for gripping an object such as a food ingredient.

### - Cleaner Attachment

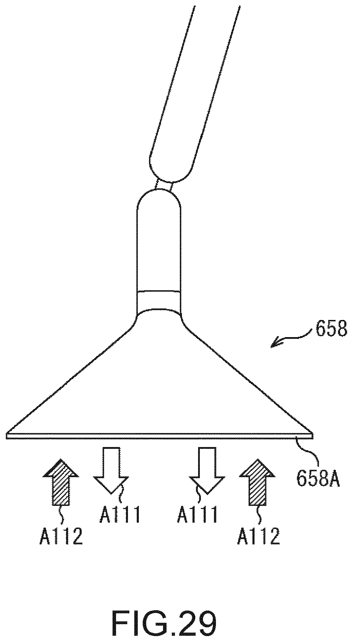

Fig. 29 is a diagram showing the cleaner attachment 658 in an enlarged state.

As shown in Fig. 29, a narrow opening 658A is formed at the distal end of the cleaner attachment 658 having a triangular shape.

As indicated by the arrows A111, hot water is ejected from the opening 658A. The surface of the top plate 21A is washed with the hot water ejected from the opening 658A. The hot water used for washing is suctioned into the opening 658A as indicated by the arrows A112. The hot water is ejected and suctioned, for example, simultaneously.

The robotic kitchen 1 can wash the surface of the top plate 21A by driving the cooking arm 51 to slide the distal end of the cleaner attachment 658 along the surface of the top plate 21A.

The surface of the top plate 21A may be washed by ejecting steam from the opening 658A.

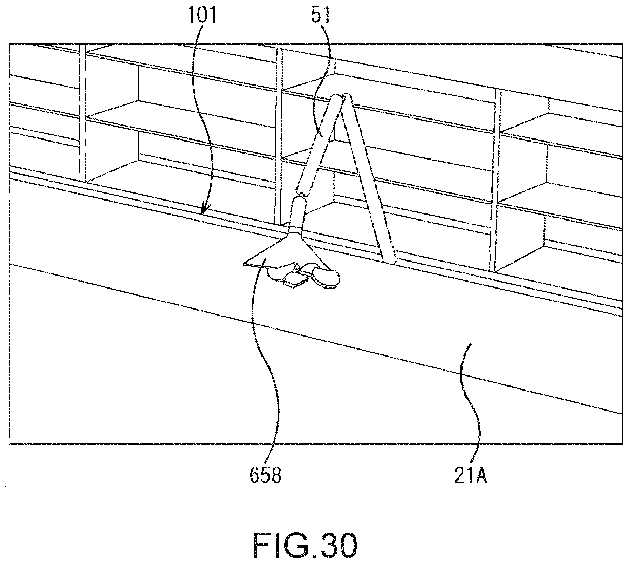

Fig. 30 shows another application example of the cleaner attachment 658.

As described above, the groove portion 101 is provided with the function of treating waste. As shown in Fig. 30, the cleaner attachment 658 is also used for introducing waste on the top plate 21A into the groove portion 101.

The robotic kitchen 1 can recognize the position of the waste and introduce the waste into the groove portion 101 by driving the cooking arm 51 to sweep from the position of the waste to the position of the groove portion 101 with the distal end of the cleaner attachment 658.

The cleaner attachment 658 having such a function is used not only for washing the surface of the top plate 21A, but also for washing other portions of the robotic kitchen 1 such as the inside of the groove portion 101 and the rail 102.

### - Cover Attachment

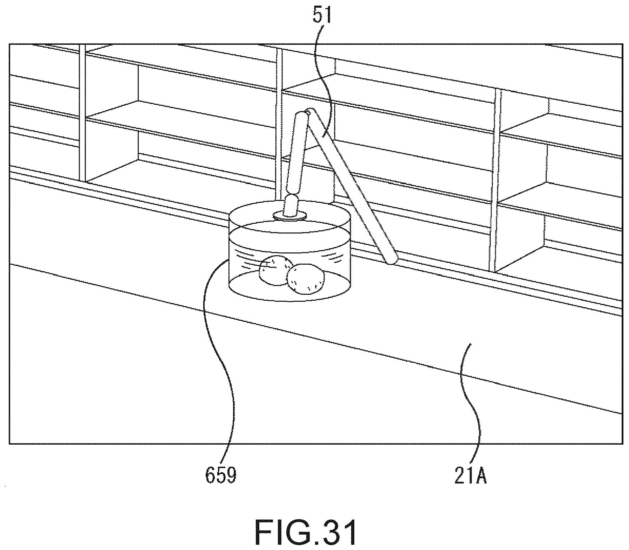

Fig. 31 is a diagram showing an application example of the cover attachment 659.

As shown in Fig. 31, the cover attachment 659 is used covering food ingredients placed on the top plate 21A, for example. In the example of Fig. 31, the cooking arm 51 makes the cover attachment 659 cover two potatoes.

In a case where the cover attachment 659 is made to cover them, the cover attachment 659 is filled with water supplied from the cooking arm 51 as shown in Fig. 31. After the cover attachment 7659 is filled with water, the air supplied from the cooking arm 51 causes convection inside the cover attachment 659 to wash the food ingredients.

When the washing of food ingredients has been completed, the water with which the cover attachment 659 is filled is suctioned by the cooking arm 51. After the water has been completely suctioned, the washed ingredients are removed by detaching the cover attachment 659.

In this manner, the cover attachment 659 is used for bringing the opening into close contact with the surface of the top plate 21A and washing the food ingredients in the inner space.

Moreover, the cover attachment 659 is used for smoking ingredients in the inner space.

In this case, the food ingredients are covered with the cover attachment 659 and smoking is performed in the inner space of the cover attachment 659 with smoke supplied from the cooking arm 51.

When a predetermined time has elapsed and smoking has been completed, the smoke with which the cover attachment 659 is filled is suctioned by the cooking arm 51. After the smoke is suctioned, the smoked food ingredients are removed by detaching the cover attachment 659.

The cover attachment 659 is also used for frying food ingredients in the inner space.

In this case, the food ingredients are covered with the cover attachment 659, and the frying is performed in the inner space of the cover attachment 659 with high-temperature edible oil sprayed from the cooking arm 51.

When a predetermined time has elapsed and the frying has been completed, the cooked food ingredients are removed by detaching the cover attachment 659.

In this manner, the cover attachment 659 is used for performing various tasks in the inner space. Since the task is performed in the closed space, it is possible to prevent the surrounding from becoming dirty.

The application of the cover attachment 660 is basically similar to the application of the cover attachment 659. For example, the cover attachment 659 is used in a case where the amount of food ingredient is large or a large food ingredient is used and the cover attachment 660 is used in a case where the amount of food ingredient is small or a small food ingredient is used.

The cover attachments 659 and 660 may be used in a manner that depends on applications, for example, such that the cover attachment 659 is used for washing and smoking food ingredients and the cover attachment 660 is used for frying food ingredients.

### <<3. Another Configuration Example of Robotic Kitchen>>

### <Outer Appearance Configuration>

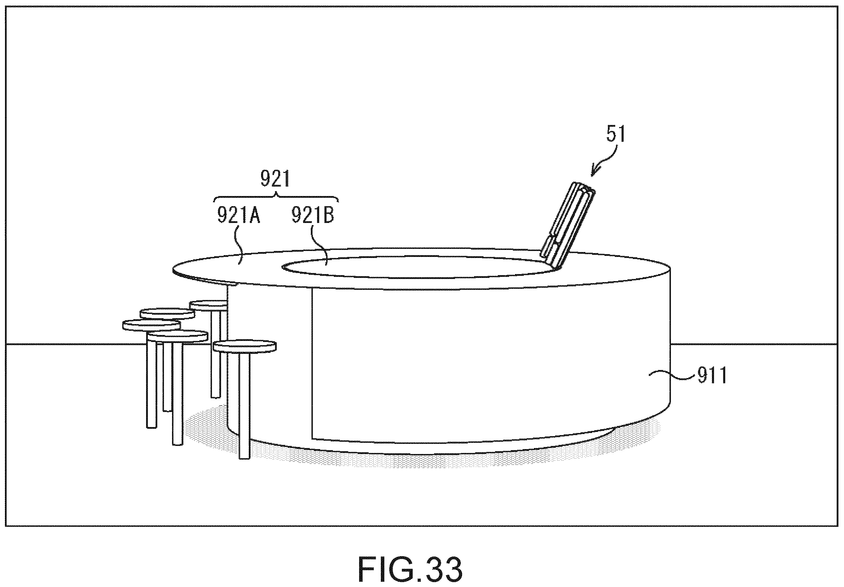

Figs. 32 and 33 are diagrams showing another example of the outer appearance of the robotic kitchen. The same components as those of the robotic kitchen 1 described above are denoted by the same reference numerals.

A robotic kitchen 901 of Figs. 32 and 33 is provided in a space in which many people are present, for example, a lounge of an airport, a party venue of a hotel, or the like. As a matter of course, the robotic kitchen 901 may be provided in a house as in the robotic kitchen 1.

As shown in Fig. 32, the robotic kitchen 1 has a cylindrical housing 911. The side shown in Fig. 32 corresponds to the front side of the housing 911. Various devices such as a computer are provided inside the housing 911.

A top plate portion 921 is provided in the upper surface of the housing 911 in a state in which a part thereof protrudes on the rear side as shown in Fig. 33. Chairs are arranged along the circumferential side surface on the rear side of the housing 911.

The top plate portion 921 is constituted by an annular top plate 921A and a circular top plate 921B. The top plate 921B is provided at a position surrounded by the top plate 921A.

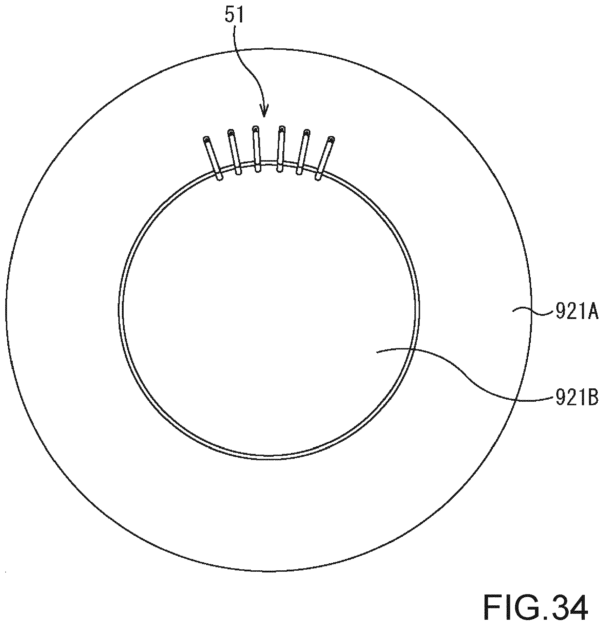

Fig. 34 is a top view of the robotic kitchen 901.

On the sleep mode, as shown in Fig. 34, the top plate 921A and the top plate 921B constituting the top plate portion 921 are provided at the same height with a slight gap therebetween. Since the top plate 921A and the top plate 921B are provided in contact at the same height, the upper surface of the housing 911 is a substantially flat surface.

The cooking arm 51 is provided along the gap between the top plate 921A and the top plate 921B. A rail is provided in the vicinity of the inner edge of the top plate 921A. The cooking arm 51 has a configuration similar to the configuration described above. In this example, six cooking arms 51 are provided.

When the operation mode of the robotic kitchen 901 is switched from the sleep mode to the active mode, a part of the top plate portion 921 moves such that cooking can be performed. The movement of the part of the top plate portion 921 may be performed in accordance with the cooking process described in the recipe data.

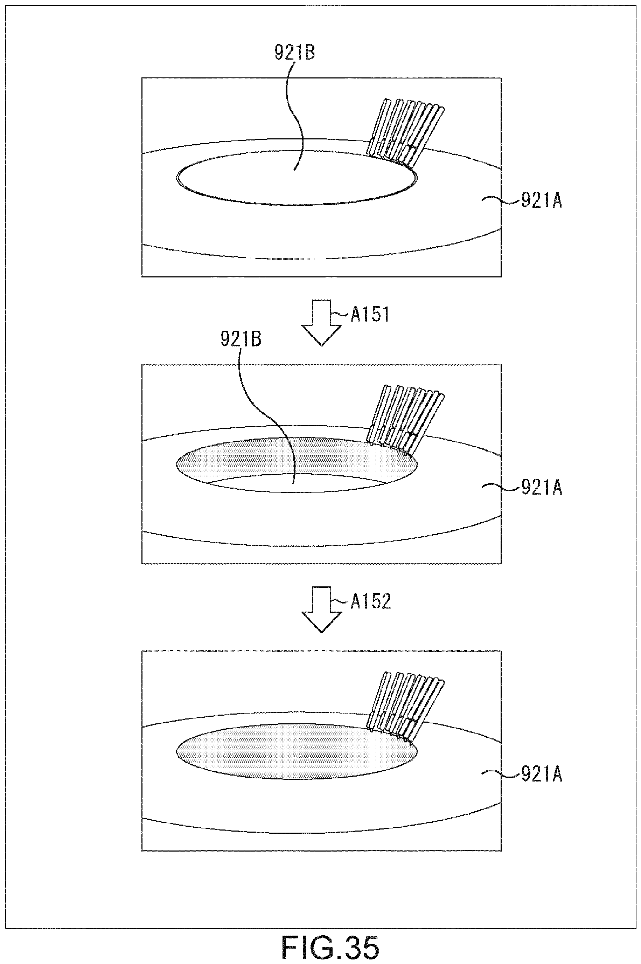

Fig. 35 is a diagram showing an example of the movement of the top plate portion 921 at the time of switching the operation mode.

The state shown in the upper part of Fig. 35 is a state before the movement of the top plate portion 921 is started.

When the operation mode is switched to the active mode, the top plate 921B gradually descends as indicated by the arrows A151 and A152. That is, the movement direction of the part of the top plate portion 921 of the robotic kitchen 901 is a vertically lower direction.

After the top plate 921B completely descends, the cooking arms 51 start their operations. The cooking is performed on the top plate 921A or the top plate 921B by using various attachments.

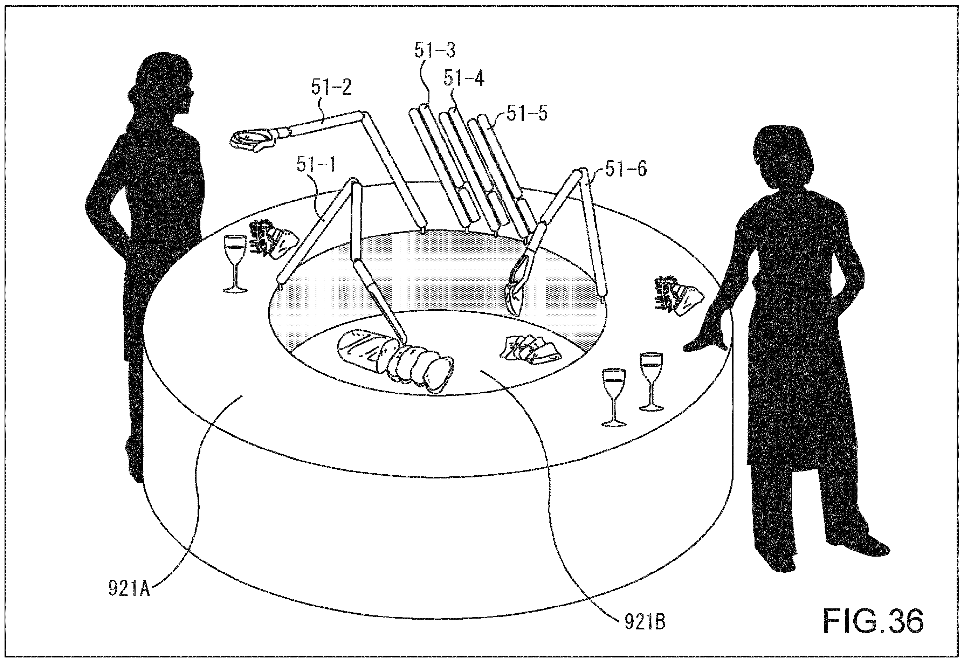

Fig. 36 is a diagram showing a state of the cooking arms 51 during operation.

In the example of Fig. 36, the task is performed by cooking arms 51-1, 51-2, and 51-6 of the cooking arms 51-1 to 51-6.

The cooking arm 51-1 to which the knife attachment is attached slices the baguette, and the cooking arm 51-6 to which the manipulator attachment is attached performs a task of lifting and transporting a piece of smoked salmon toward the baguette. Also in this example, the baguette on which the smoked salmon is put is cooked.

Moreover, the cooking arm 51-2 to which the manipulator attachment is attached passes the baguette on which the smoked salmon is put to a person present near the robotic kitchen 901.

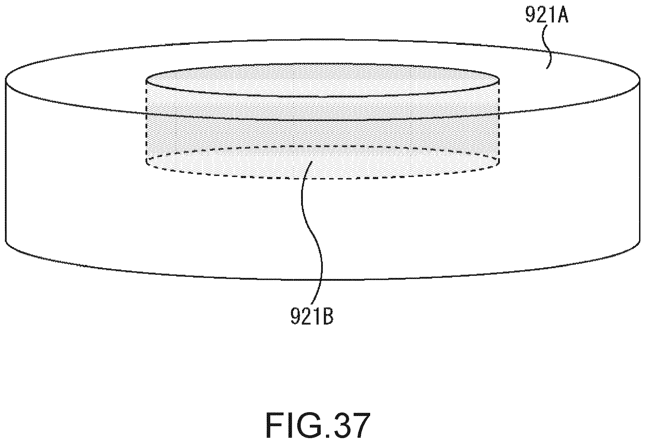

Fig. 37 is a diagram showing the position of the cooking space.

As shown by coloring in Fig. 37, a cylindrical space above the top plate 921B that has descended is a cooking space in which the cooking arms 51 perform cooking. In the robotic kitchen 901, the cooking space is formed by descending of the top plate 921B. Moreover, the space above the top plate 921A is the space in which dishes are placed and is also used as the cooking space. That is, since the space above the top plate 921A is mainly used as the place where the dishes are placed, the cylindrical space above the top plate 921B is used for the main cooking. However, a part of the space above the top plate 921A is also used as the cooking space when a collaborative task with the user is performed or when serving is performed in front of the user.

It should be noted that in Fig. 36, the dishes and glasses prepared in front of two people present near the robotic kitchen 901 are prepared by the cooking arms 51.

The dishes by the robotic kitchen 901 is provided by directly placing the dishes on the top plate 921A whose temperature can be partially adjusted, for example. A heating device using a heating wire or a cooling device of a predetermined type such as an air-cooled type and a forced-air-cooled type are provided inside the housing 911.

In this manner, the cooking by the robotic kitchen 901 is performed in either the cooking space above the top plate 921B formed in the center of the people surrounding the robotic kitchen 901 or the cooking space above the top plate 921A.

By performing the cooking such that the place easy to see by anyone surrounding the robotic kitchen 901 is used as a stage, the robotic kitchen 901 can show the state in which the cooking is performed as entertainment and produce the space.

Moreover, by performing the cooking in the space above the top plate 921B that has descended, the robotic kitchen 901 can secure a distance from the side surface of the housing 911 to the cooking space. By securing the distance from the side surface of the housing 911 to the cooking space, the cooking arms 51 performing the cooking and the attachments used in the cooking can be prevented from hitting the people.

### <Internal Configuration>

Next, an internal configuration of the robotic kitchen 901 will be described.

### - Arrangement Example of Cooking Assistance Units

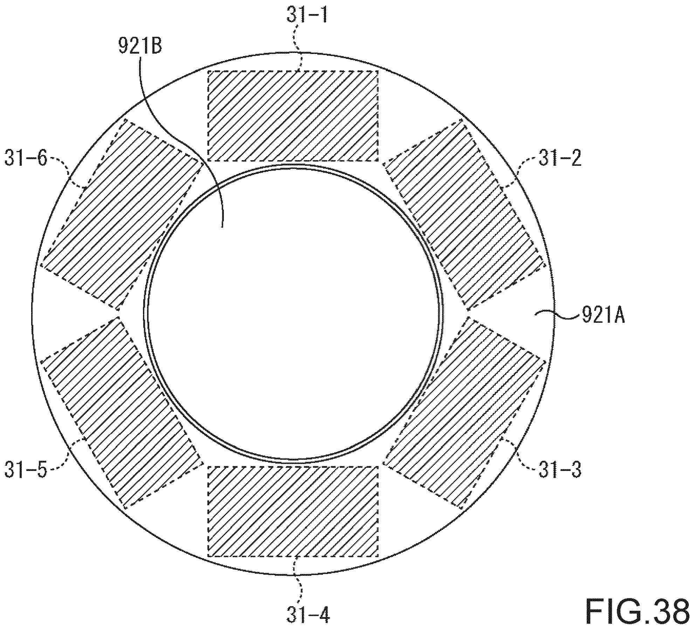

Fig. 38 is a diagram showing an arrangement example of the cooking assistance units.

As shown by hatching in Fig. 38, the cooking assistance units 31-1 to 31-6 having functions of assisting the cooking of the robotic kitchen 901 are provided inside the housing 911, arranged in an annular form. The positions of the cooking assistance units 31-1 to 31-6 are positions on the side of the bottom surface of the top plate 921A.

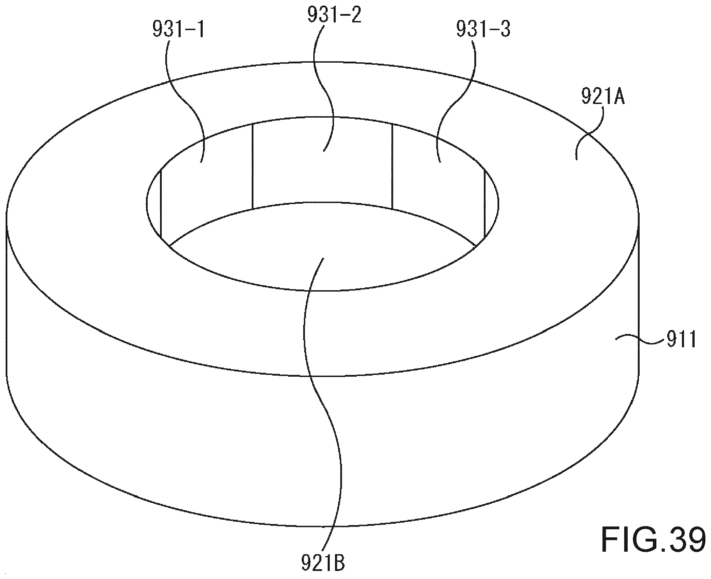

In Fig. 38, the illustration of the cooking arms 51 is omitted. The same applies to Fig. 39 and the like.

Fig. 39 is a perspective view showing an example of the inner circumferential side surface of the housing 911.

The inner circumferential side surface of the housing 911 that appears when the top plate 921B descends is constituted by a member serving as a door slidable in a predetermined direction. In the example of Fig. 39, door portions 931-1 to 931-3 are shown.

For example, when the door portion 931-1 is opened, the cooking assistance unit 31-1 of Fig. 38 appears. Moreover, when the door portion 931-2 is opened, the cooking assistance unit 31-2 appears. When the door portion 931-3 is opened, the cooking assistance unit 31-3 appears. The cooking assistance units 31-4 to 31-6 also appear when the door portion provided in front of each of them is opened. The cooking assistance units 31-1 to 31-6 are provided with their fronts directed to the center of the housing 911.

As described above, each of the cooking assistance units is provided on the side surface surrounding the cooking space such that it is accessible from the cooking space formed when the top plate 921B descends. Each cooking assistance unit appears together with the cooking space as the top plate 921B descends.

By providing the cooking assistance units to surround the cooking space, the robotic kitchen 901 can access a predetermined cooking assistance unit through the cooking arm 51 and perform the cooking by using the cooking assistance unit.

### - Arrangement Example of Groove

A groove portion having a washing function and a waste treatment function is also formed in the robotic kitchen 901.

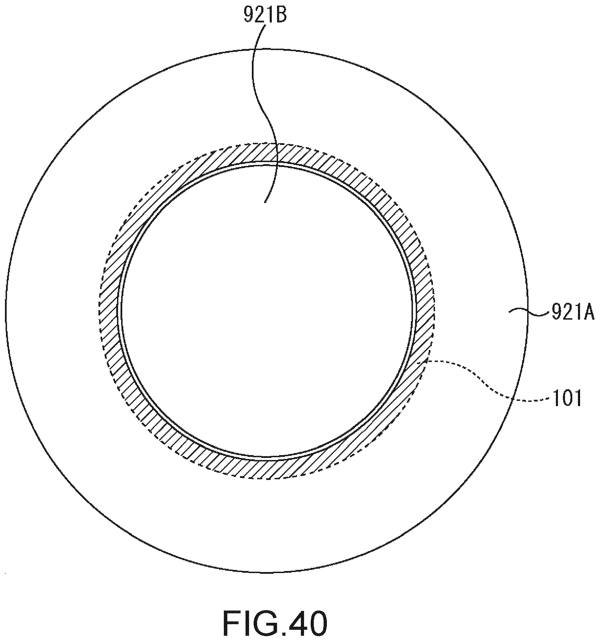

Fig. 40 is a diagram showing an arrangement example of the groove portion.

As shown by hatching in Fig. 40, the position of the groove portion 101 as viewed from above is a position below the vicinity of the boundary between the top plate 921A and the top plate 921B. The groove portion 101 is formed to surround the top plate 921B that has descended.

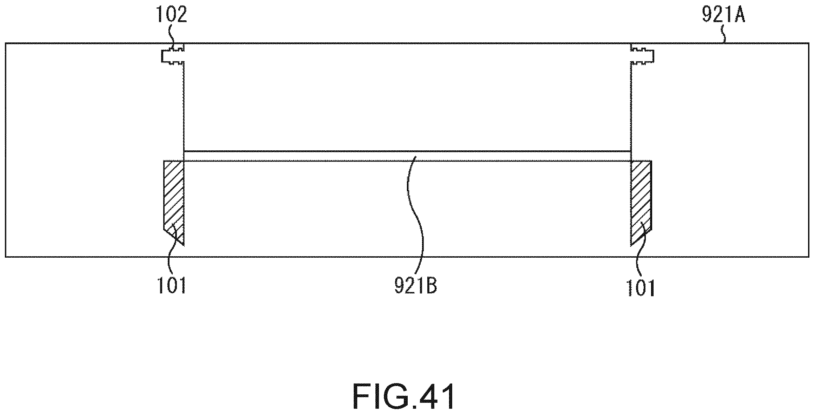

Fig. 41 is a cross-sectional view of the housing 911.

As shown by hatching, the groove portion 101 is formed at a position lower than the top plate 921B around the top plate 921B that has descended. Since the groove portion 101 is provided to surround the top plate 921B that has descended, the cooking arms 51 can wash the attachments and tableware and treat waste through the groove portion 101 from any position on the rail 102. The respective configurations described with reference to Figs. 10 and 13 are also provided in the groove portion 101 formed in the housing 911.

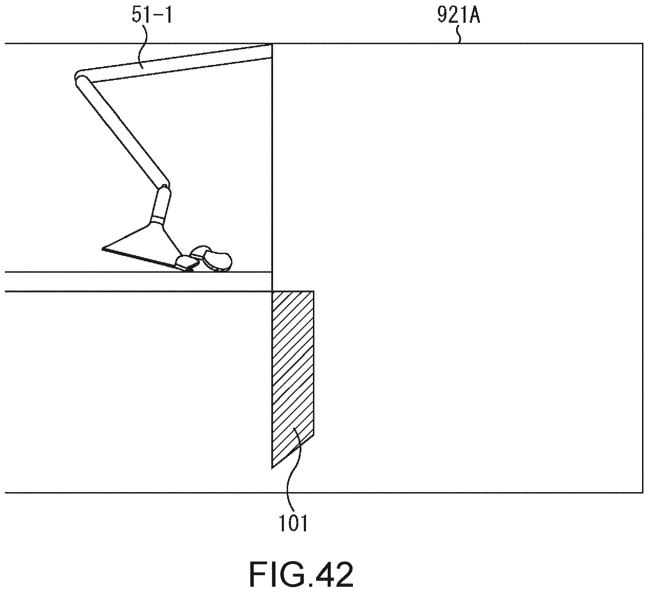

Fig. 42 is a diagram showing a state in which waste is treated.

As shown in Fig. 42, the robotic kitchen 901 may introduce the waste on the top plate 921B into the groove portion 101 by operating the cooking arm 51-1 to sweep the surface of the top plate 921B with the distal end of the cleaner attachment.

The groove portion 101 of the robotic kitchen 901 may have a function of housing the cooking arms 51. The groove portion 101 is used as a housing space for the cooking arms 51. The cooking arms 51 are housed in the groove portion 101 on the sleep mode or in accordance with the cooking process, for example.

As described above, the robotic kitchen 901 basically has a configuration similar to that of the robotic kitchen 1 while the shape of the housing and the arrangement of the respective configurations are different.

### <Internal Configuration>

### - Hardware Configuration

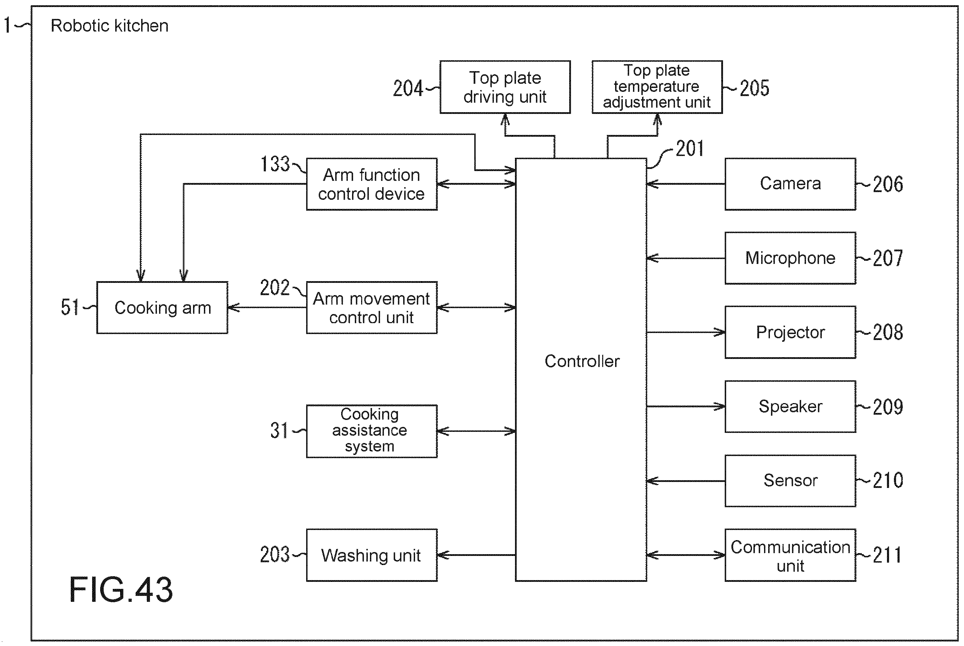

Fig. 43 is a block diagram showing a configuration example of hardware of the robotic kitchen 1. It should be noted that the hardware configurations of the robotic kitchen 1 and the robotic kitchen 901 are basically the same, and thus the robotic kitchen 1 will be described as an example here and the description of the robotic kitchen 901 will be omitted.

The robotic kitchen 1 is configured by connecting each unit to the controller 201. Of the configurations shown in Fig. 43, the same configurations as the configurations described above are denoted by the same reference signs. Duplicate descriptions will be omitted as appropriate.

The above-mentioned configurations such as the cooking assistance system 31, the cooking arms 51, and the arm function control device 133 are connected to the controller 201.

Moreover, the arm movement control unit 202, the washing unit 203, the top plate driving unit 204, and the top plate temperature adjustment unit 205 are connected to the controller 201. The camera 206, the microphone 207, the projector 208, the speaker 209, the sensor 210, and the communication unit 211 are connected to the controller 201.

The controller 201 is constituted by a computer including a central processing unit (CPU), a read only memory (ROM), a random access memory (RAM), a flash memory, and the like. The controller 201 executes a predetermined program by the CPU and controls general operations of the robotic kitchen 1. The computer constituting the controller 201 is housed inside the housing 11 and functions as a control device that controls the operation of the robotic kitchen 1.

The arm movement control unit 202 is constituted by a motor that moves the arm movement unit 131 along the rail 102, a sensor that detects the position of the arm movement unit 131, and the like.

The washing unit 203 is constituted by an ultraviolet disinfection machine, a hand dryer, and a water ejection device. The washing unit 203 is also provided with a sensor or the like that detects that the user's hands are put into the groove portion 101. Instead of providing all of the ultraviolet disinfection machine, the hand dryer, and the water ejection device, at least one of the ultraviolet disinfection machine, the hand dryer, or the water ejection device may be provided in the washing unit 203.

Ultraviolet rays generated by the ultraviolet disinfection machine constituting the washing unit 203 are emitted from the irradiation ports 111 provided in the groove portion 101. Moreover, the air jet generated by the hand dryer constituting the washing unit 203 is discharged from the ejection ports 112 provided in the groove portion 101. Water pressurized by the ejection device constituting the washing unit 203 is discharged from the ejection ports 113 provided in the groove portion 101.

The top plate driving unit 204 is constituted by a motor that drives the top plate 21B together with the cooking assistance system 31, a sensor that detects the position of the cooking assistance system 31 or the like, and the like.

The top plate temperature adjustment unit 205 is constituted by a heating device that warms the surface of the top plate 21A, a cooling device that cools the surface of the top plate 21A, a temperature sensor that measures the temperature of each portion of the top plate 21A, and the like. The temperature of the surface of the top plate 21A can be adjusted for each position. The temperature of the surface of the top plate 21A is adjusted in accordance with a cooking process, for example.

The camera 206 images a room where the robotic kitchen 1 is installed and outputs an image obtained by imaging to the controller 201. The camera 206 is provided at various positions such as the sides of the housing 11, the front of the cooking assistance system 31, the inside of the groove portion 101, and the ceiling from which the entire room where the robotic kitchen 1 is installed can be looked down at. Moreover, the camera 206 may be a normal camera that takes a two-dimensional image or may be a depth camera that takes a distance image, for example.

The microphone 207 detects the user's voice and outputs the user's voice data to controller 201. The microphone 207 also detects an environmental sound and the like of the room where the robotic kitchen 1 is installed. The data of the environmental sound is used for analysis of a peripheral state and the like.

The projector 208 projects various types of information such as a menu of dishes, information regarding a cooking process, and the like. Various requests for the robotic kitchen 1, such as a request for a refill, are also input by using a UI projected by the projector 208.

For example, the surface of the top plate 21A is used as a projection surface of information by the projector 208. Another flat surface such as a floor surface, a wall surface provided on the rear side of the robotic kitchen 1, and a surface of a top plate of the dining table provided in front of the robotic kitchen 1 may be used as the projection surface. Moreover, in the case of the robotic kitchen 901, the shelf board, the annular top plate 921A, or the circular top plate 921B of the cooking assistance unit 31 is used as the projection surface of the information by the projector 208.

Instead of or in addition to the projector 208, a display such as an LCD or an organic EL display may be provided at a predetermined position in the robotic kitchen 1.

The speaker 209 outputs a predetermined sound such as a synthesized voice, a sound effect, and BGM.

The sensor 210 is constituted by various sensors such as temperature and wetness sensors, a pressure sensor, an optical sensor, a distance sensor, a human sense, and a position measurement sensor. The detection by the sensor 210 is performed at a predetermined cycle. Data representing the detection result of the sensor 210 is output to the controller 201.

The communication unit 211 is a wireless communication module such as a wireless LAN module or a portable communication module corresponding to long term evolution (LTE). The communication unit 211 communicates with the transportation robot 2 and an external device such as a server on the Internet. The communication between the controller 201 and the cooking arms 51 may be performed by the communication unit 211.

Moreover, the communication unit 211 communicates with a portable terminal such as a smartphone and a tablet terminal used by the user. The user's request to the robotic kitchen 1 may be input by an operation on the portable terminal.

Moreover, the robotic kitchen 1 may notify the user by using screen display of the portable terminal or the like. For example, when a timing of a task to be performed in collaboration with the user comes, the user is notified of it by using the screen display of the portable terminal. In this manner, the robotic kitchen 1 has a function of cooperating with the user's portable terminal.

The camera 206, the microphone 207, the projector 208, the speaker 209, and the sensor 210 may be provided at positions distant from the robotic kitchen 1, rather than provided in the robotic kitchen 1.

Each device provided at the position distant from the robotic kitchen 1 is connected to the controller 201 via wireless communication.

For example, the projector 208 provided at the position distant from the robotic kitchen 1 projects predetermined information on a projection surface on the basis of information transmitted from the controller 201. Moreover, the sensor 210 provided at the position distant from the robotic kitchen 1 transmits detected data to the controller 201.

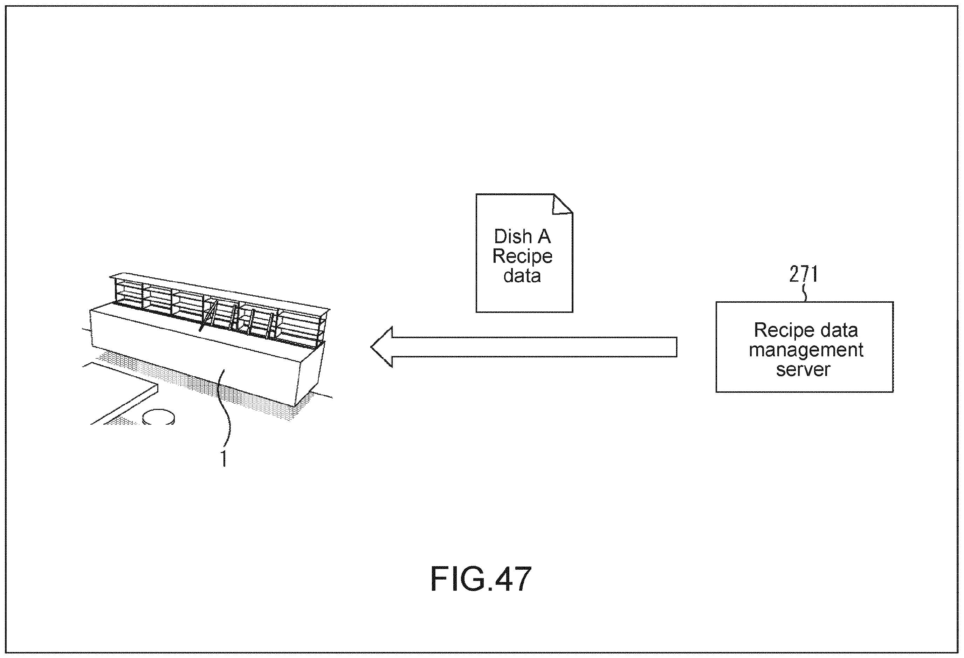

Fig. 47 is a block diagram showing a configuration example of hardware of the cooking arm 51.

The cooking arm 51 includes a controller 231, a communication unit 232, a sensor 233, and a motor 234.

The controller 231 includes a CPU, a ROM, RAM, a flash memory, and the like. The controller 231 executes a predetermined program and controls the driving of the motor 234 on the basis of the information transmitted from the controller 201 serving as a control device on the main body side of the robotic kitchen 1. Moreover, the controller 231 controls the driving of the motor 234 in accordance with the detection result of the sensor 233.

The controller 231 controls the driving of the attachment. The controller 231 functions as a cooking control unit that controls the cooking function of the attachment.

The communication unit 232 receives information transmitted from the controller 201 and outputs the received information to the controller 231. The controller 201 transmits, for example, information for controlling the driving of each joint portion and information for controlling the driving of the attachment.

Moreover, the communication unit 232 transmits information regarding the state of the cooking arm 51 to the controller 201 as appropriate. The information regarding the state of the cooking arm 51 includes information indicating a driving state of each joint portion, which is represented by the detection result of the sensor 233, and the like.

Thus, the communication unit 232 is connected to the controller 201 serving as the control device on the main body side of the robotic kitchen 1 and functions as a connection unit that transmits and receives various types of information to/from the controller 201.

The sensor 233 is constituted by a gyro sensor, an acceleration sensor, a touch sensor, a camera (image sensor), and the like, for example. During operation of the cooking arm 51, the sensor 233 detects angular velocity, acceleration, or the like of each joint portion and takes a peripheral image or the like and outputs information representing the detection result and the taken image to the controller 231.

Moreover, the sensor 233 also detects the user's contact state to each member of the cooking arms 51 during operation of the cooking arms 51 on the basis of the detection result of the acceleration sensor, the touch sensor, the camera, or the like, and outputs information representing the user's contact state to the controller 231. For example, the sensor 233 detects the contact state of the user performing a task in collaboration with the cooking arms 51.

The information representing the detection result of the sensor 233 is, as appropriate, output to the communication unit 232 from the controller 231 and transmitted to the controller 201 on the main body side. Based on the information detected by the sensor 233, the operation of the cooking arm 51 is controlled by the controller 201.

In addition to operating in accordance with the control of the controller 201, autonomous operating functions may be provided in the cooking arms 51.

The motor 234 is provided at each joint. The motor 234 performs a rotational operation about the axis in accordance with the control of the controller 231. The motor 234 functions as a drive unit that drives in accordance with the control of the controller 231.

An encoder that detects the amount of rotation of the motor 234, a driver that adaptively controls the rotation of the motor 234 on the basis of a detection result of the encoder is also provided in each joint portion.

### - Functional Configuration

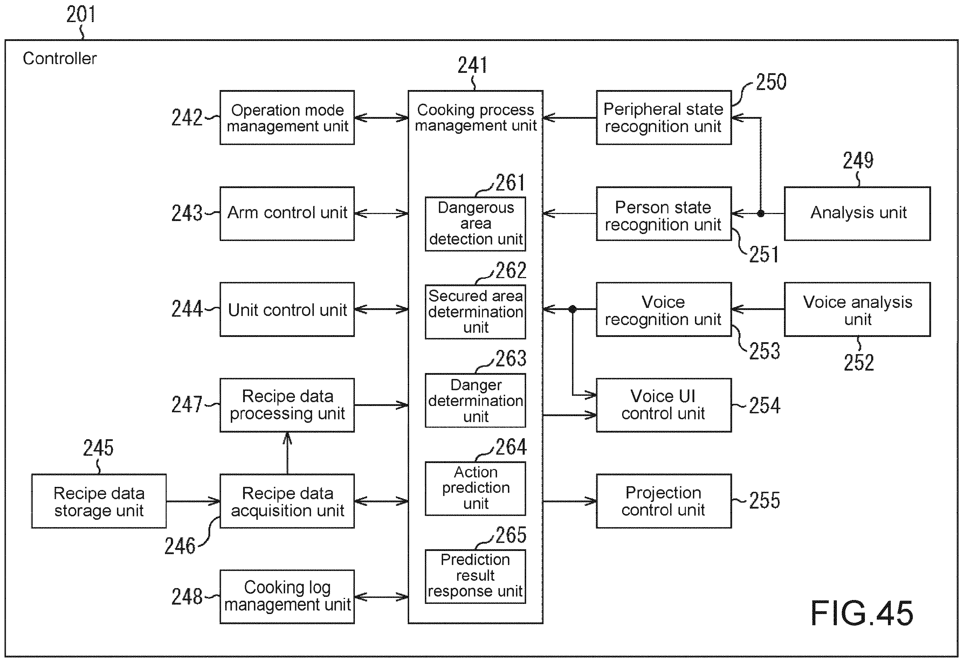

Fig. 45 is a block diagram showing a functional configuration example of the controller 201 of Fig. 43.

At least some of the functional units shown in Fig. 45 are realized by executing the predetermined program through the CPU of the computer constituting the controller 201.

A cooking process management unit 241, an operation mode management unit 242, an arm control unit 243, a unit control unit 244, a recipe data storage unit 245, a recipe data acquisition unit 246, a recipe data processing unit 247, a cooking log management unit 248 are realized in the controller 201. An analysis unit 249, a peripheral state recognition unit 250, a person state recognition unit 251, a voice analysis unit 252, a voice recognition unit 253, a voice UI control unit 254, and a projection control unit 255, are also realized in the controller 201.

The cooking process management unit 241 controls each unit in accordance with a cooking process described in the recipe data. The control on each unit by the cooking process management unit 241 is performed as appropriate in accordance with recognition results of the peripheral state recognition unit 250, the person state recognition unit 251, and the voice recognition unit 253.

Moreover, when performing a collaborative task in which some tasks of the cooking are performed in collaboration with the user, the cooking process management unit 241 manages the safety in order to avoid danger caused by the collaborative task. In addition, the cooking process management unit 241 predicts the user's action and performs indication according to a prediction result to the user.

The operation mode management unit 242 manages the operation mode of the robotic kitchen 1. The operation mode management unit 242 controls the top plate driving unit 204 to deform the robotic kitchen 1 in accordance with the operation mode.

For example, when the operation mode of the robotic kitchen 1 is a sleep mode, the operation mode management unit 242 causes the cooking assistance system 31 or the like to be housed inside the housing 11 as described with reference to Fig. 6 and the like.

Moreover, when the person state recognition unit 251 recognizes that a particular user is nearby, the operation mode management unit 242 switches the operation mode of the robotic kitchen 1 from the sleep mode to the active mode. The operation mode management unit 242 lifts the cooking assistance system 31 together with the top plate 21B to expose the cooking assistance space of the cooking assistance system 31, the groove portion 101, and the like. It should be noted that the cooking assistance space is a generic term for a space which appears when a part of the ceiling portion moves and in which the function of assisting the cooking is exerted. The cooking assistance space includes not only a space completely identical to the space in which the function of assisting the cooking is exerted but also a partial space included in such a space.

The arm control unit 243 controls the position on the rail 102 of the cooking arm 51 by driving the arm movement control unit 202.

Moreover, the arm control unit 243 controls the attitude and operation of the cooking arm 51 by driving each joint portion of the cooking arm 51.

The arm control unit 243 controls the driving of the attachment attached to the cooking arm 51.

The unit control unit 244 controls the driving of the unit of each unit. Each cooking assistance unit constituting the cooking assistance system 31, each device of the washing unit 203, the arm function control device 133, and the like are driven in accordance with the control of the unit control unit 244.

The recipe data storage unit 245 stores recipe data describing a cooking process. The recipe data storage unit 245 is realized as a memory of the controller 201.

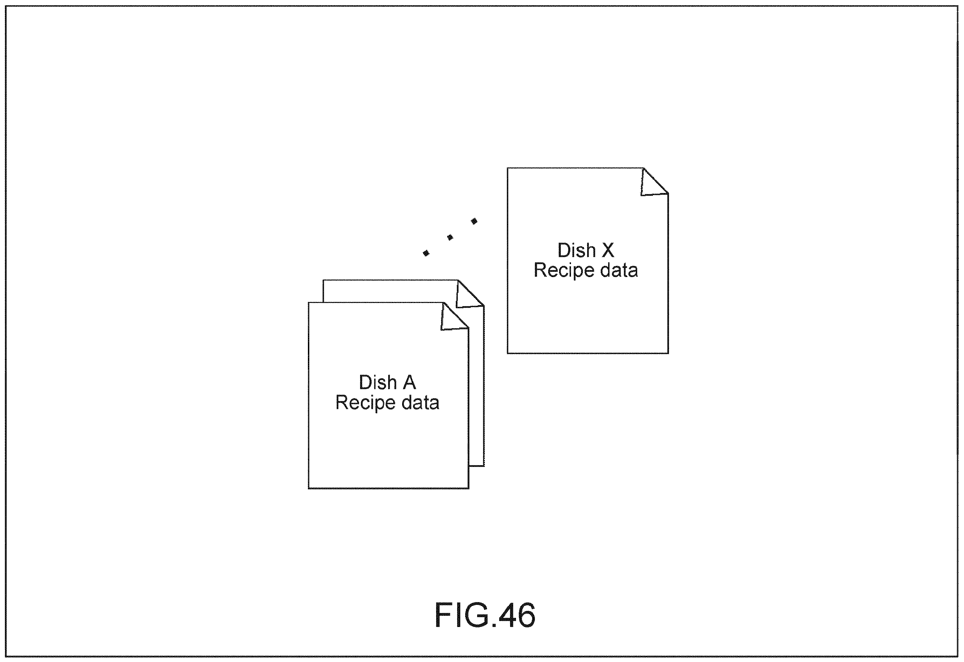

For starting the cooking, the recipe data acquisition unit 246 reads and acquires the recipe data for the dish from the recipe data storage unit 245. As shown in Fig. 46, the recipe data is prepared for each dish.

Which dish to make is selected by the user from a menu projected by the projector 208, for example.

Moreover, it is also possible to select which dish to make in accordance with food ingredients prepared in the cooking assistance system 31. In this case, ingredients prepared in the cooking assistance system 31 are recognized by the peripheral state recognition unit 250 and the cooking process management unit 241 selects a dish that can be made from the food ingredients prepared in the cooking assistance system 31.

Which dish to make may be selected in a manner that depends on the person who eats the dish. In this case, the person who is present near the robotic kitchen 1 is recognized by the person state recognition unit 251 and the cooking process management unit 241 selects the dish that matches the preference of the recognized person. In the cooking process management unit 241, information regarding the preference of a person living in a house where the robotic kitchen 1 is installed is registered. In this case, the cooking using the cooking arms 51 is performed in accordance with the preference of the person who eats the dish.

The cooking process management unit 241 may select the dish according to attributes of the person who eats the dish, such as gender and age or may select the dish according to characteristics of the person who eats the dish, such as personality and mood. The attributes or characteristics of the person who eats the dish are also recognized by the person state recognition unit 251.

The cooking process management unit 241 may select the dish according to the timing of eating the dish, such as a season, a temperature, and a time zone.

The recipe data acquisition unit 246 reads and acquires recipe data for the dish selected to be made from the recipe data storage unit 245 and outputs the recipe data to the cooking process management unit 241. The recipe data acquired by the recipe data acquisition unit 246 is also output to the recipe data processing unit 247 as necessary.

The recipe data may be acquired from the server connected via the Internet as shown in Fig. 47 rather than acquired from the recipe data storage unit 245 in the robotic kitchen 1.

In the recipe data management server 271 shown in Fig. 47, various types of recipe data are managed. Recipe data corresponding to the request from the recipe data acquisition unit 246 is transmitted to the robotic kitchen 1 from the recipe data management server 271 and is acquired by the recipe data acquisition unit 246.

The recipe data processing unit 247 processes the recipe data supplied from the recipe data acquisition unit 246 and outputs the processed recipe data to the cooking process management unit 241. The processing of the recipe data will be described later.

The cooking log management unit 248 manages a cooking log which is a history of cooking performed in the robotic kitchen 1. The cooking log records, for example, information regarding people who ate dishes, information regarding dishes made in the robotic kitchen 1, and information regarding cooking that represents processes by which the robotic kitchen 1 made the dishes.

The analysis unit 249 analyzes the image captured by the camera 206 and the detected data of the sensor 210. An analysis result of the analysis unit 249 is supplied to the peripheral state recognition unit 250 and the person state recognition unit 251.

The peripheral state recognition unit 250 recognizes a peripheral state on the basis of the analysis result of the analysis unit 249. The recognition result of the peripheral state is output to the cooking process management unit 241.

For example, the peripheral state recognition unit 250 recognizes a state of the cooking assistance system 31, such as the types and amount of food ingredients, the type and number of tableware, the type and number of cutlery, and the types of attachments prepared in the cooking assistance system 31. Moreover, when cooking with heat is performed in the cooking assistance unit 31-5 or the cooking assistance unit 31-6 of the cooking assistance system 31, the peripheral state recognition unit 250 also recognizes a state of the food ingredient when cooked with heat as the state of the cooking assistance system 31.

The peripheral state recognition unit 250 recognizes a state of the cooking arm 51, such as a position and an operation of each cooking arm 51 and a state of the food ingredient handled by the cooking arm 51.

The person state recognition unit 251 recognizes a state of the person on the basis of the analysis result of the analysis unit 249. In addition to the movement of the person, the person's gender, age, height, expression, emotion, progress of the meal, and the like are also recognized. The recognition result of the state of the person is output to the cooking process management unit 241.

For example, when performing a task in collaboration with the user, the person state recognition unit 251 recognizes a state of the task of the user, such as a standing position of the user and a movement of each site of the user's body.

As described with reference to Fig. 3, in a case where the robotic kitchen 1 performs the continuation of the task performed by the user, the cooking process management unit 241 learns the task performed by the user on the basis of a recognition result of the person state recognition unit 251. The cooking process management unit 241 controls the arm control unit 243 and the like, such that the continuation of the task is performed.

Moreover, in a case where the user performs tasting as described with reference to Fig. 4, the person state recognition unit 251 recognizes the result of tasting. Whether or not the user who performed the tasting feels delicious may be recognized on the basis of the user's expression.

The state of the user's task recognized by the person state recognition unit 251 is also used in the cooking process management unit 241 to secure the user's safety, to determine whether the user is performing the task incorrectly, or the like.

For example, in a case where the cooking arm 51 to which the knife attachment 653 is attached is performing the task, the range of motion of the cooking arm 51 is set as a dangerous area. Moreover, a range in which cooking is being performed with heat, a range in which the temperature is high because a dish cooked with heat has been placed just before, and a range in which a cooking tool including an edged tool is placed are also set as dangerous areas. The safety of the user is secured by outputting a warning or stopping the task of the cooking arm 51 when the user's body is present in the vicinity of the dangerous area. Since the task is performed in collaboration with the user, it is necessary to give consideration to such security. It should be noted that the details of the safety management for securing the safety will be described later.

Moreover, the person state recognition unit 251 recognizes a state of the person who is present near the robotic kitchen 1, such as the number of people who eat the dish, attributes of the person who eats the dish, and the like. For example, the person who is present near the robotic kitchen 1 is considered as the person who eats the dish.

The recognition of the peripheral state by the peripheral state recognition unit 250 and the recognition of the person state by the person state recognition unit 251 may be performed by using an analysis result of a voice detected by the microphone 207.

The voice analysis unit 252 analyzes the user's voice detected by the microphone 207 and outputs the analysis result to the voice recognition unit 253.

The voice recognition unit 253 recognizes the content of the user's utterance on the basis of the analysis result of the voice analysis unit 252. For example, a request to the robotic kitchen 1 is input by voice. The recognition result of the content of the user's utterance is output to the cooking process management unit 241 and the voice UI control unit 254.

The voice UI control unit 254 determines the content of a response to the user's utterance on the basis of the recognition result of the voice recognition unit 253 and outputs a synthesized voice from the speaker 209. Moreover, the voice UI control unit 254 outputs various synthesized voices of an inquiry or notification to the user and the like from the speaker 209 in accordance with the control of the cooking process management unit 241.

The projection control unit 255 controls the projection by the projector 208.

### <Recipe Data>

Here, recipe data describing the operation of each unit at the time of cooking will be described.

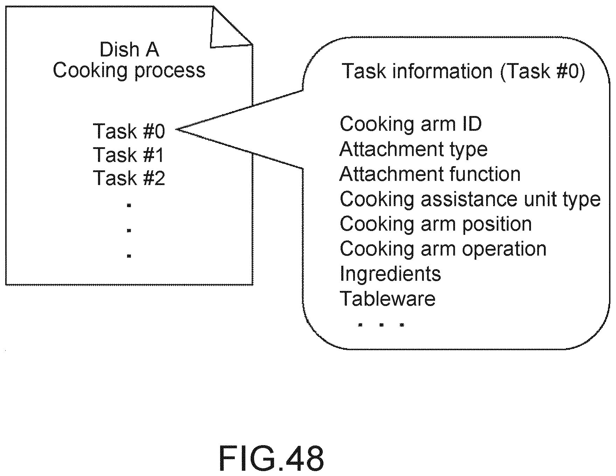

Fig. 48 is a diagram showing an example of the description of the recipe data.

As shown in Fig. 48, information regarding the cooking process of a dish A is described in the recipe data for the dish A. The cooking process represents the order of tasks. Types of tasks constituting the cooking process include a task performed by the robotic kitchen 1 (cooking arm 51) alone, a task performed in collaboration with the user, and the like.

Hereinafter, as appropriate, the task performed by the robotic kitchen 1 alone will be referred to as a solo task and the task performed in collaboration with the user will be referred to as a collaborative task.

The information regarding the cooking process includes a plurality of pieces of task information which is information regarding the task.

In the example in Fig. 48, task information regarding a task #0, task information regarding a task #1, and task information regarding a task #2, ... are described in the order of tasks.

As shown in the blowout, one piece of task information includes information regarding a cooking arm ID, an attachment type, an attachment function, a cooking assistance unit type, a cooking arm position, a cooking arm operation, ingredients, and tableware.

The cooking arm ID is an identifier of the cooking arm 51 that performs the task. Based on the cooking arm ID, the cooking arm 51 in charge of the task is determined. In a case where the plurality of cooking arms 51 performs a single task in cooperation with each other, a plurality of cooking arm IDs is described in the task information of the task.

The attachment type represents the type of attachment used for the task. The attachment represented by the attachment type is attached to the cooking arm 51 in charge of the task. It should be noted that in a case where the attachment is the manipulator attachment 651 or the like and where the gripping portion 671 grips and uses a generally-used cooking tool, information regarding the cooking tool gripped and used by the gripping portion 671 may be included as information regarding the attachment type.

The attachment function represents functions of the attachment used for the task, such as supply of water and suction of the air.

The cooking assistance unit type represents the type of cooking assistance unit 31 used for the task. For example, in a case of preparing tableware, the use of the cooking assistance unit 31-4 in which the tableware is stored is specified by the type of cooking assistance unit.

The cooking arm position represents a position on the rail 102 of the cooking arms 51 when performing the task. The position of the cooking arm 51 is controlled to move to a position represented by the cooking arm position.

The cooking arm operation represents the operation of the cooking arm 51 when performing the task. Specifically, the operation of the cooking arm 51 is represented by a time series of angles of each joint, torque of the motor 234 that drives the joint, and the like. Each portion of the cooking arm 51 is controlled to perform an operation represented by the cooking arm operation.

The ingredients represent ingredients such as seasonings and food ingredients used in the task.

The tableware represents tableware, cutlery, and the like used in the task.

Alternatively, in a case of the collaborative task, information regarding cooking tools that the user needs to use in the task may be included.

Such various types of information are described in the task information as information regarding each task.

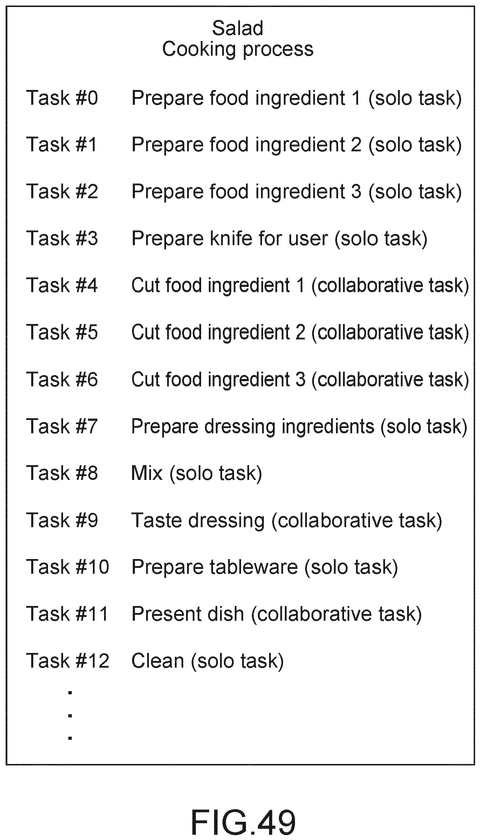

Fig. 49 is a diagram showing a specific example of the description of the recipe data.

The cooking process shown in Fig. 49 is a cooking process related to "salad". In the example of Fig. 49, tasks #0 to #12 are shown as the cooking process related to the "salad".

The task #0 is a task of preparing a food ingredient 1. The task #0 is a solo task performed by the robotic kitchen 1 alone.

In accordance with the description of the task information of the task #0, for example, the cooking arm 51-1 to which the manipulator attachment 651 is attached takes the food ingredient 1 which is a first food ingredient out of the cooking assistance system 31 and places the food ingredient 1 on the top plate 21A.

The task #1 is a solo task of preparing a food ingredient 2 which is a second ingredient. Like the task #0, the food ingredient 2 is prepared in accordance with the description of the task information of the task #1.

The task #2 is a solo task of preparing a food ingredient 3 which is a third ingredient. As in the task #0, the food ingredient 3 is prepared in accordance with the description of the task information of the task #2.

The "salad" made on the basis of the recipe data of Fig. 49 is a dish using three kinds of food ingredients.

Each operation is performed in parallel with other tasks as necessary. The task described later in the cooking process may be performed before the task described earlier in a manner that depends on the state of the cooking arm 51.

The task #3 is a solo task of preparing a knife for the user.

In accordance with the description of the task information of the task #3, for example, the cooking arm 51-1 to which the manipulator attachment 651 is attached takes the knife for the user out of the cooking assistance system 31 and presents the knife to the user. The user receives the presented knife.

The task #4 is a task of learning the user's movement of cutting the food ingredient 1 and cutting the food ingredient 1 by the same movement as the user's movement. The task #4 is a collaborative task performed in collaboration with the user.

In accordance with the description of the task information of the task #4, for example, a notification for prompting the user to cut the food ingredient 1 is made. Information regarding such a notification is described in the task information of the collaborative task.

The notification to the user is made, for example, by projecting predetermined information through the projector 208 or by outputting a synthesized voice from the speaker 209.

The notification to the user may be made by causing an LED provided at a predetermined position in the top plate 21A to emit light. The notification to the user may be made by sending information to the user's portable terminal and displaying the information on the screen.

In response to the notification from the robotic kitchen 1, the user cuts the food ingredient 1 by using the presented knife which is a cooking tool necessary for the task.

While the user cuts the food ingredient 1, the user's movement is recognized by the person state recognition unit 251 and learning is performed. When the learning is completed, the user is notified of the completion of the learning. The user who has received this notification can leave the continuation of the cutting of the food ingredient 1 up to the robotic kitchen 1.

In a case where it is requested by the user to perform the continuation of the cutting of the food ingredient 1, the food ingredient 1 is cut by the same movement as the movement of the user by the cooking arm 51-2 to which the knife attachment 653 is attached, for example.

The task #5 is a collaborative task of cutting the food ingredient 2. As in the task #4, the user's movement of cutting the food ingredient 2 is learned and the cutting of the food ingredient 2 is taken over by the cooking arm 51 on the basis of the learning result.

The task #6 is a collaborative task of cutting the food ingredient 3. As in the task #4, the user's movement of cutting the food ingredient 3 is learned and the cutting of the food ingredient 3 is taken over by the cooking arm 51 on the basis of the learning result.

The task #7 is a solo task of preparing ingredients of dressing.

In accordance with the description of the task information of the task #7, for example, the cooking arm 51-1 to which the manipulator attachment 651 is attached takes a seasoning out of the cooking assistance system 31. Moreover, the cooking arm 51-3 to which the shaker attachment 655 is attached opens the cover portion of the shaker attachment 655 and moves the shaker attachment 655 close to the cooking arm 51-1 gripping the seasoning. As described above, the task #7 is a task performed by the plurality of cooking arms 51 in cooperation with each other.

After the cooking arm 51-3 moves the shaker attachment 655 close to it, the cooking arm 51-1 pours the seasoning into the shaker attachment 655. Thus, for example, a plurality of seasonings may be sequentially poured into the shaker attachment 655.

The task #8 is a solo task of mixing the poured seasonings as ingredients of the dressing.

In accordance with the description of the task information of the task #8, for example, the cooking arm 51-3 shakes the shaker attachment 655 and mixing the seasonings poured into the shaker attachment 655. Olive oil and the like are also supplied into the shaker attachment 655 from the cooking arm 51-3.

The task #9 is a task of tasting the dressing. The task #9 is a collaborative task.

In accordance with the description of the task information of the task #9, for example, the cooking arm 51-3 presents the shaker attachment 655 with the cover opened to the user. Moreover, a notification for prompting to have a taste is made. In response to the notification from the robotic kitchen 1, the user tastes the dressing.

For example, when the user makes an utterance indicating that the taste is not bad, the task of tasting is completed.

The task #10 is a solo task of preparing tableware.

In accordance with the description of the task information of the task #10, for example, the cooking arm 51-1 to which the manipulator attachment 651 is attached takes a plate for presenting the salad out of the cooking assistance system 31 and places the plate on the top plate 21A.

The task #11 is a collaborative task to present the salad.

In accordance with the description of the task information of the task #11, the user is prompted to present the cut ingredients 1, 2, and 3 on the tableware. In response to the notification from the robotic kitchen 1, the user presents the cut ingredients 1, 2, and 3 on the plate.

In a case where it is determined on the basis of the recognition result of the person state recognition unit 251 that the presentation of the food ingredients has been completed, for example, the cooking arm 51-3 performs an operation of putting the dressing in the shaker attachment 655 on the salad.

The task #12 is a cleaning task. The task #12 is a solo task.

In accordance with the description of the task information of the task #12, for example, the cooking arm 51-4 to which the cleaner attachment 658 is attached introduces the remains of the cut food ingredients into the groove portion 101. Moreover, the surface of the top plate 21A is washed with hot water or steam.

The cooking of the "salad" is performed by the cooking process including the series of tasks described above. Information for achieving each task as described above is described in each piece of recipe data.

The content of each task changes in accordance with various conditions such as a condition of the person who eats the dish. Even in a case of making the same dishes, for example, the more people eat the dishes, the more food ingredients are needed and the more times the same task is repeated.

As recipe data of one dish, for example, a plurality of pieces of recipe data having different description contents in a manner that depends on a combination of conditions is prepared.

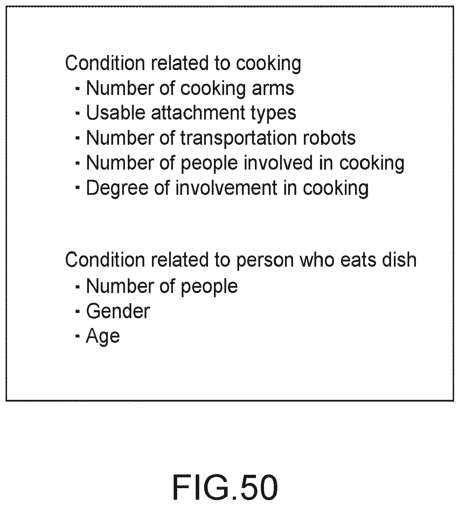

Fig. 50 is a diagram showing examples of conditions under which the description contents of the recipe data are determined.

As shown in Fig. 50, the conditions under which the description contents of the recipe data are determined include a condition related to the cooking and a condition related to the person who eats the dish.

The condition related to the cooking includes, for example, the number of cooking arms 51, the usable attachment types, the number of users (people) involved in the cooking, and the degree of involvement in the cooking.

The number and types of tasks that can be performed simultaneously vary in a manner that depends on the number of cooking arms 51.

Moreover, the type of task that can be performed varies in a manner that depends on the type of attachment prepared in the cooking assistance system 31.

The number and types of collaborative tasks that can be performed simultaneously vary in a manner that depends on the number of users involved in the cooking.

The number, contents, and percentage of collaborative tasks vary in a manner that depends on the degree of involvement in the cooking. For example, the higher the degree of involvement, the greater the number of collaborative task or the more advanced task is required for the user.

As described above, the user can select the degree of involvement by himself or herself. The degree of involvement is selected at a predetermined timing, for example, before the start of cooking.

The condition related to the person who eats the dish includes the number, gender, and age of people who eats the dish.

The amount of food ingredients required, the number of times the same task is repeated, the degree of seasoning, a presentation method, and the like vary in a manner that depends on these conditions.

Various conditions represented by information that can be acquired as information about the user, such as schedule information regarding the schedule of the person who eats the dish and biometric information, as well as conditions related to the outer appearance such as weight and height may be included as the condition related to the person who eats the dish.

For example, in a case where the time available for eating is short due to a plan, the cooking is performed by reducing the amount of food ingredients. Moreover, in a case where the blood pressure represented by the biometric information is high, the cooking is performed with reduced salt.

A plurality of pieces of recipe data whose description content differs in a manner that depends on such a combination of conditions are prepared as recipe data for each dish. For example, as recipe data for the dish A, pieces of data having different description contents which are as many as the number of combinations of conditions are prepared.

In a case where the dish to be made is selected, the recipe data acquisition unit 246 of Fig. 45 reads and acquires recipe data of the pieces of recipe data for the selected dish, which corresponds to the conditions, from the recipe data storage unit 245.

Instead of preparing a plurality of pieces of recipe data corresponding to the conditions in advance, recipe data corresponding to the conditions may be generated on the basis of one piece of recipe data serving as a reference.

In this case, the recipe data processing unit 247 processes one piece of recipe data serving as the reference acquired by the recipe data acquisition unit 246 to generate recipe data corresponding to the conditions.

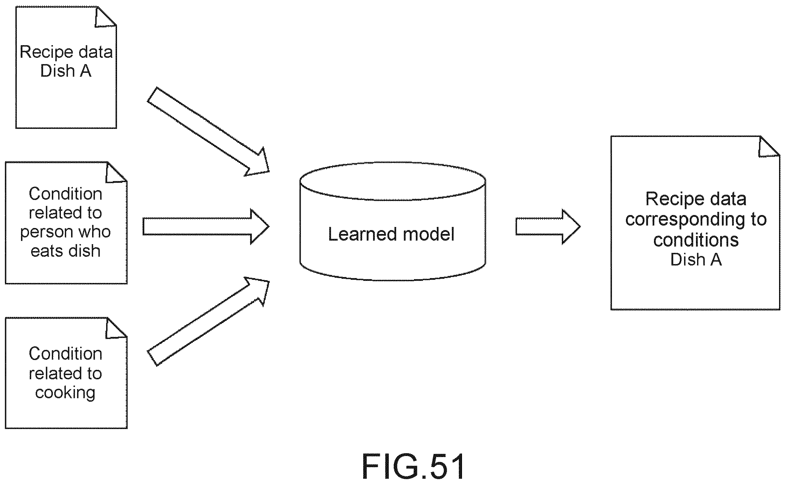

Fig. 51 is a diagram showing an example of processing the recipe data.

The learned model shown in Fig. 51 is a model for outputting recipe data corresponding to the conditions, using the condition related to the cooking, the condition related to the person who eats the dish, and the recipe data as inputs. For example, machine learning is performed by using various types of recipe data and conditions as inputs and a learned model is generated. Conditions other than the condition related to the cooking and the condition related to the person who eats the dish may be used for learning the model.

In a case where it is selected to make the dish A, the recipe data processing unit 247 inputs the recipe data for the dish A serving as a reference to a learned model together with the condition related to the cooking and the condition related to the person who eats the dish. The recipe data processing unit 247 acquires recipe data output as an estimation result as recipe data for the dish A, which corresponds to the conditions.

Such a model may be prepared in the recipe data processing unit 247 to process the recipe data.

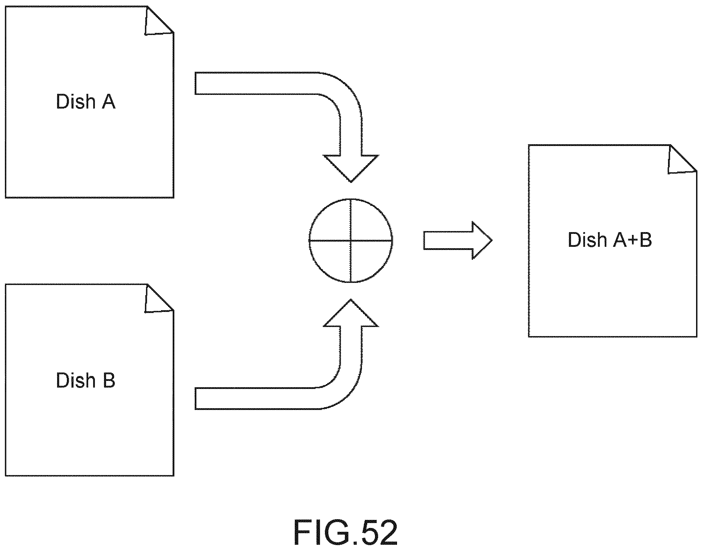

Fig. 52 is a diagram showing another example of processing the recipe data.

In a case of making a plurality of kinds of dishes, it is possible to make the dishes simultaneously by proceeding the tasks in parallel, instead of making the dishes sequentially one by one. The content of each task varies in a manner that depends on a combination of dishes made simultaneously.

For example, when it is selected to make dishes A and B, the recipe data processing unit 247 merges recipe data for the dish A and recipe data for the dish B to generate recipe data for making the dishes A and B as shown in Fig. 52.

In the recipe data after the merge, the tasks for making the dish A and the tasks for making the dish B are combined one after the other.

In a manner that depends on the number of cooking arms 51 and the usable attachment types, other tasks for making the dish B can be performed in some cases while a certain task for making the dish A is performed.

In a case of making a plurality of kinds of dishes, the robotic kitchen 1 can shorten the cooking time by changing the description contents of the recipe data such that the tasks for making the respective dishes are performed in parallel as necessary.

### - Safety Management

The cooking process management unit 241 includes a dangerous area detection unit 261, a secured area determination unit 262, a danger determination unit 263, an action prediction unit 264, and a prediction result response unit 265 as a configuration for managing the safety and supporting the user's movements.

The dangerous area detection unit 261 detects and sets a dangerous area on the basis of recognition results of the peripheral state recognition unit 250 and the person state recognition unit 251.

The dangerous area includes a range of motion of the cooking arm 51, a range in which cooking is being performed with heat, a range in which the temperature is high because a dish cooked with heat has been placed just before, a range in which oil is to spatter, a range in which a cooking tool including an edged tool is placed, and the like, for example.

Moreover, the dangerous area includes a range other than the ranges above as long as it is a range in which the user who performs the collaborative task is likely to encounter danger.

On the basis of the recipe data, the secured area determination unit 262 determines a range necessary for performing a task in the next process of the current process as a secured area. The secured area determination unit 262 determines the secured area in a size depending on the task content.

The cooking process management unit 241 indicates (projects) a secured area and a dangerous area through the projector 208 by controlling the projection control unit 255 on the basis of information regarding the dangerous area determined by the dangerous area detection unit 261 and the secured area determined by the secured area determination unit 262.

The danger determination unit 263 recognizes a distance between the set dangerous area and the user on the basis of the recognition results of the peripheral state recognition unit 250 and the person state recognition unit 251, and determines whether or not the danger is imminent on the basis of whether the distance between the set dangerous area and the user is smaller than a predetermined distance.

In a case where the danger determination unit 263 determines that the danger is imminent, the danger determination unit 263 controls the projection control unit 255 and the voice UI control unit 254 to change the indication state (projection state) of the projector 208 or indicate (notify) that the danger is imminent by a voice from the speaker 209.

The action prediction unit 264 predicts the user's action on the basis of the recognition results of the peripheral state recognition unit 250 and the person state recognition unit 251, and supplies the prediction results to the prediction result response unit 265.

More specifically, the action prediction unit 264 predicts the user's next action on the basis of the recipe data and the user's action. For example, machine learning may be used for the action prediction of the action prediction unit 264.

For example, when the action prediction unit 264 detects an action of taking a vegetable out of the cooking assistance unit 31 or the like, the action prediction unit 264 checks the type of taken-out vegetable against the recipe data and predicts an action that can be taken with the taken-out vegetable, for example, an action of cutting, peeling, boiling, or frying the vegetable.

On the basis of an action prediction result, the prediction result response unit 265 controls the unit control unit 244, the projection control unit 255, and the voice UI control unit 254 to operate the cooking assistance unit 31, change the projection state by the projector 208, or perform a response operation to support the user's action by a voice from the speaker 209.

For example, in a case where the action prediction result is to cut the taken-out vegetable, the prediction result response unit 265 performs a response operation to support the user such that the user can smoothly take out a cooking tool necessary for cutting the taken-out vegetable.

More specifically, the prediction result response unit 265 controls the unit control unit 244 to operate the cooking assistance system 31 to slide the front member of the cooking assistance unit 31-3 in which the knife and the chopping board are stored to open, such that the necessary cooking tools can be taken out.

At this time, the prediction result response unit 265 may control the projection control unit 255 and the voice UI control unit 254 to project the cooking assistance unit 31-3 in which the necessary cooking tools are stored with a color, a design, and the like easily visually recognizable and to output a guidance voice, for example, "The cooking assistance unit 31-3 stores knives and chopping boards." Such a response operation to support the user enables the user to quickly take out the necessary cooking tools. Therefore, the user can smoothly perform the cooking task.

It should be noted that in the user's action prediction, an assumed action is predicted and a response operation to support an action that is a prediction result is performed regardless of the recipe data or whether it is the solo task or the collaborative task.

Accordingly, the user can also cook a totally unrelated dish while the robotic kitchen 1 performs the cooking on the basis of the recipe data. Moreover, also in this case, the robotic kitchen 1 supports the cooking.

For example, the user can cause the robotic kitchen 1 to cook a main dish and the user himself or herself can cook a side dish at the same time.

Moreover, the action prediction unit 264 predicts not only cooking-related actions but also actions necessary for managing the safety, such as an action of approaching a dangerous area.

For example, the action prediction unit 264 stores the user's flow line near the robotic kitchen 1 and the user's movements in association with each other, and learns a movement pattern when moving on the flow line to approach the dangerous area. Then, the action prediction unit 264 predicts that the user will approach the dangerous area on the basis of the presence or absence of the movement pattern when moving on the flow line to approach the dangerous area.

In this case, the prediction result response unit 265 notifies the user that the user is approaching the dangerous area and the danger is imminent as one of the response operations to support the user's action on the basis of the action prediction result. The notification when the danger is imminent is basically similar to the notification in the processing in which the danger determination unit 263 notifies that the danger is imminent. Alternatively, the danger determination unit 263 may notify the user that the danger is imminent the dangerous area and the danger is imminent on the basis of an action prediction result of the action prediction result prediction unit 264.

<Indication Example of Secured Area and Dangerous Area (Example of Projection on Top Plate of Robotic Kitchen in Fig. 1) (Part 1-1)>

Next, an indication example of a secured area and a dangerous area to be projected on the top plate 21A of the robotic kitchen of Fig. 1 will be described.

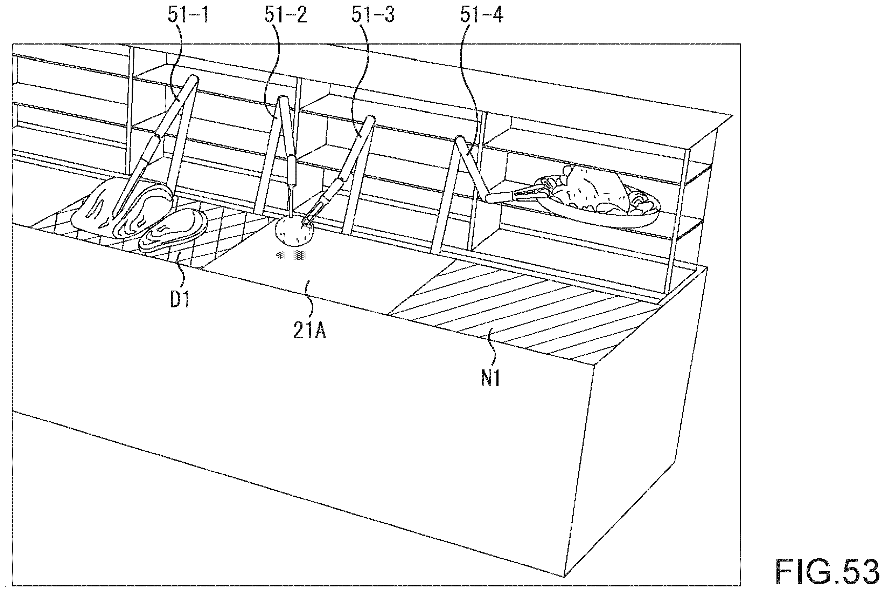

In a case where the range in which the knife attachment 653 is used by the cooking arm 51-1 at the left end in the figure is set as a dangerous area D1 for example as shown in Fig. 53, the projector 208 displays a color and a design indicating the dangerous area D1 in the corresponding range of the top plate 21A.

That is, the user can perform a free task by himself or herself in a space in which the task is not performed while the robotic kitchen 1 performs a task alone. At this time, the user may encounter danger of interfering with the movement of the cooking arm 51 or touching an area in which the top plate 21A is in a high temperature state or an edged tool like the knife attachment 653 or the like as a result of performing the task freely.

However, since the dangerous area D1 is set and put in a visually recognizable state as shown in Fig. 53, the user can recognize an area that becomes dangerous when the user approaches it, and the user can avoid the risk to encounter the danger by himself or herself.

As a result, the user can recognize the area in which the user is likely to encounter the danger. Therefore, the user can perform a free task that the user desires with the safety managed.

Moreover, as shown in Fig. 53, for example, a range in which the dish is moved by the cooking arm 51-1 at the left end in the figure in order to perform the next task is set as a secured area N1 and the projector 208 displays a color and a design indicating the secured area N1 in the corresponding range of the top plate 21A.

That is, the user can perform a free task in a space in which the task is not performed while the robotic kitchen 1 performs the task alone, but the movement of the cooking arm 51 may be interfered with after the next task process starts as a result of the user freely performing the task.

However, since the space in which the next task process is to be performed is indicated as the secured area N1, the user can predict the movement of the cooking arm 51 in the next task process. Accordingly, the user can consciously avoid the range of the secured area N1 also when the user performs the task freely.

As a result, the user can perform a free task with the safety managed while the cooking by the robotic kitchen 1 is smoothly achieved.

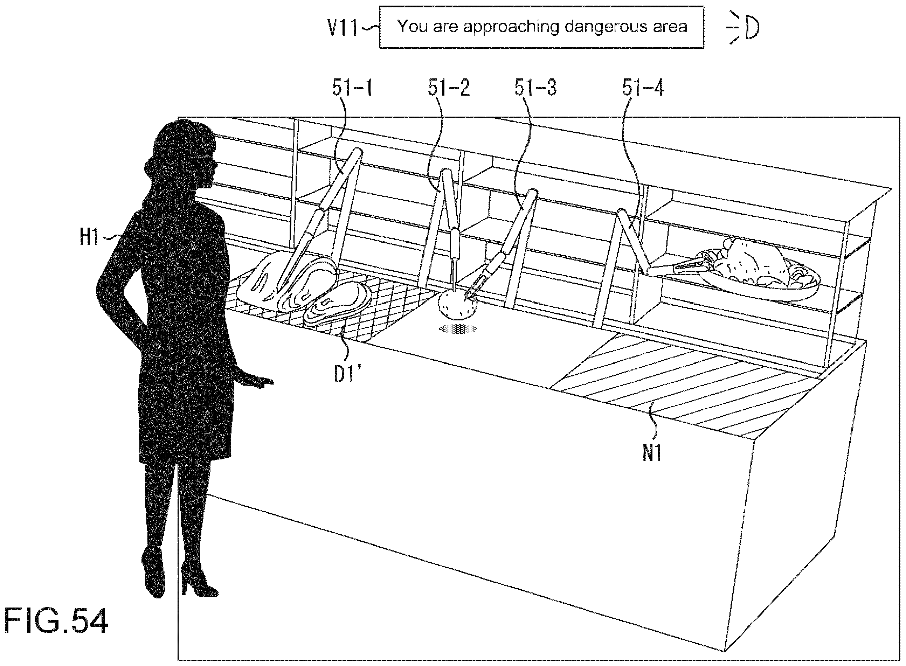

Moreover, for example, in a case where a user H1 is approaching the area set as a dangerous area D1 such that a distance between the user H1 and the area set as the dangerous area D1 is smaller than the predetermined distance as shown in Fig. 54, the danger determination unit 263 determines that the danger is imminent.

Then, the danger determination unit 263 controls the projection control unit 255 to change the projection state of the dangerous area D1 of Fig. 53 into an indication state indicating the danger, for example, an indication state as shown in the dangerous area D1' in Fig. 54 with a color close to the primary color of yellow or red, blinking, or the like, to notify the user that the danger is imminent.

Moreover, in a case where the danger is imminent, the danger determination unit 263 controls the voice UI control unit 254 to output a voice V11, for example, "You are approaching the dangerous area" as shown in Fig. 54, to notify the user that the danger is imminent.

As a result, the user can visually or auditorily recognize that the user is approaching the dangerous area even if the user is approaching the dangerous area by making a careless movement in a state in which the user is not aware of the dangerous area. Therefore, the safety can be managed.

It should be noted that as the design to be used when indicating the secured area or the dangerous area, patterns which is accustomed to the top plate 21A may be selected, and for example, a design which looks like a tablecloth at a glance may be used.

<Indication Example of Secured Area and Dangerous Area (Example of Projection on Cooking Assistance Unit in Fig. 1) (Part 1-2)>

Although the example in which the secured area and the dangerous area are indicated on the top plate 21A in the robotic kitchen 1 of Fig. 1 has been described above, the secured area and the dangerous area may be indicated in other ranges, and for example, the secured area and the dangerous area may be indicated on respective shelves of the cooking assistance units 31-1 to 31-6.

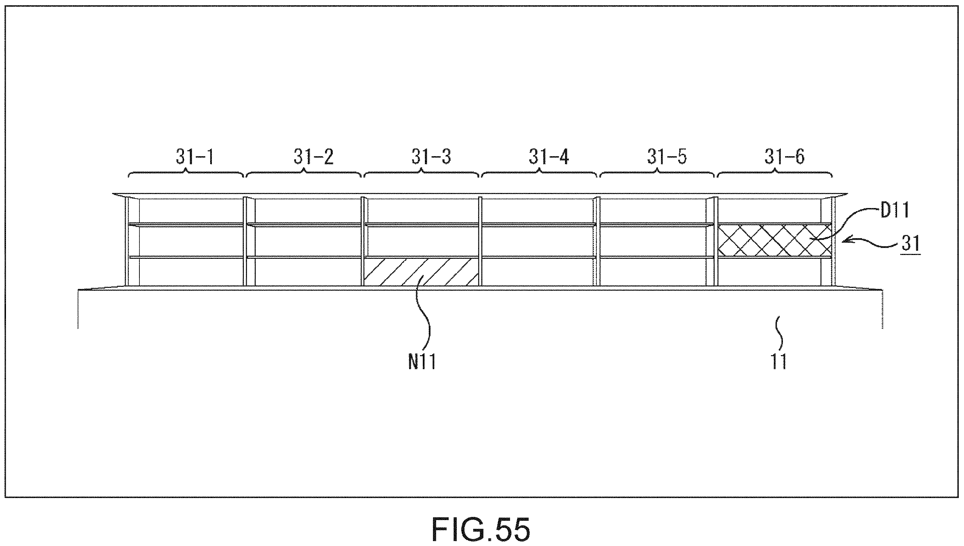

The secured area and the dangerous area may be projected on the shelves of the cooking assistance units 31-1 to 31-6 as shown in Fig. 55, for example.

That is, in a case where the cooking assistance unit 31-6 having an oven function is in a high temperature state and is considered as a dangerous area, a color and a design indicating that it is an dangerous area D11 are projected on the second shelf in a high temperature state as shown in Fig. 55.

Since the dangerous area D11 in this manner is projected, the user can recognize that a certain danger such as the high temperature exists in the range set as the dangerous area D11.

As a result, the user can recognize the area in which the user is likely to encounter the danger. Therefore, the user can perform a free task that the user desires with the safety managed.

Moreover, in a case where the cooking assistance unit 31-3 in which a target food ingredient to be used in the next task process is stored in a low temperature state is recognized as the secured area, a color and a design indicating that it is a secured area N11 are projected on the third shelf in which the target food ingredient is stored as shown in Fig. 55.

Since the secured area N11 is projected in this manner, the user can recognize that the cooking arm 51 may be operated in the shelf of the cooking assistance unit 31-3, which is set as the secured area N11, in order to take out the target food ingredient for the next task process.

As a result, the user can freely perform any task by avoiding the task near the secured area, with the safety managed by avoiding the interference with the cooking arm 51 in the next task process.

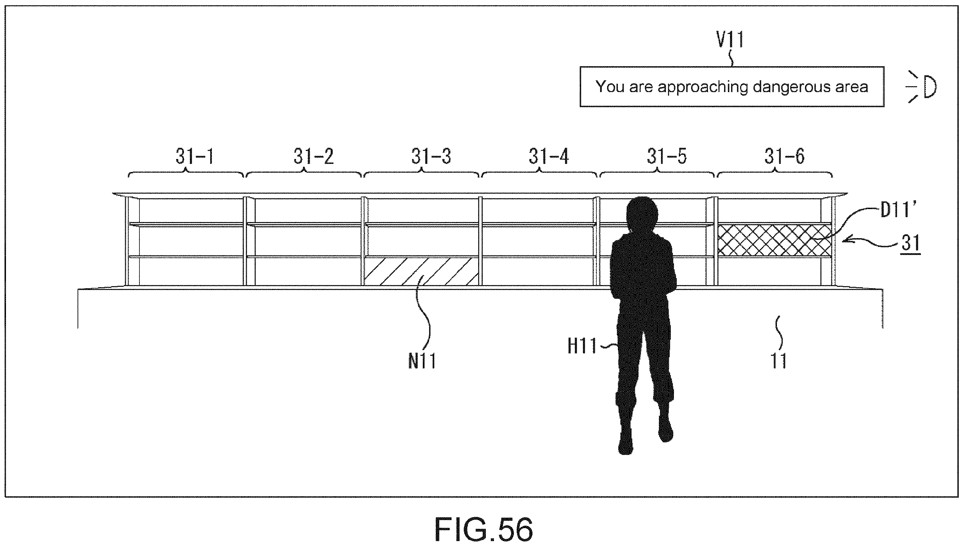

In addition, for example, in a case where it is determined that a user H11 is approaching an area set as a dangerous area such that a distance between the user H11 and the area set as the dangerous area is smaller than the predetermined distance and the danger is imminent, the projection state (indication state) of the dangerous area D11 in Fig. 55 is changed to indicate to the user that the danger is imminent as shown in a dangerous area D11' in Fig. 56.

More specifically, for example, the projection state of the dangerous area D11 in Fig. 55 is changed into a projection state with a color close to the primary color of yellow or red, blinking, or the like, to notify the user that the danger is imminent, as shown in the dangerous area D11' in Fig. 56.

Moreover, as shown in Fig. 56, a voice V11, for example, "You are approaching the dangerous area" is output to notify the user that the danger is imminent.

As a result, the user can visually or auditorily recognize that the user is approaching the dangerous area even if the user is approaching the dangerous area by making a careless movement in a state in which the user is not aware of the dangerous area. Therefore, the safety can be managed.

<Indication Example of Secured Area and Dangerous Area (Example of Projection on Top Plate of Robotic Kitchen in Fig. 32) (Part 1-3)>

Although the example in which the secured area and the dangerous area are indicated on the respective shelves of the cooking assistance units 31-1 to 31-6 in the robotic kitchen 1 of Fig. 1 has been described above, the secured area and the dangerous area may be indicated in other ranges, and for example, the secured area and the dangerous area may be indicated on the top plate 921A of the robotic kitchen 901 of Fig. 32.

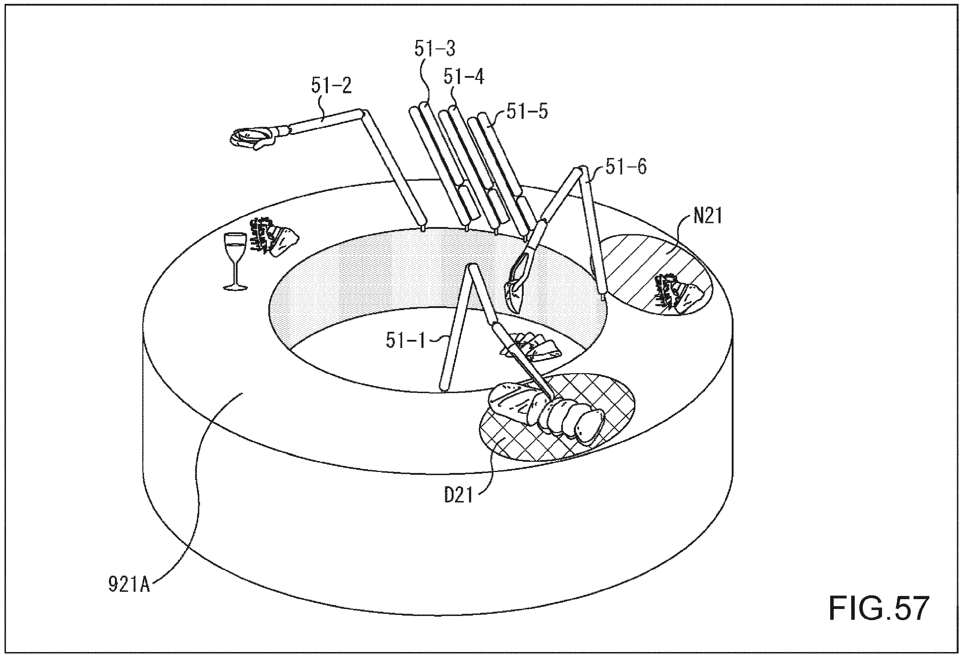

That is, in a case where the vicinity of a place on the top plate 921A of the robotic kitchen 901, where a baguette is being sliced with the knife attachment attached to the cooking arm 51-1 is regarded as a dangerous area as shown in Fig. 57, a dangerous area D21 is projected on the top plate 921A.

The dangerous area D21 is projected with a color and a design with which the dangerous area D21 can be recognized as the dangerous area. Since the dangerous area D21 is projected in this manner, the user can recognize that the range set as the dangerous area D21 is a dangerous range in which the cooking arm 51-1 to which an edged tool like the knife attachment is attached is being operated.

As a result, the user can recognize the area in which the user is likely to encounter the danger. Therefore, the user can perform a free task or eating and drinking that the user desires with the safety managed.

Moreover, as shown in Fig. 57, the area to be used in the next task process is recognized as a secured area, and a color and a design indicating that it is a secured area N21 are projected.

Since the secured area N21 is projected in this manner, the user can recognize that the cooking arm 51 may be operated in the next task process within the range set as the secured area N21.

As a result, the user can avoid the interference with the cooking arm 51 in the next task process by avoiding the task or eating and drinking near the secured area. Therefore, the user can freely perform some task or eat and drink with the safety managed.

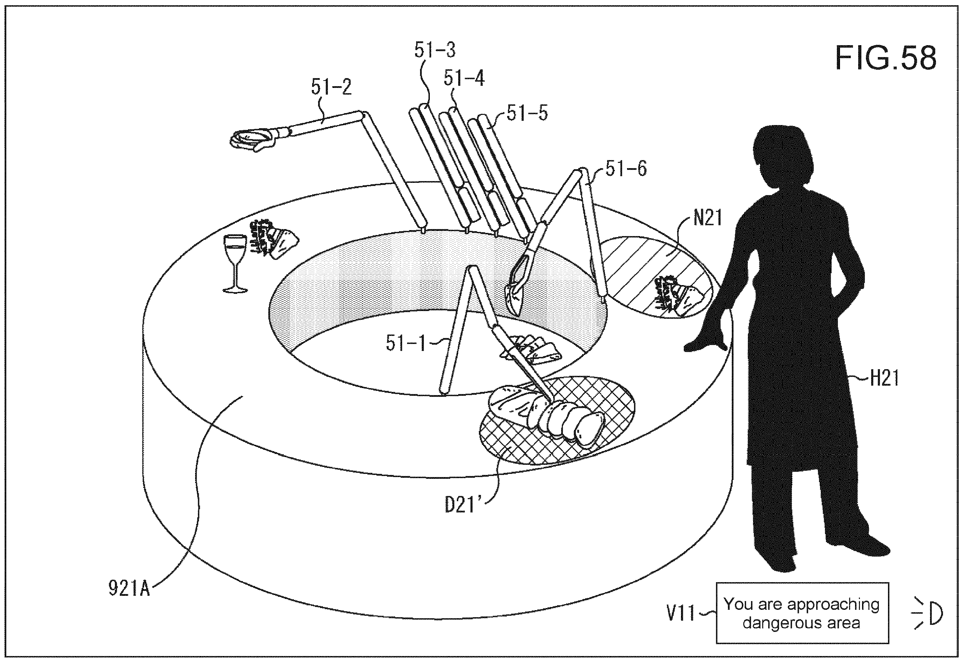

In addition, for example, as shown in Fig. 58, in a case where it is determined that a user H21 is approaching the area set as the dangerous area D21 such that a distance between the user H21 and the area set as the dangerous area D21 is smaller than the predetermined distance and the danger is imminent, the projection state of the dangerous area D21 of Fig. 57 is changed to indicate to the user that the danger is imminent.

More specifically, for example, the projection state of dangerous area D21 of Fig. 57 is changed into a projection state with a color close to the primary color of yellow or red, blinking, or the like, to notify the user that the danger is imminent, as shown in a dangerous area D21' of Fig. 58.

Moreover, as shown in Fig. 58, a voice V11, for example, "You are approaching the dangerous area" is output by a voice to notify the user that the danger is imminent.

As a result, the user can visually or auditorily recognize that the user is approaching the dangerous area even if the user is approaching the dangerous area by making a careless movement in a state in which the user is not aware of the dangerous area. Therefore, the safety can be managed.

### <Application Examples of Indication of Secured Area and Dangerous Area>

Although the example in which the projector 208 indicates the secured area and the dangerous area has been described above, the secured area and the dangerous area may be enabled to be recognized by a physical method such that the safety can be managed.

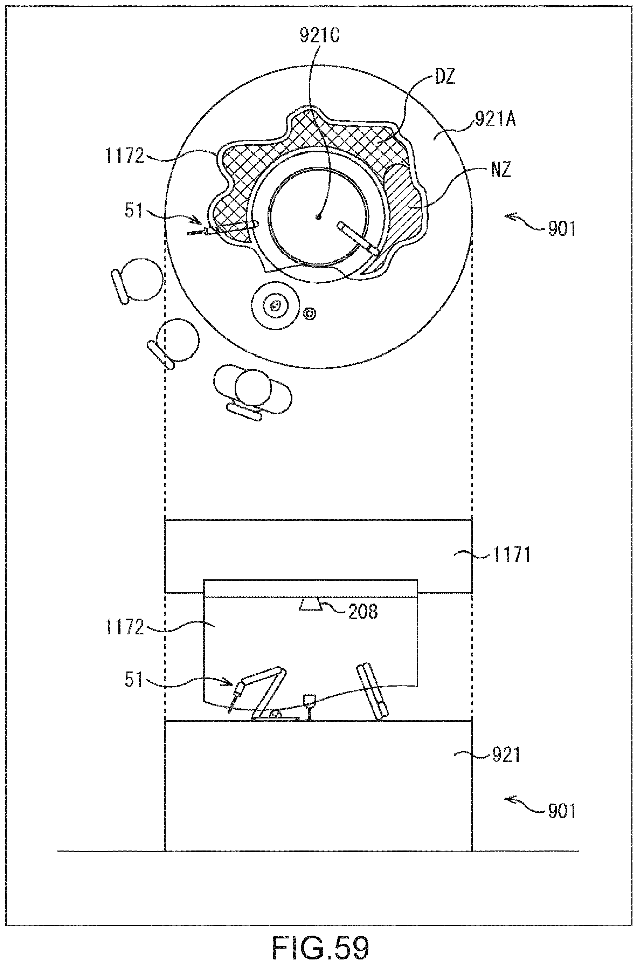

For example, as shown in Fig. 59, a cylindrical cover 1171 may be provided above the top plate portion 921, the cylindrical cover 1171 having a diameter of substantially the same size as the outer circumferential portion, and a curtain 1172 capable of changing the distance from the center position of the circular top plate portion 921 may be further provided inside the cover 1171. It should be noted that in Fig. 59, the upper part of the figure shows a top view of the curtain 1172 and the top plate portion 921 and the lower part of the figure shows a side view of the cover 1171, the curtain 1172, and the top plate portion 921.

The curtain 1172 is configured to be capable of variably changing the distance from a center 921C of the top plate portion 921 within the range of the top plate 921A. Moreover, the curtain 1172 is fire-proof and heat resistant and also knife-proof.

Moreover, the curtain 1172 is suspended via, for example, a magnet-like fastener that is movable in a state in which the fastener attracts a metal ceiling plate in the cover 1171 provided facing the top plate portion 921. The movement of the fastener is controlled by the dangerous area detection unit 261, secured area determination unit 262, and the danger determination unit 263, and the fastener can be moved in the attracting state in the cover 1171.

With such a configuration, the curtain 1172 is operated to cover and hidden a secured area NZ and a dangerous area DZ as shown in the upper part of Fig. 59 on the basis of the information regarding the dangerous area set in the dangerous area detection unit 261 and the secured area determined by the secured area determination unit 262.

That is, as shown in the upper part of Fig. 59, the curtain 1172 changes its shape to isolate the space above the secured area NZ and the dangerous area DZ from the space in which the user performs a task or eating or drinking.

With such a configuration, even if the user inserts the hand into the secured area NZ or the dangerous area DZ, it can be recognized that the user has inserted the hand into the secured area NZ or the dangerous area DZ because the hand comes in contact with the curtain 1172 before the hand interferes with the cooking arm 51.

Therefore, by touching the curtain 1172, the user can recognize the danger and move the hand away from the secured area NZ or the dangerous area DZ Moreover, even if the user completely inserts the hand into the secured area NZ or the dangerous area DZ, the user can be prevented from being damaged, for example, getting burned, getting cut by a knife, or being spattered with food ingredients and the like in the dangerous area because the curtain 1172 is fire-proof and heat resistant and also knife-proof.

The secured area NZ and the dangerous area DZ may be projected by the projector 208, and the danger determination unit 263 may operate the curtain 1172 to cover and hidden the dangerous area DZ as shown in the upper part of Fig. 59 such that the user does not encounter the danger when the user approaches a position whose distance from the dangerous area DZ is smaller than the predetermined distance. It should be noted that the projector 208 is installed downward from the ceiling portion of the cover 1171 as shown in the lower portion of Fig. 59.

### <<4. Operation of Robotic Kitchen>>

Here, the operation of the robotic kitchen 1 (or 901) having the above-mentioned configuration will be described.

### <Recipe Data Acquisition Processing>

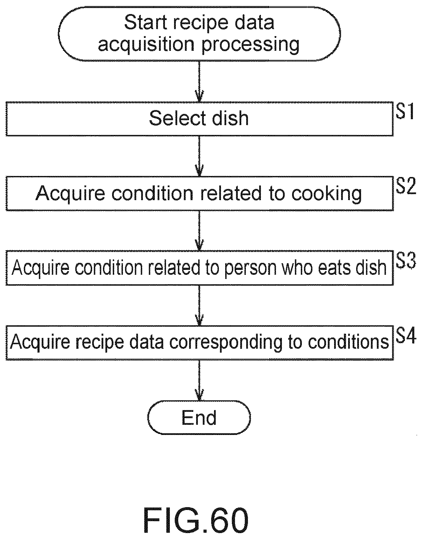

First, the processing of the robotic kitchen 1 that acquires the recipe data will be described with reference to the flowchart of Fig. 60.

In Step S1, the cooking process management unit 241 selects which dish to make.

In Step S2, the cooking process management unit 241 acquires the condition related to the cooking. Here, conditions such as the number of cooking arms 51 and the usable attachment types are detected and acquired.

In Step S3, the cooking process management unit 241 acquires the condition related to the person who eats the dish. Here, conditions such as the number, gender, age, and the like of people are detected and acquired.

In the acquisition of the condition related to the cooking and the acquisition of the condition related to the person who eats the dish, the recognition result of the peripheral state by the peripheral state recognition unit 250, the recognition result of the state of the person by the person state recognition unit 251, and the like are used as appropriate. The information regarding the dish selected to be made and the information regarding the conditions acquired by the cooking process management unit 241 are supplied to the recipe data acquisition unit 246.

In Step S4, the recipe data acquisition unit 246 reads and acquires recipe data corresponding to the conditions from the recipe data storage unit 245. The recipe data corresponding to the conditions may be generated by the recipe data processing unit 247 by performing the processing as described above.

The recipe data acquired by the recipe data acquisition unit 246 is supplied to the cooking process management unit 241, and then used for the cooking.

### <Cooking Processing (Part 1)>

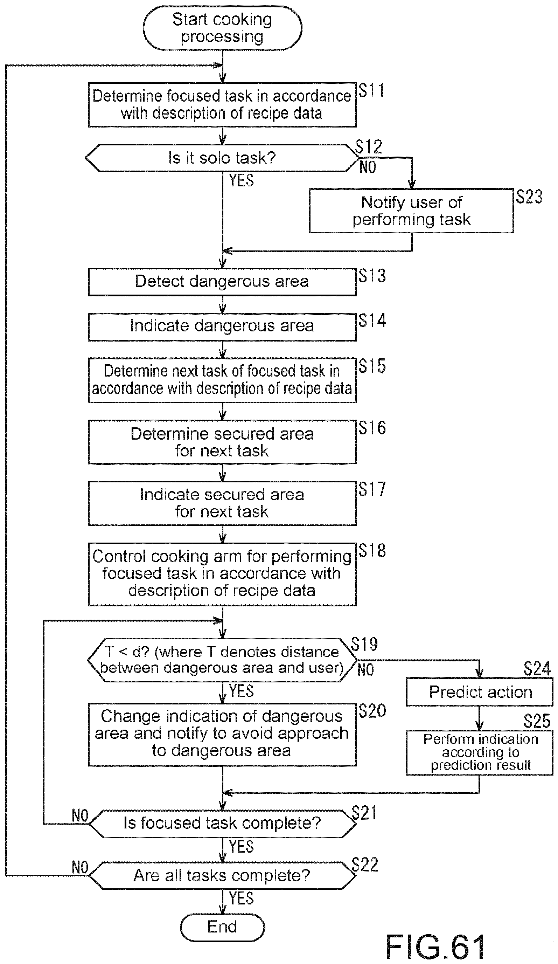

Next, cooking processing (Part 1) of the robotic kitchen 1 that performs the cooking will be described with reference to the flowchart of Fig. 61.

The processing of Fig. 61 is started at a predetermined timing such as a timing at which it is detected that the user who performs the collaborative task is present near the robotic kitchen 1, for example.

In Step S11, the cooking process management unit 241 focuses on one task described in the recipe data. Hereinafter, the task to be focused will be also referred to as the focus task.

In Step S12, the cooking process management unit 241 determines whether or not the focus task is a solo task performed by the robotic kitchen 1 alone.

In a case where it is determined in Step S12 that the focused task is the solo task, the processing proceeds to Step S13.

In Step S13, the dangerous area detection unit 261 detects and sets the dangerous area on the basis of the recognition results of the peripheral state recognition unit 250 and the person state recognition unit 251.

In Step S14, the cooking process management unit 241 controls the projection control unit 255 to project the dangerous area detected by the projector 208 to the corresponding range.

With this processing, the user can visually recognize the dangerous area.

In Step S15, the secured area determination unit 262 determines the next task on the basis of the recipe data.

In Step S16, the secured area determination unit 262 determines, on the basis of the recipe data, a range necessary for the next task to be performed as a secured area. It should be noted that in a case where the next process does not exist, the processing of Steps S15 and S16 is skipped.

In Step S17, the cooking process management unit 241 controls the projection control unit 255 to project the secured area determined by the projector 208 to the corresponding range. At this time, for example, information indicating time and the like for predicting how many minutes later the secured area will be used may be projected on the secured area in accordance with the recipe data or the progress of cooking. More specifically, for example, a message, for example, "It is an area to be used about 10 minutes later" may be projected on the secured area.

With this processing, the user can visually recognize the range in which the cooking arm 51 may be operated in the next task as the secured area.

In Step S18, the arm control unit 243 controls the position and operation of each cooking arm 51 in accordance with the description of the recipe data. The task information of the focused task is supplied to the arm control unit 243 from the cooking process management unit 241.

In Step S19, the danger determination unit 263 recognizes the distance between the set dangerous area and the user on the basis of the recognition results of the peripheral state recognition unit 250 and the person state recognition unit 251 and determines whether or not a distance T between both is smaller than a predetermined distance d.

In a case where it is determined in Step S19 that the distance T between the dangerous area and the user is smaller than the predetermined distance d and the danger is imminent, the processing proceeds to Step S20.

In Step S20, the danger determination unit 263 controls the projection control unit 255 and the voice UI control unit 254 to change the projection state of the dangerous area by the projector 208 or notify that the danger is imminent by a voice from the speaker 209.

In Step S21, the cooking process management unit 241 determines whether or not the focus task is complete, and if not, the processing returns to Step S19.

Moreover, in a case where it is determined in Step S19 that the distance between the dangerous area and the user is not smaller than the predetermined distance d and the danger is not imminent, the processing proceeds to Step S24.

In Step S24, the action prediction unit 264 predicts the user's action on the basis of the recognition results of the peripheral state recognition unit 250 and the person state recognition unit 251 and supplies a prediction result to the prediction result response unit 265.

In Step S25, the prediction result response unit 265 controls the unit control unit 244, the projection control unit 255, and the voice UI control unit 254 on the basis of the action prediction result to operate the cooking assistance system 31, to change the projection state by the projector 208, or to perform a response operation to support the user's action by a voice from the speaker 209.

It should be noted that in a case where the next action cannot be predicted in Step S24, the processing of Steps S24 and S25 may be skipped.

That is, the processing of Steps S19 to S21, S24, and S25 are repeated until the focus task is completed.

In a case where it is determined in Step S21 that the focus task is complete, the processing proceeds to Step S22.

In Step S22, the cooking process management unit 241 determines whether or not all tasks are complete. In a case where it is determined in Step S22 that all the tasks are not complete, the cooking process management unit 241 returns to Step S11 and repeats the subsequent processing using the next task as a focus task.

In a case where it is determined in Step S12 that the focus task is not a solo task, the focus task is considered as a collaborative task and the processing proceeds to Step S23.

In a case where the focused task is a collaborative task, in Step S23, the cooking process management unit 241 controls the voice UI control unit 254 and the projection control unit 255 to notify the user that a predetermined task is to be performed, and the processing proceeds to Step S13.

Accordingly, the collaborative task is performed by the user and the robotic kitchen 1.

After the solo task or the collaborative task is performed in the processing of Steps S13 to S21 and S23 to S25, the processing proceeds to Step S22. In a case where it is determined in Step S22 that all the tasks are complete, the processing ends.

With the above processing, in a case where the secured area and the dangerous area are indicated to the user and where the approach to the dangerous area is detected, the indication is performed such that the user can visually or auditorily recognize that the user is approaching to the dangerous area. As a result, the cooking can be enjoyed with the safety managed.

Moreover, with the above processing, the user's action is predicted and a support operation for the predicted action is performed, such that the user can smoothly use a necessary cooking tool.

In addition, in a case where the user's action is predicted and the user is predicted to approach the dangerous area, a support operation for the predicted action is performed, such that the user can visually or auditorily recognize that the user is approaching the dangerous area.

It should be noted that although the example in which the dangerous area is constantly indicated has been described above, the dangerous area may be indicated when the distance between the user and the dangerous area is equal to or smaller than the predetermined distance and the dangerous area may be prevented from being indicated when the distance between the user and the dangerous area is not equal to or smaller than the predetermined distance may be employed.

As a result, it is possible to enable the user to enjoy the pleasure and happiness of cooking while safely providing a new cooking experience.

### <Indication Example of Secured Area and Dangerous Area (Example of Projection on Top Plate of Robotic Kitchen in Fig. 1) (Part 2-1)>

Although the example in which the secured area and the dangerous area are indicated has been described above, the indication of the dangerous area may be changed in accordance with the distance between the user and the dangerous area.

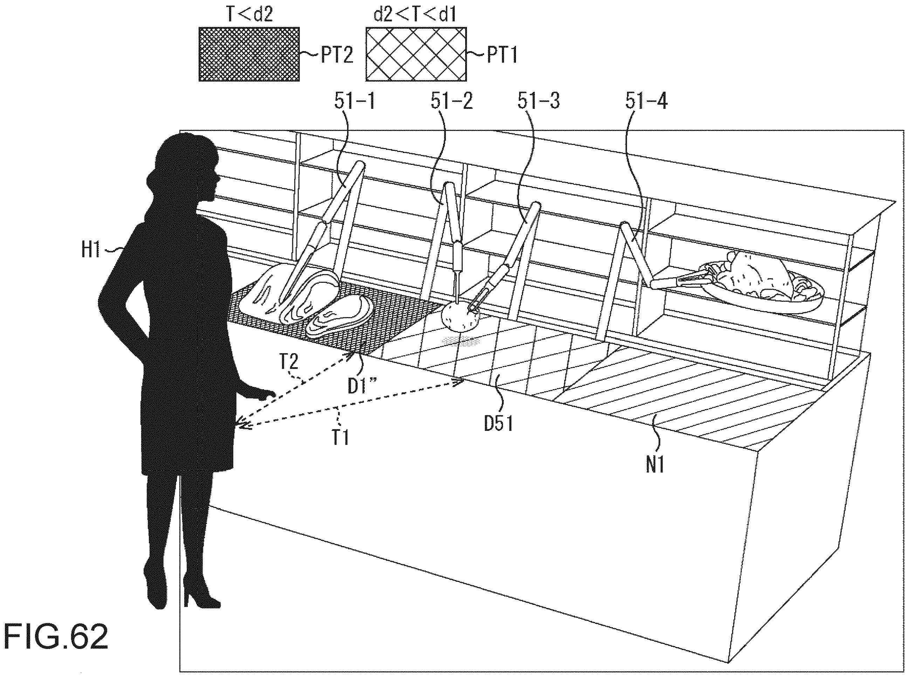

For example, when a dangerous area D1" and a dangerous area D51 are indicated, a distance T1 between the user H1 and the dangerous area D51 is smaller than a predetermined distance d1 and larger than a predetermined distance d2 (d2 < T1 < d1) as shown in Fig. 62. Therefore, the dangerous area D51 is indicated with a pattern PT1 which is a color and a design to be set in accordance with the distance as shown in the upper part of the figure.

On the other hand, a distance T2 between the user H1 and the dangerous area D1" is smaller than a distance d2 smaller than the predetermined distance d1 (T2 < d2) as shown in Fig. 62. Therefore, the dangerous area D1" is indicated with a pattern PT2 which is a color and a design indicating a higher degree of danger, the pattern PT2 being denser than the color and the design indicated in the dangerous area D51.

It should be noted that in Fig. 62, the density of the color is expressed by the line intervals of the dangerous areas D1" and D5 expressed with the lattice pattern, a denser color is indicated with the pattern PT2 with the line intervals shorter than those of the pattern PT1, and a state in which the dangerous areas D1" is more dangerous is expressed.

That is, in the case of Fig. 62, the danger determination unit 263 changes the color and the design to be indicated in accordance with the distance between the dangerous area D1" or D51 and the user H1 on the basis of the recognition results of the peripheral state recognition unit 250 and the person state recognition unit 251, such that the degree of danger depending on the distance can be easily visually recognized.

Alternatively, at this time, the danger determination unit 263 may control the voice UI control unit 254 to notify that the danger is imminent by a voice in accordance with the distance between the dangerous area D1" or D51 and the user H1.

That is, in this case, a moderate expression, for example, "You are approaching the dangerous area" is used when some distance remains between the user H1 and the dangerous area D1" or D51 and the user H1 is relatively far from the dangerous area D1" or D51.

On the other hand, in the case where the distance to the dangerous area is short and the degree of emergency for avoiding the danger is high, the indication is performed such that the high degree of emergency can be easily recognized with an expression which is at high sound volume, short, and easy to understand, for example, "Watch out", "Danger", or "Stay away", and the dangerous area can be quickly avoided.

Since the indication method of the dangerous area is changed in accordance with the distance between the dangerous area and the user in this manner, it is possible to cause the difference in the degree of danger to be visually or auditorily recognized.

It should be noted that although the example in which the indication (projection) is changed with the two colors or designs in accordance with the distance has been described above as the indication example of the dangerous area described with reference to Fig. 62, the indication (projection) may be changed with more colors or designs in accordance with the distance.

Moreover, although the example in which the indication state is changed in accordance with the distance has been described, the indication state of the dangerous area may be changed in accordance with the type of danger and the degree of danger in the dangerous area.

In addition, also in the indication of the secured area, the indication state of the secured area may be changed in accordance with the type of danger or the degree of danger depending on the content of the next task.

### <Indication Example of Secured Area and Dangerous Area (Example of Projection on Cooking Assistance Unit in Fig. 1) (Part 2-2)>

Although the example in which the indication method of the dangerous area is changed on the top plate 21A of Fig. 1 in accordance with the distance between the user and the dangerous area has been described above, the indication may be similarly changed also in the case of projecting on each shelf of the cooking assistance units 31-1 to 31-6.

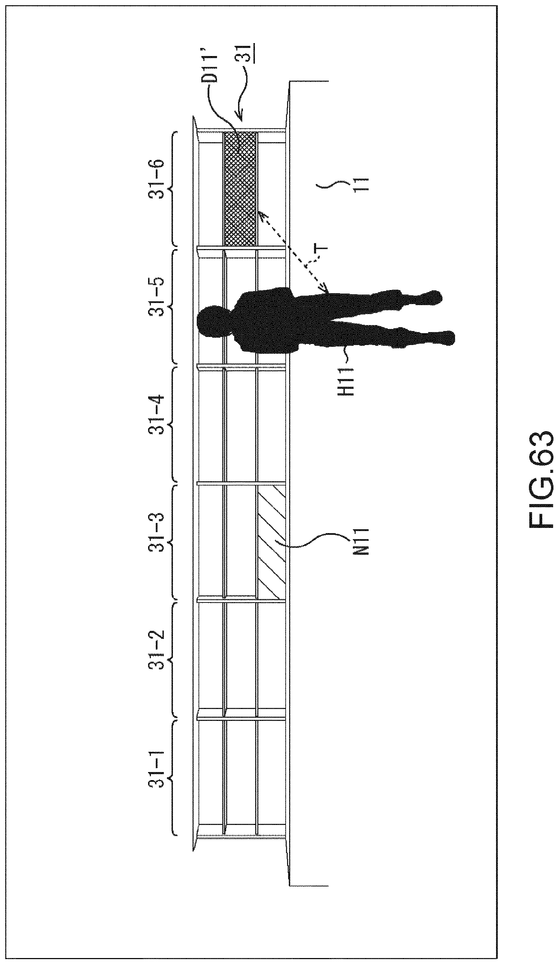

That is, although an example in which the second shelf of the cooking assistance unit 31-6 is indicated as the dangerous area D11' is shown as shown in Fig. 63, the density of the color indicated as the dangerous area D11' is changed in accordance with the distance between the user H11 and the dangerous area D11'.

It should be noted that the dangerous area D11' in Fig. 63 is indicated with the pattern PT2 in Fig. 62 and the dangerous area D11 in Fig. 55 is indicated with the pattern PT1 in Fig. 62. That is, in the dangerous area D11' in Fig. 63, a state in which the distance T from the user H11 is smaller and the danger to the user H11 is more imminent as compared to the dangerous area D11 in Fig. 55 is expressed.

Alternatively, also in a case where the dangerous area D11' that is changed in accordance with the distance between the dangerous area and the user H11 is indicated on each shelf of the cooking assistance units 31-1 to 31-6 as shown in Fig. 63, the indication method of the dangerous area by the voice may be changed in accordance with the distance between the user H11 and the dangerous area D11'.

Since the indication method of the dangerous area is changed in accordance with the distance between the dangerous area and the user in this manner, it is possible to cause the difference in the degree of danger to be visually or auditorily recognized.

### <Indication Example of Secured Area and Dangerous Area (Example of Projection on Top Plate of Robotic Kitchen in Fig. 32) (Part 2-3)>

Although the example in which the indication of the dangerous area is changed in accordance with the distance to the user on each shelf of the cooking assistance units 31-1 to 31-6 in the robotic kitchen 1 of Fig. 1 has been described above, the dangerous area indicated on the top plate 921A of the robotic kitchen 901 of Fig. 32 may also be changed in accordance with the distance to the user.

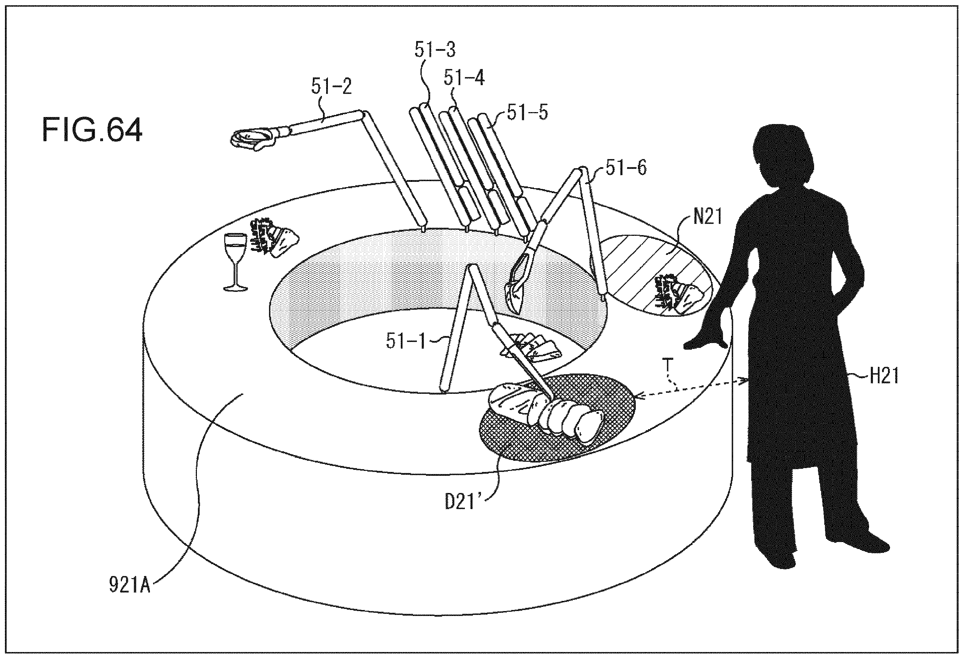

That is, as shown in Fig. 64, on the top plate 921A of the robotic kitchen 901, the knife attachment is mounted on the cooking arm 51-1, and the vicinity where the baguette is sliced is regarded as a dangerous area, and the dangerous area D21' is projected on the top plate 921A.

Also in this case, the indication method of the dangerous area D21' may be changed in accordance with a distance between the user H21 and the dangerous area D21'.

It should be noted that the dangerous area D21' in Fig. 64 is indicated with the pattern PT2 in Fig. 62 and the dangerous area D21 in Fig. 57 is indicated with the pattern PT1 in Fig. 62. That is, in the dangerous area D21' in Fig. 64, a state in which the distance T from the user H21 is smaller and the danger to the user H21 is more imminent as compared to the dangerous area D21 in Fig. 57 is expressed.

Alternatively, also in a case where the dangerous area D21' that is changed in accordance with the distance between the user H21 and the dangerous area D21' is projected and indicated on the top plate 921A as shown in Fig. 64, the indication method of the dangerous area by a voice may be changed in accordance with the distance between the user H21 and the dangerous area D21'.

Since the indication method of the dangerous area is changed in accordance with the distance between the dangerous area and the user in this manner, it is possible to cause the difference in the degree of danger to be visually or auditorily recognized.

### <Cooking Processing (Part 2)>

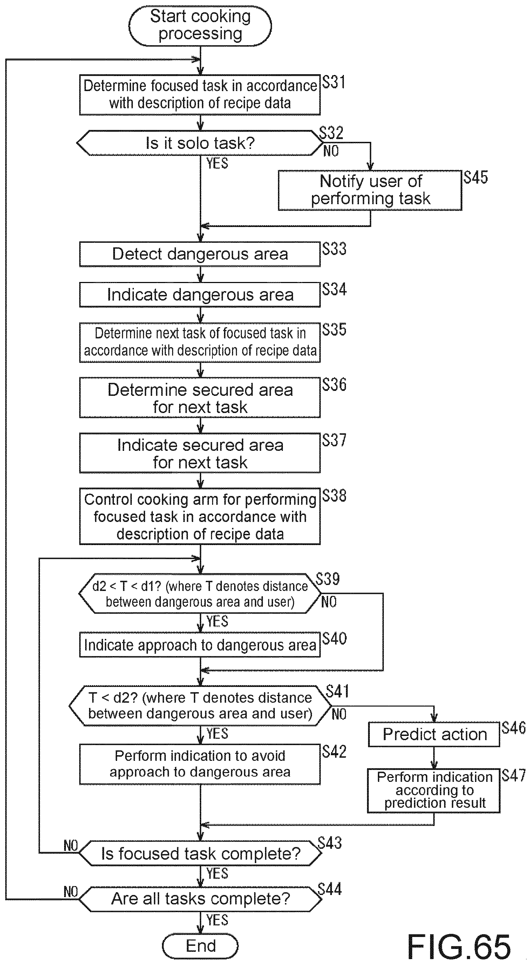

Next, cooking processing (Part 2) of the robotic kitchen 1 to change the indication method of the dangerous area in accordance with the distance between the dangerous area and the user when performing cooking will be described with reference to the flowchart of Fig. 65.

It should be noted that in the flowchart of Fig. 65, the processing of Steps S31 to S38 and S43 to S47 is similar to the processing of Steps S11 to S18 and S21 to S25 in the flowchart of Fig. 61, and thus the descriptions thereof will be omitted as appropriate.

Moreover, in Step S34 in the flowchart of Fig. 65, the indication method of the dangerous area indicated is a default indication method, and for example, the indication method described with reference to Fig. 61 may be used.

In addition, in Step S39, the danger determination unit 263 determines whether or not the distance T between the dangerous area and the user is d2 < T < d1 on the basis of the recognition results of the peripheral state recognition unit 250 and the person state recognition unit 251. That is, the danger determination unit 263 determines whether or not the degree of danger is higher by one level than the default state.

In a case where it is determined in Step S39 that the distance T between the dangerous area and the user is d2 < T < d1, the processing proceeds to Step S40.

In Step S40, the danger determination unit 263 controls the projection control unit 255 to change and project the color and design of the dangerous area through the projector 208 such that it can be recognized that danger with a degree of danger higher by one level than that of the default state is imminent. By changing and indicating the color and design of the dangerous area in this manner, it is indicated to the user that the user has approached the dangerous area.

It should be noted that in a case where it is determined in Step S39 that the distance T between the dangerous area and the user is not d2 < T < d1, the processing of Step S40 is skipped.

In Step S41, the danger determination unit 263 determines whether or not the distance T between the dangerous area and the user is T < d2 on the basis of the recognition results of the peripheral state recognition unit 250 and the person state recognition unit 251. That is, the danger determination unit 263 determines whether or not it is a highly emergent state in which danger with a degree of danger higher by two or more levels than that of the default state is imminent.

In a case where it is determined in Step S41 that the distance T between the dangerous area and the user is T < d2, the processing proceeds to Step S42.

In Step S42, the danger determination unit 263 controls the projection control unit 255 to change and project the color and design of the dangerous area through the projector 208 such that it can be recognized that danger with a degree of danger higher by two or more levels than that of the default state and with a higher degree of emergency to avoid the danger is imminent.

Alternatively, at this time, the danger determination unit 263 may control the voice UI control unit 254 to notify that the danger is imminent by a voice in accordance with the distance between the dangerous area and the user.

It should be noted that in a case where it is determined in Step S41 that the distance T between the dangerous area and the user is not T < d2, the processing proceeds to Step S46.

With the above processing, the indication method of the dangerous area is changed in accordance with the distance between the dangerous area and the user, and the dangerous area is indicated with a color and a design having higher visibility, such as a denser color as the distance becomes shorter, i.e., as the degree of emergency of the danger becomes higher. In this manner, it is possible to cause the higher degree of emergency to be recognized.

As a result, it is possible to enable the user to enjoy the pleasure and happiness of cooking while safely providing a new cooking experience.

### <Indication Example of Secured Area and Dangerous Area (Example of Projection on Top Plate of Robotic Kitchen in Fig. 1) (Part 3-1)>

Although the example in which the indication method of the dangerous area is changed in accordance with the distance from the user has been described above, the indication method of the secured area and the dangerous area may be changed in accordance with whether the user is a child or an adult, for example.

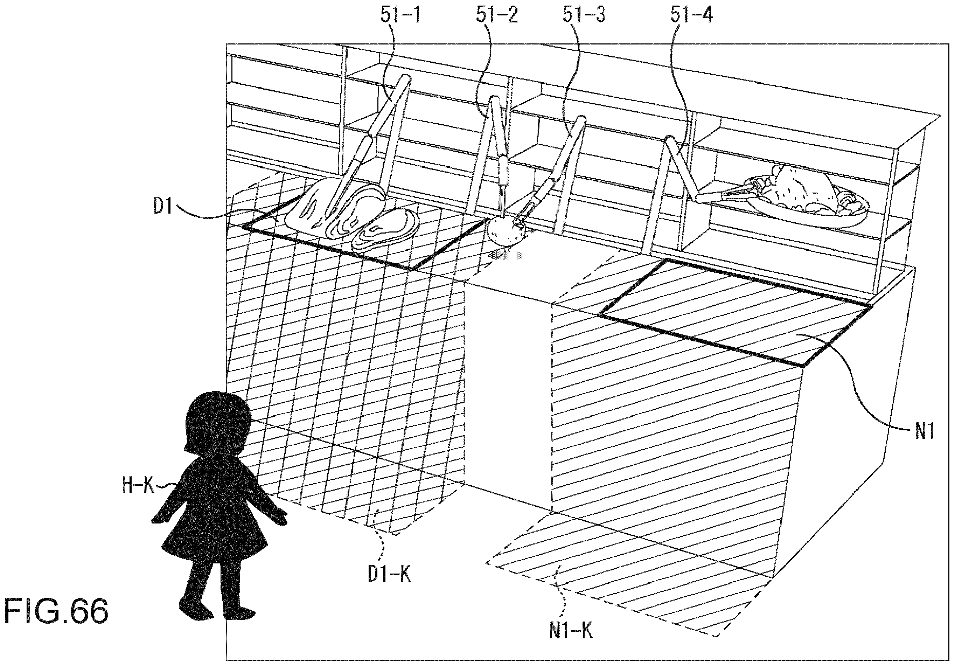

For example, as shown in Fig. 66, in a case where the user is a child, there is a possibility that the child cannot visually recognize the information indicated on the top plate 21A because of his or her height, and in this case, there is a possibility that the user cannot recognize the secured area and the dangerous area.

In particular, the cooking arms 51 are present on the top plate 21A and cooking tools and the like that can cause injuries are also present in the kitchen. Therefore, from the viewpoint of safety management, it is necessary to cause children to more reliably recognize the presence of the secured area and the dangerous area than adults.

Therefore, the danger determination unit 263 determines whether or not the user is a child in a case of performing the collaborative task. Moreover, when the user approaches the secured area N1 or the dangerous area D1 indicated by default such that a distance between the user and the secured area N1 or the dangerous area D1 is equal to or smaller than the predetermined distance, the danger determination unit 263 determines whether or not the approaching user is a child.

More specifically, the danger determination unit 263 determines whether or not the user is a child on the basis of the recognition results of the peripheral state recognition unit 250 and the person state recognition unit 251, for example, on the basis of the height, the body shape, and the presence or absence of the Adam's apple based on image recognition, the voice tone based on the voice, or the like. It should be noted that in Fig. 66, a user H-K represents a child user.

That is, in the case of Fig. 66, it is determined that the user who performs the collaborative task is a child or the user approaching the secured area N1 or the dangerous area D1 such that the distance between the user and the secured area N1 or the dangerous area D1 is equal to or smaller than the predetermined distance is a child. Then, the danger determination unit 263 indicates a secured area N1-K and a dangerous area D1-K shown as the dotted lines of the figure, which are ranges larger than the indication ranges of the normal, secured area N1 and dangerous area D1 shown as the solid lines.

As shown in Fig. 66, the secured area N1-K and the dangerous area D1-K are indicated as ranges wider than the top plate 21A.

With such indication, since the secured area N1-K and the dangerous area D1-K are indicated not only on the top plate 21A but also on the side surface portion of the main body of the robotic kitchen 1 and the floor, even a short child can recognize the secured area N1-K and the dangerous area D1-K.

It should be noted that in a case of requesting avoidance from the dangerous area with a higher degree of emergency, the danger determination unit 263 may control the voice UI control unit 254 to instruct to stay away from the secured area N1-K and the dangerous area D1-K by a voice from the speaker 209.

Alternatively, since the user is a child, the indication may be indicated with marks, patterns, or the like friendly to the child or the instruction may be performed by a voice using easy expressions when indicating the secured area N1-K and the dangerous area D1-K.

By changing the indication method of the secured area and the dangerous area in a manner that depends on whether or not the user is a child in this manner, it is possible to cause the child user to appropriately recognize the secured area and the dangerous area.

### <Indication Example of Secured Area and Dangerous Area (Example of Projection on Cooking Assistance Unit in Fig. 1) (Part 3-2)>

Although the example in which the secured area and the dangerous area are indicated on the top plate 21A of Fig. 1 in a case where the user is a child has been described above, the secured area and the dangerous area may be similarly indicated also in the case of projecting on the shelves of the cooking assistance units 31-1 to 31-6.

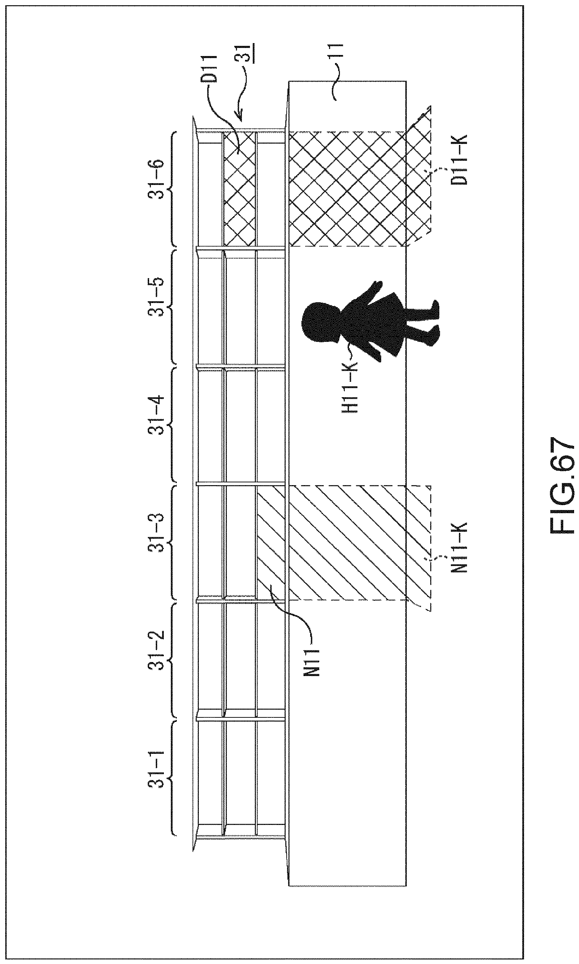

That is, Fig. 67 shows an example in which the third shelf of the cooking assistance unit 31-3 is indicated as the secured area N11 by default and the second shelf of the cooking assistance unit 31-6 is indicated as the dangerous area D11 by default. Here, in a case where a user H11-K is a child as shown in Fig. 67, the normal, secured area N11 and dangerous area D11 are indicated, and a secured area N11-K and a dangerous area D11-K are indicated as shown as the dotted lines.

By changing the indication method of the secured area and the dangerous area in a manner that depends on whether or not the user is a child, it is possible to cause the child user to appropriately recognize the secured area and the dangerous area.

### <Indication Example of Secured Area and Dangerous Area (Example of Projection on Top Plate of Robotic Kitchen in Fig. 32) (Part 3-3)>

Although the example in which the range of the secured area or the dangerous area is changed and indicated on each shelf of the cooking assistance units 31-1 to 31-6 in the robotic kitchen 1 of Fig. 1 in a case where the user is a child has been described above, the range of the secured area or the dangerous area may be indicated in another range, and for example, the range of the secured area or the dangerous area may be indicated on the top plate 921A of the robotic kitchen 901 of Fig. 32.

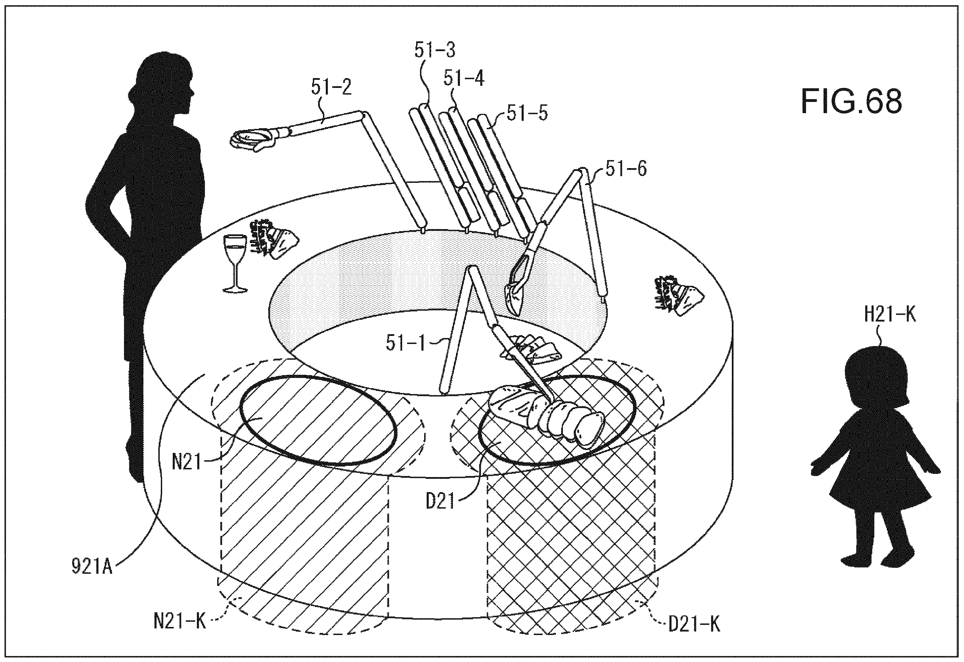

That is, as shown in Fig. 68, the vicinity of a place on the top plate 921A of the robotic kitchen 901, where a baguette is being sliced with the knife attachment attached to the cooking arm 51-1 is regarded as a dangerous area, and the dangerous area D21 is projected on the top plate 921A.

Moreover, the secured area N21 is indicated on the left side of the dangerous area D21 in the figure.

In a case where a user H21-K is a child, a secured area N21-K and a dangerous area D21-K each having a wider range are indicated to the secured area N21 and the dangerous area D21 shown as the solid lines again.

By changing the indication method of the secured area and the dangerous area in a manner that depends on whether or not the user is a child in this manner, it is possible to cause the child user to appropriately recognize the secured area and the dangerous area.

### <Cooking Processing (Part 3)>

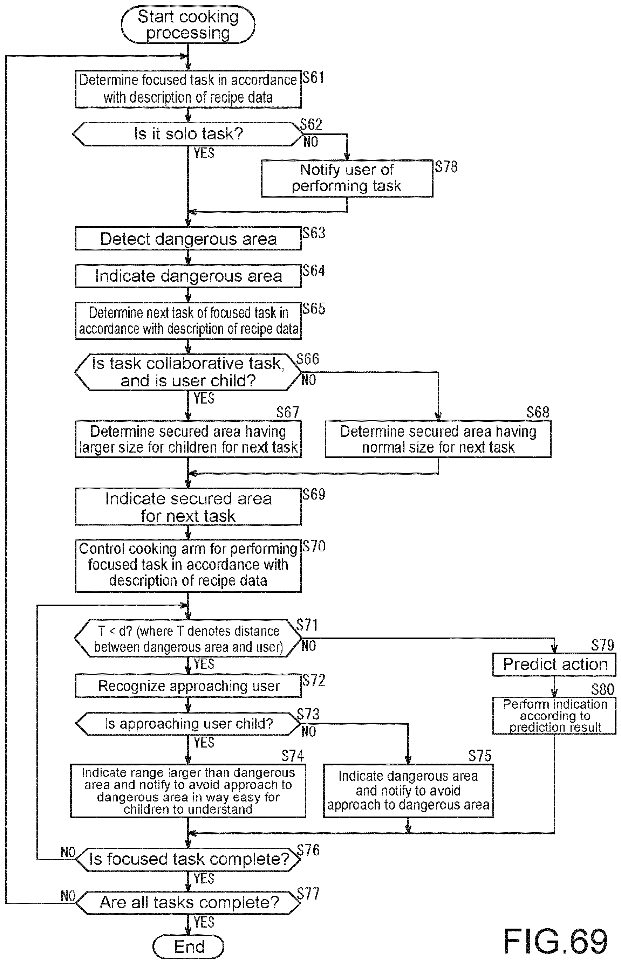

Next, cooking processing (Part 3) of the robotic kitchen 1 to change the indication method of the secured area and the dangerous area on the basis of whether the user is a child when performing cooking will be described with reference to the flowchart of Fig. 69.

It should be noted that in the flowchart of Fig. 69, the processing of Steps S61 to S65, S69, and S70 and S76 to S80 are similar to the processing of Steps S11 to S15, S17, and S18 and S21 to S25 in the flowchart of Fig. 61, and thus the descriptions thereof will be omitted as appropriate.

That is, in Step S66, the secured area determination unit 262 determines whether or not the task is a collaborative task and the user is a child. In Step S66, in a case where the task is a collaborative task and the user is a child, the processing proceeds to Step S67.

In Step S67, the secured area determination unit 262 determines a range necessary for the next task to be performed on the basis of the recipe data as a secured area of a larger size in consideration of the fact that the user is a child.

More specifically, the secured area determination unit 262 determines a range necessary for the next task to be performed on the basis of the recipe data as a default secured area, and further determines a range larger than the default secured area by a predetermined ratio as a secured area considering that the user is a child.

On the other hand, in Step S66, in a case where the task is not a collaborative task and the user is not a child, the processing proceeds to Step S68, and the normal range necessary for the next task to be performed, i.e., the default secured area, is determined on the basis of the recipe data.

In Step S68, the cooking process management unit 241 controls the projection control unit 255 to project the secured area determined by the projector 208 on the corresponding range. At this time, in a case where the user is a child, a wider secured area considering that the user is a child is indicated.

Moreover, in Step S71, the danger determination unit 263 determines whether or not the distance T between the dangerous area and the user is smaller than the predetermined distance d on the basis of the recognition results of the peripheral state recognition unit 250 and the person state recognition unit 251. In a case where it is determined in Step S71 that the distance T between the dangerous area and the user is smaller than the predetermined distance d, the processing proceeds to Step S72.

In Step S72, the danger determination unit 263 recognizes a user whose distance T from the dangerous area is smaller than the predetermined distance d on the basis of the recognition results of the peripheral state recognition unit 250 and the person state recognition unit 251. More specifically, the danger determination unit 263 recognizes whether the user who is present at the position whose distance T from the dangerous area is smaller than the predetermined distance d is an adult or a child.

In Step S73, the danger determination unit 263 determines whether or not the user whose distance T between the dangerous area and the user is smaller than the predetermined distance d is a child on the basis of the recognition result.

It should be noted that although it is determined whether or not the user is a child when determining the secured area in Step S66, since there is a possibility that a child completely different from the user registered for performing the task may intrude, the danger determination unit 263 determines whether or not every user approaching the secured area such that the distance between the user and the secured area is smaller than the predetermined distance is a child.

It should be noted that a result of determination as to whether or not the user is a child when determining the secured area may be used as it is.

In a case where it is determined in Step S73 that the user is a child, the processing proceeds to Step S74.

In Step S74, the danger determination unit 263 controls the projection control unit 255 to change the projection state into a dangerous area of a size considering that the user is a child is wider than the default dangerous area and indicate the changed dangerous area through the projector 208. At this time, the danger determination unit 263 controls the voice UI control unit 254 to notify that the danger is imminent by a voice from the speaker 209.

On the other hand, in a case where it is determined in Step S73 that the user is not a child, the processing proceeds to Step S75.

In Step S75, the danger determination unit 263 controls the projection control unit 255 and the voice UI control unit 254 to change the projection state of the dangerous area by the projector 208 or notify that the danger is imminent by a voice from the speaker 209. In this case, the size of the dangerous area is still the default size.

With the above processing, it is possible to change the indication method of the secured area and the dangerous area on the basis of whether or not the user is a child, and in a case where the user is a child, it is possible to indicate the secured area and the dangerous area by the indication method easy to recognize even to a short child.

It should be noted that as in the case where the secured area is indicated when the indicating processing of the dangerous area in Step S63 is performed, the indication method may be changed in advance on the basis of whether or not the user is a child.

However, the indication of the dangerous area can be changed by employing the processing in the flowchart of Fig. 69 to allow the dangerous area to be widely indicated only when the child approaches the dangerous area such that the distance between the child and the dangerous area is smaller than the predetermined distance d. As a result, it is possible to enhance the warning to the child.

Moreover, although the example in which the indication method of the dangerous area is changed on the basis of whether or not the user is a child has been described above, various attributes, for example, whether the user is a child, an adult, a woman, a man, an adolescent, an elderly person, a handicapped person, or a healthy person may be recognized and the indication method of the dangerous area may be changed in accordance with the recognized attributes.

Moreover, although the example in which the size of the dangerous area is changed in accordance with the attribute of the user has been described above, the size of the secured area may be changed in accordance with the task content. For example, a secured area of a range for the task performed by the cooking arm 51 may be set to be narrower and a secured area of a range for the task performed by the user may be set to be wider.

As a result, it is possible to enable the user to enjoy the pleasure and happiness of cooking while safely providing a new cooking experience.

### <Indication Example of Secured Area and Dangerous Area (Example of Projection on Top Plate of Robotic Kitchen in Fig. 1) (Part 4-1)>

Although the example in which the settings for the indication of the secured area are made on the basis of the recipe data has been described above, if an alternative area can be secured in a case where the user is currently using an area that is attempted to be determined as a secured area, the alternative area may be instead used as the secured area.

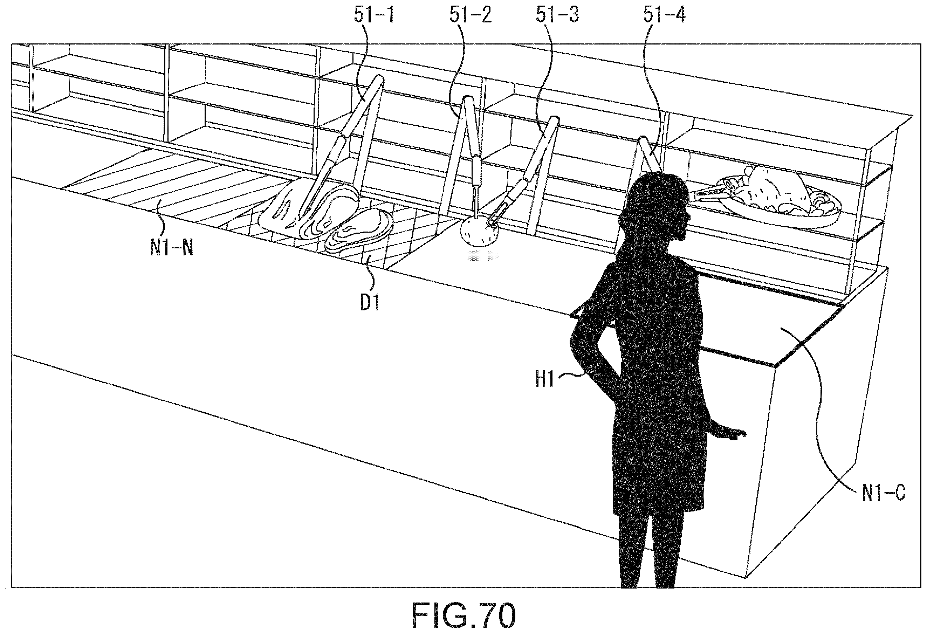

For example, as shown in Fig. 70, it is assumed that when the secured area determination unit 262 attempts to determine an area N1-C as a candidate of a secured area that is a range necessary for the next task to be performed on the basis of the recipe data, the user H1 is performing there some task or eating or drinking which is different from the recipe data.

In such a case, the secured area determination unit 262 determines whether or not an alternative area is present as the range necessary for the next task to be performed. For example, in a case where an area N1-N is present as the alternative area in Fig. 70, the area N1-N is indicated as the secured area. In Fig. 70, the area N1-N is indicated as the secured area.

It should be noted that in a case where the secured area is replaced by the alternative area as and indicated in this manner, the subsequent tasks are performed in the secured area replaced by the alternative area.

Moreover, in a case where the alternative area is not present, the secured area determination unit 262 controls the projection control unit 255 to project a message requesting to make the secured area open or controls the voice UI control unit 254 to output a message requesting to make the secured area open as a voice.

The message is, for example, "Please stop your task and make the area open immediately because this area is needed for the next task" or "Please move to another place because this place is going to be used" and is a message requesting the user H1 to make the secured area open.

In addition, although the processing in a case where the user is currently using the secured area when determining the secured area has been described above, it is also possible to respond to a request from the user, for example, "I want to use this place" regarding a secured area that has already been indicated. That is, in a case where the request, for example, "I want to use this place" is made, the secured area determination unit 262 may search for an alternative area, set the alternative area as the secured area in a case where the alternative area is searched for, and make the requested area open to the user.

With such indication, the user H1 can perform the task or eating or drinking in a free space without delaying the cooking processing by the robotic kitchen 1 as long as the alternative area of the secured area is present.

### <Indication Example of Secured Area and Dangerous Area (Example of Projection on Top Plate of Robotic Kitchen in Fig. 32) (Part 4-2)>

Hereinabove, the example in which, in the robotic kitchen 1 of Fig. 1, the alternative area is indicated as the secured area in a case where the user is performing the task in the secured area and where the alternative area is present has been described. Alternatively, similar indication may be performed also in the robotic kitchen 901 of Fig. 32.

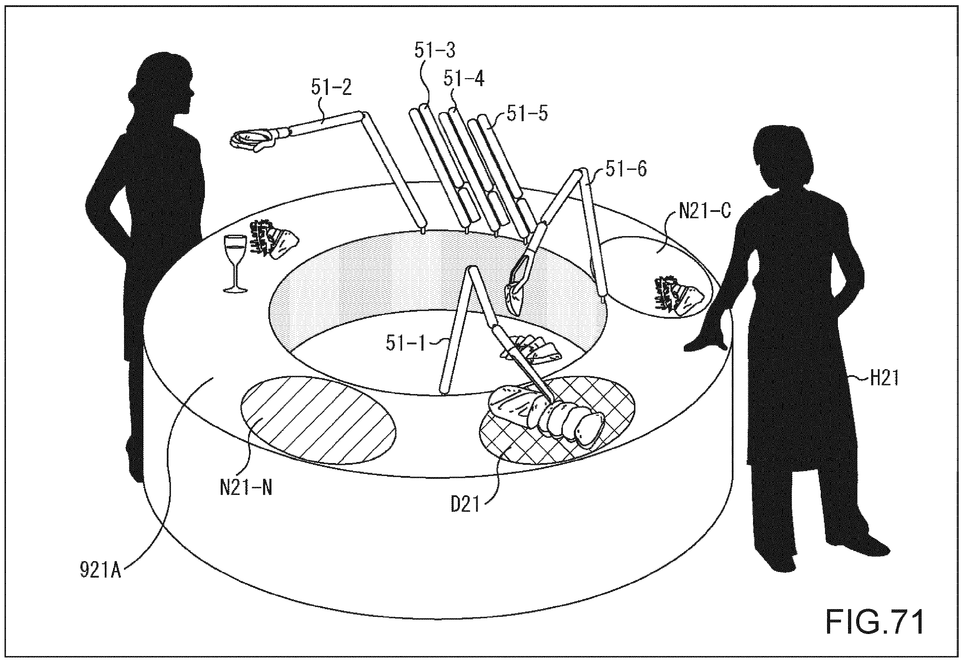

Specifically, it is assumed that the secured area determination unit 262 attempts to indicate an area N21-C as a secured area on the top plate 921A on the basis of the recipe data as shown in Fig. 71, for example, but the user H21 is currently performing some task in the area N21-C.

In such a case, the secured area determination unit 262 searches for an alternative area, and indicates an area N21-N as the secured area in a case where the area N21-N is searched out as the alternative area as shown in Fig. 71, for example.

With such indication, the user H21 can perform the task or eating or drinking in a free space without delaying the cooking processing by the robotic kitchen 1 as long as the alternative area of the secured area is present.

### <Cooking Processing (Part 4)>

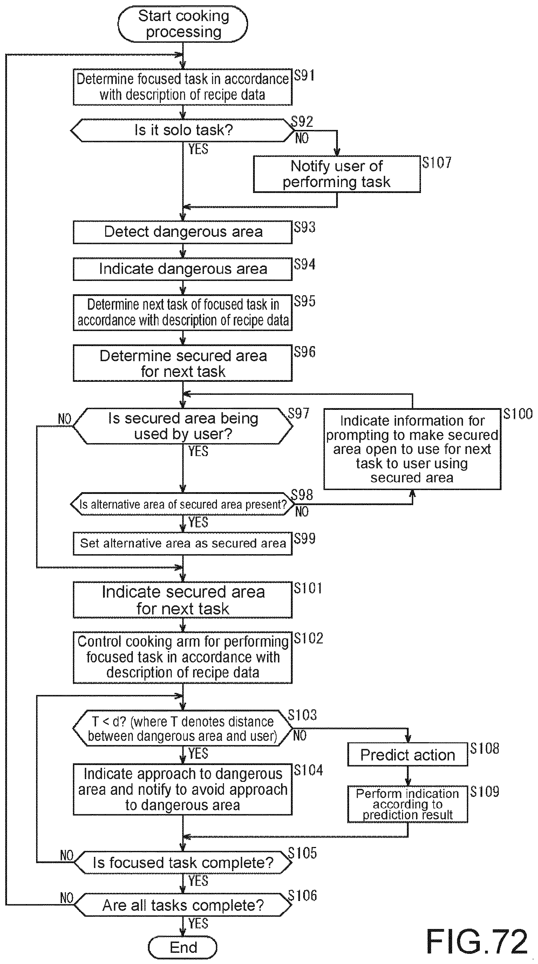

Next, cooking processing (Part 4) of the robotic kitchen 1 in which the alternative area is searched for in a case where the user is using the secured area when the secured area is indicated, and the alternative area is indicated as the secured area in a case where the alternative area is present will be described with reference to the flowchart of Fig. 72.

It should be noted that in the flowchart of Fig. 72, the processing of Steps S91 to S96 and S101 to S109 is similar to the processing of Steps S11 to S27 in the flowchart of Fig. 61, and thus the descriptions thereof will be omitted as appropriate.

That is, in Step S97, the secured area determination unit 262 determines whether or not the user is performing some task in the determined secured area on the basis of the recipe data on the basis of the recognition results of the peripheral state recognition unit 250 and the person state recognition unit 251.

In Step S97, for example, in a case where the user H1 is performing some task in the area N1-C determined as the secured area as shown in Fig. 70, the processing proceeds to Step S98.

In Step S98, the secured area determination unit 262 determines whether or not an alternative area of the secured area is present. Specifically, the secured area determination unit 262 searches for an area in which the task content of the next task can be performed from an area other than the area determined as the secured area, to thereby determine whether or not it is present.

The alternative area is, for example, an area which is not the best area for performing the next task, but it is, for example, a range which can secure a necessary cooking arm 51 and from which the secured cooking arm 51 can access each shelf of the cooking assistance units 31-1 to 31-6 which is necessary for the next task. Moreover, in a case where the next task is a task by the user, it is a range in which the task by the user can be performed.

In a case where it is determined in Step S98 that the alternative area is present, the secured area determination unit 262 determines the alternative area as the secured area in Step S99.

On the other hand, in a case where it is determined in Step S98 that the alternative area is not present, the processing proceeds to Step S100.

In Step S100, the secured area determination unit 262 controls the projection control unit 255 to project a message prompting to make the secured area open and controls the voice UI control unit 254 to output a message prompting to make the secured area open as a voice. Then, the processing returns to Step S97.

That is, in a case where the alternative area is not present, the processing of Steps S97, S98, and S100 is repeated and the projection and the voice output of the messages prompting to make the secured area open are repeated until the secured area is made open.

Then, in Step S97, in a case where the secured area is made open, i.e., in a case where the secured area is not used, the processing proceeds to Step S101. That is, in this case, the initially determined secured area is indicated.

With such indication, the user H1 can perform the task or eating or drinking in a free space without delaying the cooking processing by the robotic kitchen 1 as long as the alternative area of the secured area is present.

As a result, it is possible to enable the user to enjoy the pleasure and happiness of cooking while safely providing a new cooking experience.

### <Indication Example of Secured Area and Dangerous Area (Example of Projection on Top Plate of Robotic Kitchen in Fig. 1) (Part 5-1)>

Hereinabove, the example in which the alternative area is indicated as the secured area as long as the alternative area is present in a case where the user is performing some task when the secured area is indicated has been described.

By the way, the safety of the user can be enhanced by configuring various tasks to be performed in areas away from the dangerous area.

Therefore, when the secured area is set, it may be confirmed whether or not an alternative area away from the dangerous area is present in a case where the secured area is located near the dangerous area, and the alternative area may be indicated as the secured area in a case where the alternative area is present.

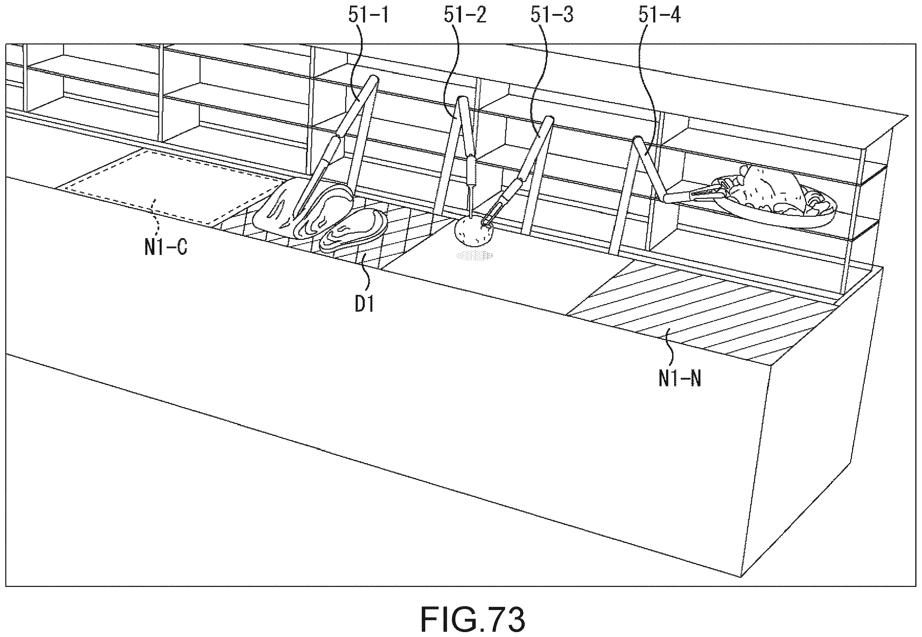

For example, as shown in Fig. 73, it is assumed that the secured area determination unit 262 determines the area N1-C as the secured area which is a range necessary for the next task to be performed on the basis of the recipe data.

In such a case, the secured area determination unit 262 determines whether or not a dangerous area is present near the area N1-C determined as the secured area. In Fig. 73, an area to the right of the area N1-C is set as the dangerous area D1. Therefore, in Fig. 73, it is considered that the dangerous area D1 is present near the area N1-C determined as the secured area.

Then, the secured area determination unit 262 determines whether or not an alternative area away from the dangerous area D1 is present. In Fig. 73, the area N1-N away from the dangerous area D1 is searched out as the alternative area, and it is thus considered that the alternative area is present.

Accordingly, the secured area determination unit 262 determines the area N1-N, which is the alternative area, as the secured area.

With such indication, the secured area is set in the area away from the dangerous area as long as the alternative area is present. Therefore, the frequency at which the user approaches the dangerous area is lowered. In other words, this processing is also a processing of guiding the user to the position away from the dangerous area, and the safety can be managed by avoiding approach to the dangerous area without making the user aware of the position of the dangerous area. As a result, the safety can be managed with higher accuracy.

### <Indication Example of Secured Area and Dangerous Area (Example of Projection on Cooking Assistance Unit in Fig. 1) (Part 5-2)>

Although the example in which in a case where the secured area is located near the dangerous area, the alternative area is searched for, and in a case where the alternative area is searched out, the searched-out alternative area is indicated as the secured area on the top board 21A of Fig. 1 has been described, similar indication may be performed also in the case of projecting on each shelf of the cooking assistance units 31-1 to 31-6.

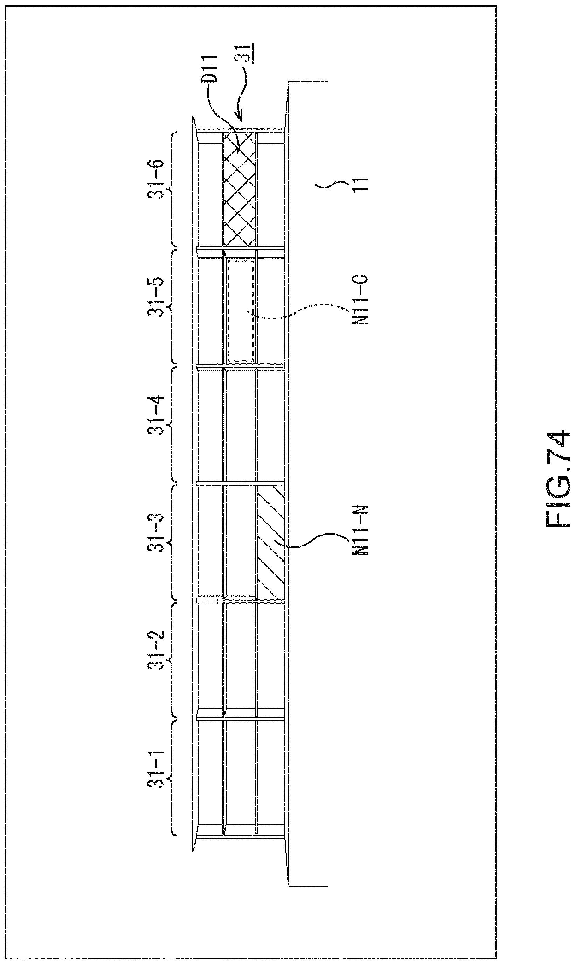

That is, in Fig. 74, the area determined as the secured area is an area N11-C including the second shelf from the top of the cooking assistance unit 31-5 while the second shelf from the top of the cooking assistance unit 31-6, which is an adjacent shelf, is set as the dangerous area D11.

Therefore, in such a case, the secured area determination unit 262 determines whether or not the alternative area is present away from the dangerous area D11. In Fig. 74, an area N11-N including the third shelf from the top of the cooking assistance unit 31-3, which is away from the dangerous area D11, is searched out as the alternative area, and it is thus considered that the alternative area is present.

The secured area determination unit 262 indicates the area N11-N, which is the alternative area, as the secured area.

With such indication, also in each shelf of the cooking assistance units 31-1 to 31-6, the secured area is set in the area away from the dangerous area as long as the alternative area is present. Therefore, the frequency at which the user approaches the dangerous area is lowered. As a result, the safety can be managed with higher accuracy.

It should be noted that since each shelf has an individual function in the respective shelves of the cooking assistance units 31-1 to 31-6, the shelf searched out as the alternative area is a shelf having the same function as the shelf searched out as the secured area or a substitutable function.

### <Indication Example of Secured Area and Dangerous Area (Example of Projection on Top Plate of Robotic Kitchen in Fig. 32) (Part 5-3)>

Hereinabove, the example in which in the robotic kitchen 1 of Fig. 1, in a case where the dangerous area is present near the secured area and where the alternative area is present, the alternative area is indicated as the secured area has been described. Alternatively, similar indication may be performed also in the robotic kitchen 901 of Fig. 32.

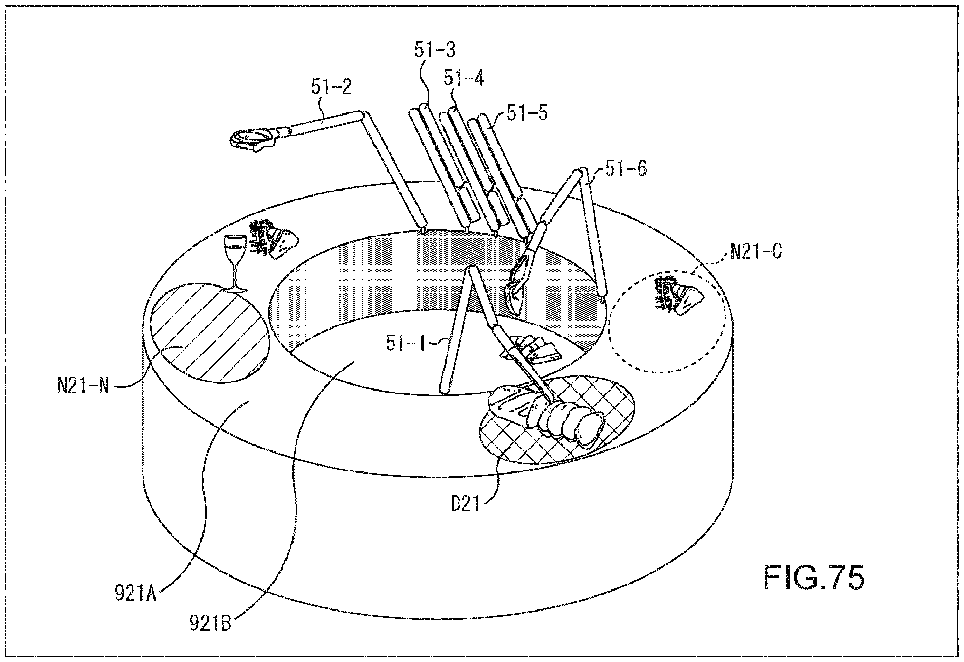

Specifically, it is assumed that the secured area determination unit 262 attempts to indicate the area N21-C as the secured area on the top plate 921A on the basis of the recipe data as shown in Fig. 75, for example, but the dangerous area D21 is present near the area N21-C.

In such a case, the secured area determination unit 262 searches for an alternative area, and indicates the area N21-N as the secured area in a case where the area N21-N is searched out as the alternative area as shown in Fig. 75, for example.

With such indication, also in the robotic kitchen 901, the secured area is set in the area away from the dangerous area as long as the alternative area is present. Therefore, the frequency at which the user approaches the dangerous area is lowered.

### <Cooking Processing (Part 5)>

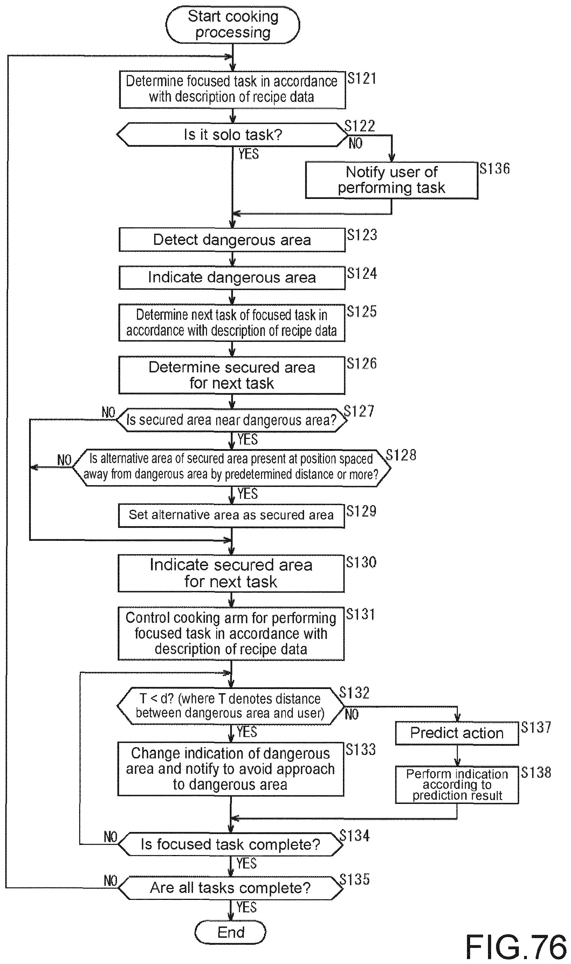

Next, cooking processing (Part 5) of the robotic kitchen 1 in which, when indicating the secured area on the basis of the recipe data, the alternative area is searched for in a case where the dangerous area is present near the secured area, and the alternative area is indicated as the secured area in a case where the alternative area is present will be described with reference to the flowchart of Fig. 76.

It should be noted that in the flowchart of Fig. 76, the processing of Steps S121 to S126 and S130 to S138 is similar to the processing of Steps S11 to S25 in the flowchart of Fig. 61, and thus the descriptions thereof will be omitted as appropriate.

That is, in Step S127, the secured area determination unit 262 determines whether or not a dangerous area is present near the determined secured area on the basis of the recipe data on the basis of the recognition results of the peripheral state recognition unit 250 and the person state recognition unit 251.

In Step S127, for example, in a case where the dangerous area D1 is present next to the area N1-C determined as the secured area as shown in Fig. 73, it is considered that the dangerous area is present near the determined secured area, and the processing proceeds to Step S128.

In Step S128, the secured area determination unit 262 determines whether or not an alternative area of the secured area is present at a position away from the dangerous area. Specifically, the secured area determination unit 262 searches for an area in which the task content of the next task can be performed and which is farther than the predetermined distance from the dangerous area from an area other than the area determined as the secured area, to thereby determine whether or not it is present.

In a case where it is determined in Step S128 that the alternative area is present, the secured area determination unit 262 determines the alternative area as the secured area in Step S129.

On the other hand, in a case where it is determined in Step S127 that the dangerous area is not present near the determined secured area or in a case where it is determined in Step S128 that the alternative area is not present, the processing of Step S129 is skipped. That is, in this case, the secured area determined in the Step S129 is indicated as it is.

With such processing, the secured area is set to the area away from the dangerous area as long as the alternative area is present. Thus, it is possible to guide the user to the position away from the dangerous area and to cause the user to avoid approach to the dangerous area without making the user aware of the position of the dangerous area.

As a result, it is possible to enable the user to enjoy the pleasure and happiness of cooking while safely providing a new cooking experience.

### <Other Application Examples of Indication Examples of Secured Area and Dangerous Area>

Hereinabove, the example in which the range necessary for the task to be performed in the next process of the current process is indicated as the secured area and the dangerous area is indicated in the dangerous range has been described.

Alternatively, cooking tools necessary for the current process task may be indicated to the user.

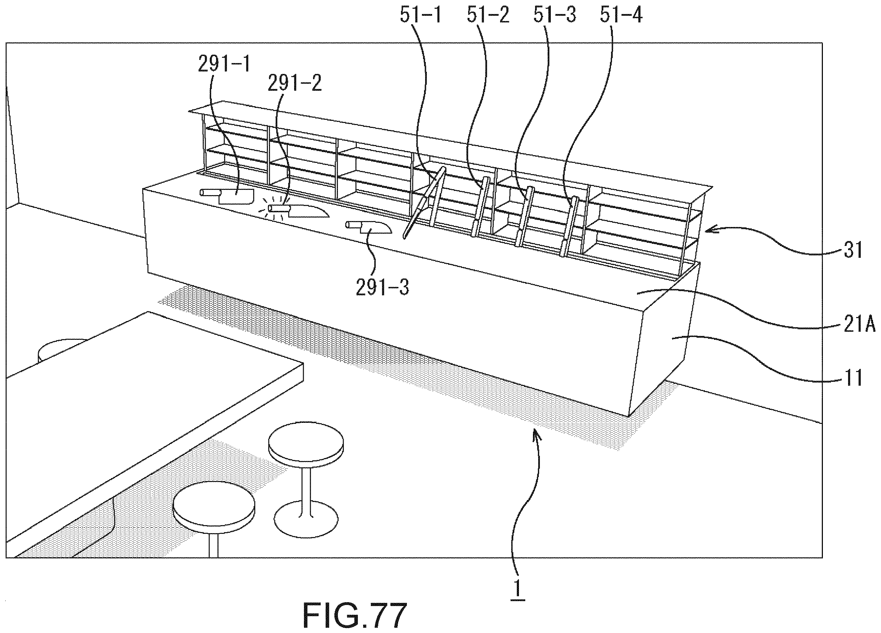

More specifically, for example, it is assumed that three knives 291-1 to 291-3 are placed on the top plate 21A as shown in Fig. 77. It should be noted that when it is not especially necessary to distinguish the knives 291-1 to 291-3 from one another, those will be simply referred to as knives 291.

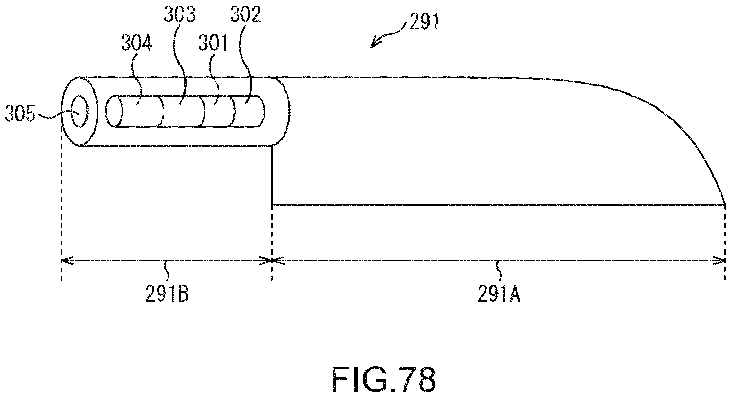

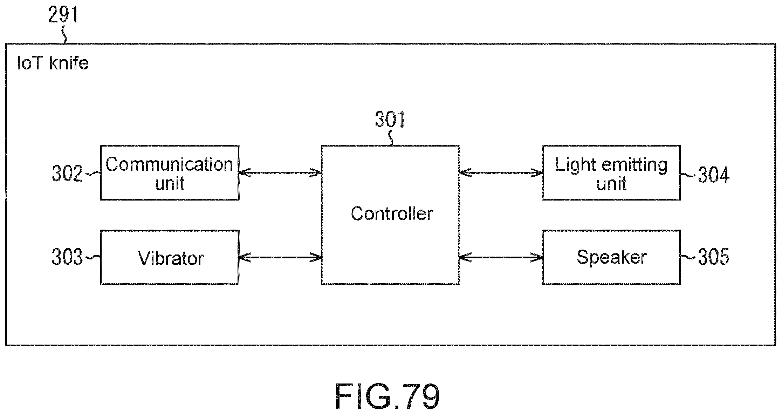

The knives 291-1 to 291-3 are each an internet of things (IoT) knife that communicates with the robotic kitchen 1 (or 901) and causes a built-in light emitting unit 304 (Figs. 78 and 79) to emit light in a case where it is a cooking tool necessary for the task.

In Fig. 77, the handle portion of the knife 291-2 of the knives 291-1 to 291-3 emits light, and it is shown that the knife 291-2 is a cooking tool necessary for the current task.

By causing the cooking tool necessary for the task to emit light in this manner, the user can smoothly select and use the cooking tool necessary for the task by visually selecting the cooking tool emitting light.

### <Configuration Example of IoT Knife>

Next, a configuration example of the IoT knife 291 will be described with reference to Figs. 78 and 79. It should be noted that Fig. 78 is an external perspective view of the IoT knife 291 and Fig. 79 is a hardware configuration diagram of the IoT knife 291.

The IoT knife 291 includes a blade 291A and a handle 291B, and the user grasps the handle 291B and cuts a food ingredient with the blade 291A. That is, the external structure of the IoT knife 291 is similar to that of a generally-used knife as a cooking tool.

Moreover, the handle 291B has a skeleton structure, for example, and includes a controller 301, a communication unit 302, a vibrator 303, the light emitting unit 304, and a speaker 305.

The controller 301 is constituted by a computer including a central processing unit (CPU), a read only memory (ROM), a random access memory (RAM), a flash memory, and the like. The controller 301 executes a predetermined program by the CPU and controls general operations of the IoT knife 291. The computer constituting the controller 301 is housed inside the handle 291B and functions as a control device that controls the operation of the IoT knife 291.

The communication unit 302 is controlled by the controller 301 to communicate with the robotic kitchen 1 or 901 and transmit and receive various types of data and programs. Moreover, when the communication unit 302 is notified of a command indicating that it is a cooking tool to be used in the task by the robotic kitchen 1 or 901 on the basis of the recipe data, the communication unit 302 receives the command and outputs the command to the controller 301.

The vibrator 303 is constituted by a vibrator controlled by the controller 301 and causes the user to recognize a predetermined timing, the presence or absence of the notification, or the like, for example, by vibration.

The light emitting unit 304 is constituted by a light emission diode (LED) and the like, for example, and is controlled by the controller 301 to emit light when a command indicating that it is the cooking tool to be used in task is received, for example.

The speaker 305 is controlled by the controller 301 to output a predetermined voice when it is the cooking tool to be used in the task, for example.

### <Cooking Processing (Part 6)>

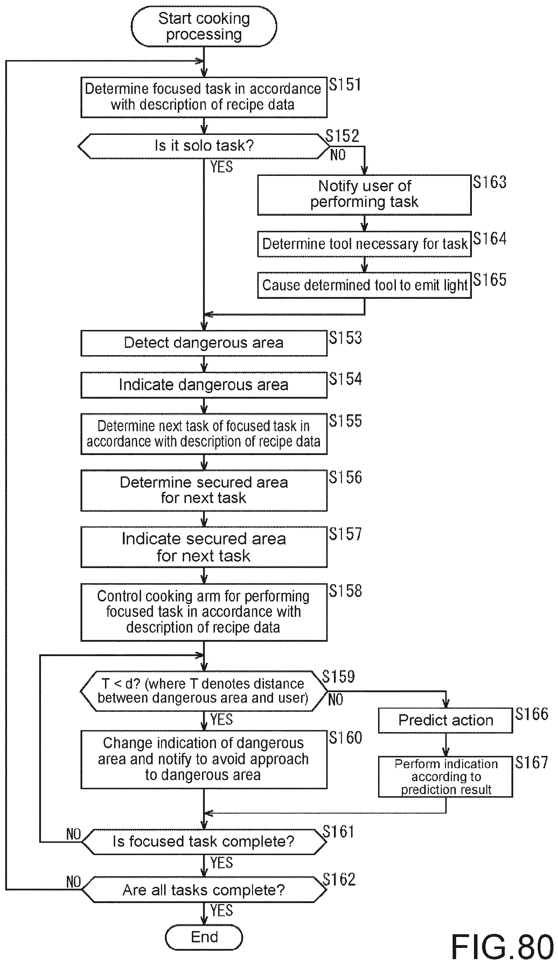

Next, cooking processing (Part 6) of the robotic kitchen 1 in which the IoT knife 291 to be used in the task is caused to emit light on the basis of the recipe data, to thereby indicate to the user that it is the cooking tool to be used in the task will be described with reference to the flowchart of Fig. 80.

It should be noted that in the flowchart of Fig. 80, the processing of Steps S151 to S163, S166, and S167 is similar to the processing of Steps S11 to S25 in the flowchart of Fig. 61, and thus the descriptions thereof will be omitted as appropriate.

That is, in Step S164, the cooking process management unit 241 determines the cooking tool necessary for the task on the basis of the recipe data.

In Step S165, the cooking process management unit 241 controls the communication unit 211 to notify the determined cooking tool of a command for causing the cooking tool to emit light to indicate that it is the cooking tool necessary for the task. Here, in a case where the cooking tool necessary for the task is the IoT knife 291, the cooking process management unit 241 controls the communication unit 211 to transmit a command instructing the IoT knife 291 to cause the light emitting unit 304 to emit light to the IoT knife 291.

When the controller 301 of the IoT knife 291 controls the communication unit 302 to receive this command, the controller 301 of the IoT knife 291 controls the light emitting unit 304 to emit light.

Since the light emitting unit 304 of the handle 291B of the IoT knife 291 emits light in this manner, the user can recognize that one of the IoT knives 291, which emits light from the light emitting unit 304 of the handle 291B, is the cooking tool necessary for the task.

Moreover, in the Step S167, the prediction result response unit 265 controls the unit control unit 244, the projection control unit 255, and the voice UI control unit 254 on the basis of the action prediction result to operate each shelf of the cooking assistance units 31-1 to 31-6, change the projection state by the projector 208, or perform a response operation to support the user's action by a voice from the speaker 209.

At this time, it is assumed that the next action predicted by detecting the user's action of taking out a food ingredient is, for example, a task of chopping the taken-out food ingredient with the IoT knife 291-2.

In such a case, the prediction result response unit 265 controls the communication unit 211 to transmit a command for causing the light emitting unit 304 of the handle 291B to emit light to the selected IoT knife 291-2 as a response operation to support the user's action.

Accordingly, the controller 301 of the IoT knife 291-2 controls the communication unit 302 to receive the transmitted command, and causes the light emitting unit 304 of the handle 291B to emit light in accordance with the command.

At this time, the controller 301 may cause the light emitting unit 304 to emit light and the speaker 305 to output a message voice indicating that it is the cooking tool necessary for the task or cause the vibrator 303 to vibrate with a predetermined rhythm.

Alternatively, in a case of a normal knife or the like without the function of the light emitting unit 304 or the like, the cooking process management unit 241 may control the projection control unit 255 to cause the projector 208 to project a mark, a design, a message, or the like indicating that it is the cooking tool necessary for the task on the handle or blade portion of the knife necessary for the task of interest by projection mapping or the like.

In addition, although in this example, the example in which the IoT knife 291-2 is selected as the cooking tool necessary for the task has been described above, another one may be used as long as it is a cooking tool, and for example, other cooking tools such as a chopping board and a frying pan may be provided with functions similar to the vibrator 303, the light emitting unit 304, and the speaker 305. In this case, at least one of an operation of causing the vibrator 303 to vibrate, an operation of causing the light emitting unit 304 to emit light, or an operation of causing the speaker 305 to output a voice may be performed in a case where it is the cooking tool necessary for task.

With the above processing, it is possible to indicate the cooking tool necessary for the task to the user in an easy-to-recognize manner.

It should be noted that although the example in which when the task is started, the indication to cause the cooking tool to be used to emit light, to output a voice, or to vibrate is performed has been described above, the cooking tool necessary for the next task of the current task may be indicated, for example, as in the case where the above-mentioned secured area is indicated.

That is, by indicating the cooking tool such that it can be understood that the cooking tool is to be used in the next task, it is possible to prevent other users from using the cooking tool necessary for the next task.

As a result, it is possible to enable the user to enjoy the pleasure and happiness of cooking while safely providing a new cooking experience.

### <Control of Server>

Although the operation of the robotic kitchen 1 is controlled by the controller 201 installed in the robotic kitchen 1, the operation may be controlled by an external device.

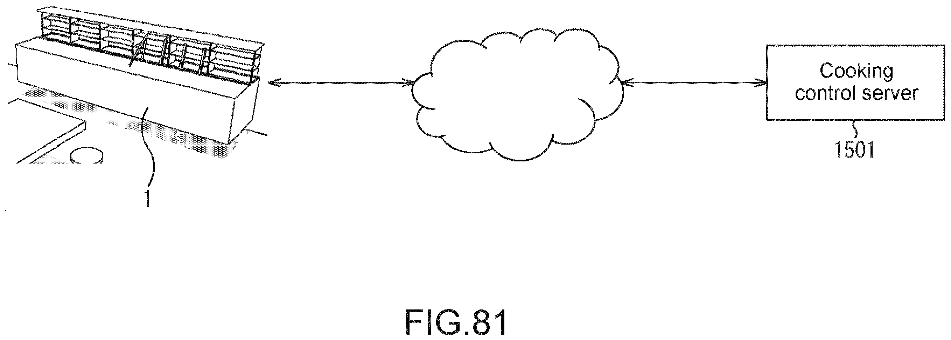

Fig. 81 is a diagram showing a configuration example of a control system.

The control system shown in Fig. 81 is configured by connecting the robotic kitchen 1 and a cooking control server 1501 via a network such as the Internet. The robotic kitchen 1 and the cooking control server 1501 communicate with each other via the network.

In the control system of Fig. 81, the processing of the robotic kitchen 1 as described above is performed by the cooking control server 1501 which is the external device of the robotic kitchen 1. That is, at least some of the functional units of the controller 201 described with reference to Fig. 45 are realized in the cooking control server 1501 by executing a predetermined program.

Information necessary for the operations of the respective units including the cooking arms 51, such as an image taken in the robotic kitchen 1 and detected sensor data, is transmitted to the cooking control server 1501 from the robotic kitchen 1.

The cooking control server 1501 receives the information transmitted from the robotic kitchen 1 and controls the operation of the cooking arm 51 on the basis of the recipe data to thereby perform each task of the cooking in the robotic kitchen 1. The cooking control server 1501 functions as a control device that controls the action of the robotic kitchen 1.

In this manner, the control device that controls the action of the robotic kitchen 1 may be provided outside the robotic kitchen 1. Other devices capable of communicating with the robotic kitchen 1, such as a PC, a smartphone, and a tablet terminal, may be used as the control device.

### <Computer Configuration Example>

It should be noted that the above-mentioned series of processing may be performed by hardware or may be performed by software. In a case where the series of processing is executed by software, a program including the software is installed in a computer incorporated in dedicated hardware, a general-purpose personal computer, or the like from a program recording medium.

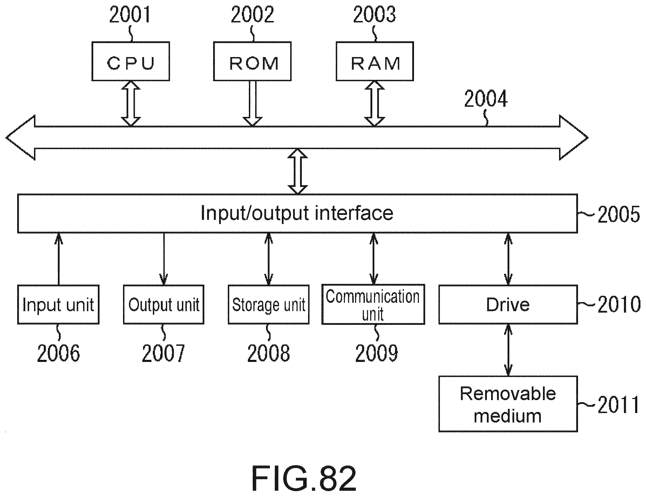

Fig. 82 is a block diagram showing a configuration example of hardware of a computer that executes the above-mentioned series of processing using a program.

A central processing unit (CPU) 2001, a read only memory (ROM) 2002, and a random access memory (RAM) 2003 are interconnected by a bus 2004.

The input/output interface 2005 is further connected to the bus 2004. An input unit 2006 including a keyboard, a mouse, and the like and an output unit 2007 including a display, a speaker, and the like are connected to the input/output interface 2005. Moreover, the input/output interface 2005 is connected to a storage unit 2008 including a hard disk, a nonvolatile memory, and the like, a communication unit 2009 including a network interface and the like, and a drive 2010 that drives a removable medium 2011.

In the computer configured as described above, the CPU 2001 loads the program stored in the storage unit 2008 into the RAM 2003 via the input/output interface 2005 and the bus 2004 and executes the program for executing the above-mentioned series of processing.

The program executed by the CPU 2001 is provided, recorded on the removable medium 2011 or via a wired or wireless transmission medium such as a local area network, the Internet, and digital broadcasting, and is installed in the storage unit 2008.

It should be noted that the program executed by the computer may be a program in which processes are chronologically performed in the order described herein or may be a program in which processes are performed in parallel or each process is performed at a necessary timing such as a timing of calling.

Moreover, the system set forth herein means a set of a plurality of components (such as devices and modules (parts)) and it does not matter whether all of the components are in the same housing. Thus, a plurality of devices housed in separate housings and connected to one another via a network and a single device in which a plurality of modules is housed in a single housing are both systems.

It should be noted that the effects described herein are merely illustrative, not limitative, and other effects may be provided.

Embodiments of the present technology are not limited to the above-mentioned embodiment, and various modifications can be made without departing from the present technology as defined in the appended claims.

For example, the present technology may take a cloud computing configuration in which a plurality of devices shares a single function and collaboratively processes the single function via a network.

Moreover, the respective steps described above using the flowcharts may be performed by a single device or may be shared and performed by a plurality of devices.

Moreover, in a case where a single step includes a plurality of processes, the plurality of processes included in the single step may be performed by a single device or may be shared and performed by a plurality of devices.

### Reference Signs List

- 1: robotic kitchen
- 21A, 21B: top plate
- 31: cooking assistance system
- 51-1 to 51-4: cooking arm
- 101: groove portion
- 102: rail
- 131: arm movement unit
- 132-1 to 132-4: pipe
- 133: arm function control device
- 201: controller
- 202: arm movement control unit
- 203: washing unit
- 204: top plate drive unit
- 205: top plate temperature adjustment unit
- 206: camera
- 207: microphone
- 208: projector
- 209: speaker
- 210: sensor
- 211: communication unit
- 241: cooking process management unit
- 242: operation mode management unit
- 243: arm control unit
- 244: unit control unit
- 245: recipe data storage unit
- 246: recipe data acquisition unit
- 247: recipe data processing unit
- 248: cooking log management unit
- 249: analysis unit
- 250: peripheral state recognition unit
- 251: person state recognition unit
- 252: voice analysis unit
- 253: voice recognition unit
- 254: voice UI control unit
- 255: projection control unit
- 261: dangerous area detection unit
- 262: secured area determination unit
- 263: danger determination unit
- 264: action prediction unit
- 265: prediction result response unit
- 301: controller
- 302: communication unit
- 303: vibrator
- 304: light emitting unit
- 305: speaker
- 501: attaching/detaching member
- 503: relay member
- 505: base member
- 651: manipulator attachment
- 652: spatula attachment
- 653: knife attachment
- 654: all-purpose pin attachment
- 655: shaker attachment
- 656: spindle attachment
- 657: peeler attachment
- 658: cleaner attachment
- 659, 660: cover attachment
- 901: robotic kitchen
- 921A, 921B: top plate
- 1201: base
- 1202: top plate
- 1203: support arm
- 1251: controller
- 1252: top plate lift drive unit
- 1253: heating/cooling unit
- 1254: tire drive unit
- 1255: sensor
- 1256: communication unit
- 1271: route information acquisition unit
- 1272: position measurement control unit
- 1273: movement control unit
- 1274: operation mode management unit
- 1275: attitude control unit
- 1276: analysis unit
- 1277: peripheral state recognition unit
- 1278: person state recognition unit
- 1401: robotic kitchen
- 1501: cooking control server

## Claims

1. A cooking system (31), comprising:
a cooking space state detection unit (250) that detects a state of a cooking space;
a dangerous area detection unit (261) that detects a dangerous area for a user in the cooking space on a basis of a cooking process and the state of the cooking space;
an indication control unit (255) that performs control to indicate the dangerous area detected by the dangerous area detection unit in the cooking space;
a cooking arm (51) having a cooking function in accordance with the cooking process; and
an arm control unit (243) that controls driving of the cooking arm, wherein
the dangerous area detection unit (261) detects a range of driving of the cooking arm on a basis of the cooking process as the dangerous area, the cooking arm being controlled to be driven by the arm control unit.

2. The cooking system according to claim 1, wherein
the indication control unit changes an indication method of the dangerous area in the cooking space in accordance with a distance between the user and the dangerous area on a basis of the state of the cooking space.

3. The cooking system according to claim 2, wherein
the indication control unit performs control to indicate the dangerous area in the cooking space when the distance between the user and the dangerous area is smaller than a predetermined distance on a basis of the state of the cooking space.

4. The cooking system according to claim 3, wherein
the indication control unit indicates the dangerous area in the cooking space by a first indication method when the distance between the user and the dangerous area is smaller than a first distance and is larger than a second distance smaller than the first distance on a basis of the state of the cooking space, and
performs control to indicate the dangerous area in the cooking space by an indication method easier for the user to recognize than the first indication method when the distance between the user and the dangerous area is smaller than the second distance.

5. The cooking system according to any preceding claim, wherein
the indication control unit changes an indication method of the dangerous area in the cooking space in accordance with an attribute of the user.

6. The cooking system according to claim 5, wherein
the indication control unit performs control to indicate the dangerous area in the cooking space in a range in a case where the attribute of the user is a child, the range being wider than a range in a case where the attribute of the user is an adult.

7. The cooking system according to any preceding claim, further comprising
an action prediction unit (264) that predicts an action of the user, wherein
the indication control unit changes an indication method of the dangerous area in the cooking space on a basis of the state of the cooking space and the action of the user predicted by the action prediction unit.

8. The cooking system according to any preceding claim, further comprising
a secured area determination unit (262) that determines an area in which a next task is to be performed as a secured area in the cooking space on a basis of the cooking process, wherein
the indication control unit performs control to indicate the secured area determined by the secured area determination unit.

9. The cooking system according to claim 8, wherein
the indication control unit changes an indication method of the secured area in the cooking space in accordance with an attribute of the user.

10. The cooking system according to claim 8, wherein
the indication control unit changes an indication method of the secured area in the cooking space in accordance with each task content of the cooking process.

11. The cooking system according to claim 8, wherein
the secured area determination unit searches for an alternative area in which the next task is capable of being performed in a case where the secured area determination unit determines the area in which the next task is to be performed on a basis of the cooking process and where the user is currently performing a task in the determined area or a distance between the determined area and the dangerous area is smaller than a predetermined distance, and determines the alternative area searched for as the secured area.

12. The cooking system according to any preceding claim, further comprising
a cooking tool (291) having an indication function of indicating a state to the user by light, a sound, or a vibration, wherein
the indication control unit causes the cooking tool used in the current task to operate the indication function to enter a state indicating to the user that the cooking tool is to be used on a basis of the cooking process.

13. A method for controlling the cooking system according to any preceding claim, comprising:
detecting the state of the cooking space;
controlling (S18) driving of the cooking arm of the cooking system;
detecting (S13) the range of driving of the cooking arm on the basis of the cooking process as the dangerous area for the user in the cooking space on the basis of the cooking process and the state of the cooking space; and
performing control to indicate (S14) the detected dangerous area in the cooking space.

14. A computer program comprising instructions which, when the program is executed by a computer, cause the cooking system of any of claims 1 to 12 to carry out the method of claim 13.

## Patentansprüche

1. Kochsystem (31), umfassend:
eine Kochplatzzustands-Erkennungseinheit (250), die einen Zustand eines Kochplatzes erkennt;
eine Gefahrenbereichs-Erkennungseinheit (261), die einen Gefahrenbereich für einen Benutzer innerhalb des Kochplatzes basierend auf einem Kochprozesss und dem Zustand des Kochplatzes erkennt;
eine Anzeigesteuereinheit (255), die eine Steuerung durchführt, um den Gefahrenbereich anzuzeigen, der von der Gefahrenbereichs-Erkennungseinheit innerhalb des Kochplatzes erkannt wurde;
einen Kocharm (51) mit einer Kochfunktion gemäß dem Kochprozess; und
eine Armsteuereinheit (243), die den Antrieb des Kocharms steuert, wobei
die Gefahrenbereich-Erkennungseinheit (261) einen Verfahrbereich des Kocharms basierend auf dem Kochprozess als den Gefahrenbereich erkennt, wobei der Kocharm gesteuert wird, von der Armsteuereinheit angetrieben zu werden.

2. Kochsystem nach Anspruch 1, wobei
die Anzeigesteuereinheit ein Anzeigeverfahren des Gefahrenbereichs innerhalb des Kochplatzes gemäß einem Abstand zwischen dem Benutzer und dem Gefahrenbereich basierend auf dem Zustand des Kochplatzes ändert.

3. Kochsystem nach Anspruch 2, wobei
die Anzeigesteuereinheit eine Steuerung durchführt, um den Gefahrenbereich innerhalb des Kochplatzes anzuzeigen, wenn der Abstand zwischen dem Benutzer und dem Gefahrenbereich kleiner als ein vorbestimmter Abstand ist, basierend auf dem Zustand des Kochplatzes.

4. Kochsystem nach Anspruch 3, wobei
die Anzeigesteuereinheit den Gefahrenbereich innerhalb des Kochplatzes durch ein erstes Anzeigeverfahren anzeigt, wenn der Abstand zwischen dem Benutzer und dem Gefahrenbereich kleiner als ein erster Abstand und größer als ein zweiter Abstand, der kleiner ist als der erste Abstand, ist, basierend auf dem Zustand des Kochplatzes, und eine Steuerung durchführt, um den Gefahrenbereich innerhalb des Kochplatzes durch ein Anzeigeverfahren anzuzeigen, das für den Benutzer leichter zu erkennen ist als das erste Anzeigeverfahren, wenn der Abstand zwischen dem Benutzer und dem Gefahrenbereich kleiner als der zweite Abstand ist.

5. Kochsystem nach einem der vorhergehenden Ansprüche, wobei
die Anzeigesteuereinheit ein Anzeigeverfahren des Gefahrenbereichs innerhalb des Kochplatzes gemäß einem Attribut des Benutzers ändert.

6. Kochsystem nach Anspruch 5, wobei
die Anzeigesteuereinheit eine Steuerung durchführt, um den Gefahrenbereich innerhalb des Kochplatzes in einem Bereich anzuzeigen, wenn das Attribut des Benutzers ein Kind ist, wobei der Bereich größer ist als ein Bereich in einem Fall, in dem das Attribut des Benutzers ein Erwachsener ist.

7. Kochsystem nach einem der vorhergehenden 5 Ansprüche, ferner umfassend
eine Aktionsvorhersageeinheit (264), die eine Aktion des Benutzers vorhersagt, wobei
die Anzeigesteuereinheit ein Anzeigeverfahren des Gefahrenbereichs innerhalb des Kochplatzes basierend auf dem Zustand des Kochplatzes und der von der Aktionsvorhersageeinheit vorhergesagten Aktion des Benutzers ändert.

8. Kochsystem nach einem der vorhergehenden Ansprüche, ferner umfassend
eine Bestimmungseinheit (262) für einen gesicherten Bereich, die einen Bereich, in dem eine nächste Aufgabe auszuführen ist, als einen gesicherten Bereich innerhalb des Kochplatzes bestimmt, basierend auf dem Kochprozess, wobei
die Anzeigesteuereinheit eine Steuerung durchführt, um den gesicherten Bereich anzuzeigen, der durch die Bestimmungseinheit für einen gesicherten Bereich bestimmt wurde.

9. Kochsystem nach Anspruch 8, wobei
die Anzeigesteuereinheit ein Anzeigeverfahren des gesicherten Bereichs innerhalb des Kochplatzes gemäß einem Attribut des Benutzers ändert.

10. Kochsystem nach Anspruch 8, wobei
die Anzeigesteuereinheit ein Anzeigeverfahren des gesicherten Bereichs innerhalb des Kochplatzes gemäß einem jeweiligen Aufgabeninhalt des Kochprozesses ändert.

11. Kochsystem nach Anspruch 8, wobei
die Bestimmungseinheit für einen gesicherten Bereich nach einem alternativen Bereich sucht, in dem die nächste Aufgabe ausgeführt werden kann, in einem Fall, wo die Bestimmungseinheit für einen gesicherten Bereich den Bereich, in dem die nächste Aufgabe auszuführen ist, basierend auf dem Kochprozess bestimmt, und wo der Benutzer gerade eine Aufgabe in dem bestimmten Bereich durchführt oder ein Abstand zwischen dem bestimmten Bereich und dem Gefahrenbereich kleiner als ein vorbestimmter Abstand ist, und den alternativen Bereich, nach dem gesucht wurde, als den gesicherten Bereich bestimmt.

12. Kochsystem nach einem der vorhergehenden Ansprüche, ferner umfassend
ein Kochwerkzeug (291) mit einer Anzeigefunktion zum Anzeigen, für den Benutzer, eines Zustands durch Licht, einen Ton, oder eine Vibration, wobei
die Anzeigesteuereinheit bewirkt, dass das Kochwerkzeug, das in der aktuellen Aufgabe verwendet wird, die Anzeigefunktion betreibt, um in einen Zustand einzutreten, der dem Benutzer anzeigt, dass das Kochwerkzeug verwendet werden soll, basierend auf dem Kochprozess.

13. Verfahren zur Steuerung des Kochsystems nach einem der vorhergehenden Ansprüche, umfassend:
Erkennen des Zustands des Kochplatzes;
Steuern (S18) des Verfahrbereichs des Kocharms des Kochsystems;
Erkennen (S13) des Verfahrbereichs des Kocharms basierend auf dem Kochprozesss als Gefahrenbereich für den Benutzer innerhalb des Kochplatzes basierend auf dem Kochprozess und dem Zustand des Kochplatzes; und
Durchführen einer Steuerung zum Anzeigen (S14) des erkannten Gefahrenbereichs innerhalb des Kochplatzes.

14. Computerprogramm, das Anweisungen umfasst, die, wenn das Programm von einem Computer ausgeführt wird, bewirken, dass das Kochsystem nach einem der Ansprüche 1 bis 12 das Verfahren nach Anspruch 13 ausführt.

## Revendications

1. Système de cuisson (31) comprenant :
une unité de détection d'état d'espace de cuisson (250) qui détecte un état d'un espace de cuisson ;
une unité de détection de zone dangereuse (261) qui détecte une zone dangereuse pour un utilisateur dans l'espace de cuisson sur la base d'un processus de cuisson et de l'état de l'espace de cuisson ;
une unité de contrôle d'indication (255) qui effectue un contrôle pour indiquer la zone dangereuse détectée par l'unité de détection de zone dangereuse dans l'espace de cuisson ;
un bras de cuisson (51) ayant une fonction de cuisson en fonction du processus de cuisson ; et
une unité de commande de bras (243) qui commande l'entraînement du bras de cuisson, où :
l'unité de détection de zone dangereuse (261) détecte une plage d'entraînement du bras de cuisson sur la base du processus de cuisson comme étant la zone dangereuse, le bras de cuisson étant commandé pour être entraîné par l'unité de commande de bras.

2. Système de cuisson selon la revendication 1, dans lequel :
l'unité de contrôle d'indication change un procédé d'indication de la zone dangereuse dans l'espace de cuisson en fonction d'une distance entre l'utilisateur et la zone dangereuse sur la base de l'état de l'espace de cuisson.

3. Système de cuisson selon la revendication 2, dans lequel :
l'unité de contrôle d'indication effectue un contrôle pour indiquer la zone dangereuse dans l'espace de cuisson lorsque la distance entre l'utilisateur et la zone dangereuse est inférieure à une distance prédéterminée sur la base de l'état de l'espace de cuisson.

4. Système de cuisson selon la revendication 3, dans lequel :
l'unité de contrôle d'indication indique la zone dangereuse dans l'espace de cuisson par un premier procédé d'indication lorsque la distance entre l'utilisateur et la zone dangereuse est inférieure à une première distance et est supérieure à une seconde distance inférieure à la première distance sur la base de l'état de l'espace de cuisson, et
effectue un contrôle pour indiquer la zone dangereuse dans l'espace de cuisson par un procédé d'indication plus facile à reconnaître par l'utilisateur que le premier procédé d'indication lorsque la distance entre l'utilisateur et la zone dangereuse est inférieure à la seconde distance.

5. Système de cuisson selon l'une quelconque des revendications précédentes, dans lequel :
l'unité de contrôle d'indication change un procédé d'indication de la zone dangereuse dans l'espace de cuisson en fonction d'un attribut de l'utilisateur.

6. Système de cuisson selon la revendication 5, dans lequel :
l'unité de contrôle d'indication effectue un contrôle pour indiquer la zone dangereuse dans l'espace de cuisson dans une certaine plage dans un cas où l'attribut de l'utilisateur est un enfant, la plage étant plus grande qu'une plage dans un cas où l'attribut de l'utilisateur est un adulte.

7. Système de cuisson selon l'une quelconque des revendications précédentes, comprenant en outre :
une unité de prédiction d'action (264) qui prédit une action de l'utilisateur, où :
l'unité de contrôle d'indication change un procédé d'indication de la zone dangereuse dans l'espace de cuisson sur la base de l'état de l'espace de cuisson et de l'action de l'utilisateur prédite par l'unité de prédiction d'action.

8. Système de cuisson selon l'une quelconque des revendications précédentes, comprenant en outre :
une unité de détermination de zone sécurisée (262) qui détermine une zone, dans laquelle une tâche suivante doit être effectuée, en tant que zone sécurisée dans l'espace de cuisson sur la base du processus de cuisson, où :
l'unité de contrôle d'indication effectue un contrôle pour indiquer la zone sécurisée déterminée par l'unité de détermination de zone sécurisée.

9. Système de cuisson selon la revendication 8, dans lequel :
l'unité de contrôle d'indication change un procédé d'indication de la zone sécurisée dans l'espace de cuisson en fonction d'un attribut de l'utilisateur.

10. Système de cuisson selon la revendication 8, dans lequel :
l'unité de contrôle d'indication modifie un procédé d'indication de la zone sécurisée dans l'espace de cuisson en fonction de chaque contenu de tâche du processus de cuisson.

11. Système de cuisson selon la revendication 8, dans lequel :
l'unité de détermination de zone sécurisée recherche une zone alternative dans laquelle la tâche suivante peut être exécutée dans un cas où l'unité de détermination de zone sécurisée détermine la zone dans laquelle la tâche suivante doit être exécutée sur la base du processus de cuisson, et où l'utilisateur exécute actuellement une tâche dans la zone déterminée, ou une distance entre la zone déterminée et la zone dangereuse est inférieure à une distance prédéterminée, et détermine la zone alternative recherchée comme étant la zone sécurisée.

12. Système de cuisson selon l'une quelconque des revendications précédentes, comprenant en outre :
un outil de cuisson (291) ayant une fonction d'indication pour indiquer un état à l'utilisateur au moyen d'une lumière, d'un son ou d'une vibration, où :
l'unité de contrôle d'indication fait en sorte que l'outil de cuisson utilisé dans la tâche courante fasse fonctionner la fonction d'indication pour entrer dans un état indiquant à l'utilisateur que l'outil de cuisson doit être utilisé sur une base du processus de cuisson.

13. Procédé de contrôle du système de cuisson selon l'une quelconque des revendications précédentes, le procédé comprenant les étapes suivantes :
détecter l'état de l'espace de cuisson ;
contrôler (S18) l'entraînement du bras de cuisson du système de cuisson ;
détecter (S13) la plage d'entraînement du bras de cuisson sur la base du processus de cuisson en tant que zone dangereuse pour l'utilisateur dans l'espace de cuisson sur la base du processus de cuisson et de l'état de l'espace de cuisson ; et
effectuer un contrôle pour indiquer (S14) la zone dangereuse détectée dans l'espace de cuisson.

14. Programme informatique comprenant des instructions qui, lorsque le programme est exécuté par un ordinateur, amènent le système de cuisson de l'une quelconque des revendications 1 à 12 à mettre en œuvre le procédé de la revendication 13.
